(19)

**Europäisches Patentamt**

**European Patent Office**

**Office européen des brevets**

(11) **EP 4 535 683 A1**

(12) **EUROPEAN PATENT APPLICATION**
published in accordance with Art. 153(4) EPC

(43) Date of publication:
**09.04.2025 Bulletin 2025/15**

(21) Application number: **23835756.0**

(22) Date of filing: **30.06.2023**

(51) International Patent Classification (IPC):
**H04B 7/06** (2006.01)  **H04B 7/0408** (2017.01)
**H04B 17/373** (2015.01)  **H04W 8/24** (2009.01)
**H04W 72/23** (2023.01)  **H04L 5/00** (2006.01)

(52) Cooperative Patent Classification (CPC):
**H04B 7/0408; H04B 7/06; H04B 17/373;**
**H04L 5/00; H04W 8/24; H04W 72/04; H04W 72/23**

(86) International application number:
**PCT/KR2023/009191**

(87) International publication number:
**WO 2024/010290 (11.01.2024 Gazette 2024/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.07.2022 KR 20220081732**

(71) Applicant: **Samsung Electronics Co., Ltd.**
**Suwon-si, Gyeonggi-do 16677 (KR)**

(72) Inventors:
• **LIM, Yeongeun**
**Suwon-si, Gyeonggi-do 16677 (KR)**
• **ABEBE, Ameha Tsegaye**
**Suwon-si, Gyeonggi-do 16677 (KR)**
• **JANG, Youngrok**
**Suwon-si, Gyeonggi-do 16677 (KR)**
• **YI, Junyung**
**Suwon-si, Gyeonggi-do 16677 (KR)**
• **JI, Hyoungju**
**Suwon-si, Gyeonggi-do 16677 (KR)**

(74) Representative: **Nederlandsch Octrooibureau**
**P.O. Box 29720**
**2502 LS The Hague (NL)**

(54) **METHOD AND APPARATUS FOR MEASURING AND REPORTING CSI FOR BEAM OPERATION IN WIRELESS COMMUNICATION SYSTEM**

(57)     The present disclosure relates to a 5G or 6G communication systems for supporting a higher data transmission rate. According to various embodiments of the present disclosure, a wireless communication system may comprise a user equipment comprising a transceiving unit and a control unit configured to: transmit, to a base station, UE capability information regarding a predictable beam of the user equipment; receive channel state information (CSI) configuration information from the base station; receive, from the base station, a reference signal transmitted on the basis of a first transmission beam; acquire CSI related to a second transmission beam predicted on the basis of measurement of the reference signal; and transmit, to the base station, the CSI related to the second transmission beam.

FIG. 18

**Description**

**[Technical Field]**

The present disclosure relates to a method and apparatus for measuring and reporting CSI for beam operation in a wireless communication system.

**[Background Art]**

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mm Wave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles on the basis of information regarding positions and states of vehicles transmitted by the vehicles and for enhancing user convenience, NR-U (New Radio Unlicensed) aimed at system operations conforming to various regulation-related requirements in unlicensed bands, NR user equipment (UE) Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services on the basis of UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next generation distributed computing technology for implementing services at levels of complexity exceeding the limit of UE operation capability by utilizing ultra-high-performance communication and computing resources.

**[Disclosure of Invention]**

**[Technical Problem]**

The present disclosure relates to a method and apparatus for measuring and reporting channel state information (CSI) for beam operation in a wireless communication system.

The present disclosure provides a method for receiving a CSI reference signal (CSI-RS) of a user equipment in a wireless communication system and a method for reporting a measured CSI.

According to the present disclosure, even if the amount of CSI-RS for beam operation in a wireless communication system is reduced, beam operation may be performed equivalent to a system in which the existing CSI-RS is not reduced.

**[Solution to Problem]**

A user equipment (UE) of a wireless communication system according to an embodiment of the present disclosure for achieving the above-described technical problem may comprise a transceiving unit; and a control unit configured to: transmit, to a base station, UE capability information regarding a predictable beam of the user equipment; receive channel state information (CSI) configuration information from the base station; receive, from the base station, a reference signal transmitted on the basis of a first transmission beam; acquire CSI related to a second transmission beam predicted on the basis of measurement of the reference signal; and transmit, to the base station, the CSI related to the second transmission beam.

In addition, a base station of a wireless communication system according to an embodiment of the present disclosure may comprise a transceiving unit; and a control unit configured to: receive, from a user equipment, UE capability information regarding a predictable beam of the user equipment; transmit channel state information (CSI) configuration information to the user equipment; transmit, to a user equipment, a reference signal on the basis of a first transmission beam; and receive, from the user equipment, the CSI related to the second transmission beam that is predicted on the basis of a measurement of the reference signal.

In addition, a method performed by a user equipment of a wireless communication system according to an embodiment of the present disclosure may comprise: transmitting, to a base station, UE capability information regarding a predictable beam of the user equipment; receiving, from the base station, channel state information (CSI) configuration information; receiving, from the base station, a reference signal transmitted on the basis of a first transmission beam; acquiring CSI related to a second transmission beam predicted on the basis of a measurement of the reference signal; and transmitting, to the base station, the CSI related to the second transmission beam.

In addition, a method performed by a base station of a wireless communication system according to an embodiment of the present disclosure may comprise: receiving, from a user equipment, UE capability information regarding a predictable beam of the user equipment; transmitting, to the user equipment, channel state information (CSI) configuration information; transmitting, to the user equipment, a reference signal on the basis of a first transmitted beam; and receiving, from the user equipment, the CSI related to a second transmitted beam that is predicted on the basis of a measurement of the reference signal.

**[Advantageous Effects of Invention]**

According to the present disclosure, it is possible to reduce the amount of CSI-RS required for a beamforming scheme providing high beamforming gain in a wireless communication system and maintain high quality beam reception sensitivity, thereby increasing data rates as well as providing highly reliable services.

**[Brief Description of Drawings]**

FIG. 1 is a diagram illustrating the basic structure of the time-frequency domain, which is a radio resource domain where data or control channels are transmitted in a 5G wireless communication system.
FIG. 2 is a diagram illustrating an example of a slot structure used in a 5G wireless communication system.
FIG. 3 is a diagram illustrating an example of configurations for a bandwidth part (BWP) of a 5G wireless communication system.
FIG. 4 is a diagram illustrating an example of a control resource set (CORESET) through which a downlink control channel is transmitted in a 5G wireless communication system.

FIG. 5 is a diagram illustrating the structure of a downlink control channel in a 5G wireless communication system.

FIG. 6 is a diagram illustrating an example of a method for configuring uplink and downlink resources in a 5G wireless communication system.

FIG. 7 is a diagram illustrating an example of base station beam allocation according to TCI state configurations in a wireless communication system according to an embodiment of the present disclosure.

FIG. 8 is a diagram illustrating an example of a TCI state allocation method for PDCCH in a wireless communication system according to an embodiment of the present disclosure.

FIG. 9 is a diagram illustrating a TCI indication MAC CE signaling structure for the PDCCH DMRS.

FIG. 10 is a diagram illustrating an example of beam configurations of a control resource set (CORESET) and a search space according to the above description.

FIG. 11 is a diagram illustrating a method for a user equipment to select a set of control resources that can be received in consideration of priority when receiving a downlink control channel in a wireless communication system according to an embodiment of the present disclosure.

FIG. 12 is a diagram illustrating an example of frequency axis resource allocation of a physical downlink shared channel (PDSCH) in a wireless communication system according to an embodiment of the present disclosure.

FIG. 13 illustrates the process for beam configuration and activation of PDSCH.

FIG. 14 illustrates an example of PUSCH repetition type B according to an embodiment of the present disclosure.

FIG. 15 is a diagram illustrating an example of aperiodic channel state reporting according to an embodiment of the present disclosure.

FIG. 16 is a diagram illustrating an example of aperiodic channel state reporting according to an embodiment of the present disclosure.

FIG. 17 illustrates an example of a configuration method of a beam set for beam measurement and reporting for beam estimation according to an embodiment of the present disclosure.

FIG. 18 is a diagram illustrating an example in which a user equipment receives a codebook for a candidate beam in a predicted beam direction compared to the measured beam direction.

FIG. 19 is a diagram illustrating an example of UE capability for a predictable transmission beam of a base station according to an embodiment of the present disclosure.

FIG. 20 is a diagram illustrating another example of UE capability for a predictable transmission beam of a base station according to an embodiment of the present disclosure.

FIG. 21 is a diagram illustrating an example of a method for reporting the index of a predicted beam on the basis of an existing CRI or SSB-Index according to an embodiment of the present disclosure.

FIG. 22 is a block diagram illustrating the structure of a user equipment according to an embodiment of the present disclosure.

FIG. 23 is a block diagram illustrating the structure of a base station according to an embodiment of the present disclosure.

**[Mode for the Invention]**

Hereinafter, embodiments of the present disclosure will be described in detail with reference to the attached drawings.

In describing the embodiments, description of technical content that is well known in the technical field to which the present disclosure belongs and that is not directly related to the present disclosure will be omitted. This is to convey the gist of the present disclosure more clearly without obscuring it by omitting unnecessary explanation.

For the same reason, some components in the attached drawings are exaggerated, omitted, or schematically shown. In addition, the size of each component does not entirely reflect its actual size. In each drawing, identical or corresponding components are assigned the same reference numbers.

The advantages and features of the present disclosure and methods for achieving them will become clear by reference to the embodiments described in detail below along with the accompanying drawings. However, the present disclosure is not limited to the embodiments disclosed below, but may be implemented in a variety of different forms and the present embodiments are merely provided to ensure that the disclosure of the present disclosure is complete and to fully inform the scope of the disclosure to persons of ordinary knowledge in the technical field to which the present disclosure pertains, and the present disclosure is only defined by the scope of the claims. Throughout the specification, the same reference numerals refer to the same components. In addition, when describing the present disclosure, if it is determined that a detailed description of a related function or configuration may unnecessarily obscure the gist of the present disclosure, the detailed description will be omitted. In addition, the terms described below are terms defined in consideration of the functions in the present disclosure and may vary depending on the intention or custom of the user or operator. Therefore, the definition should be made on the basis of the contents throughout this specification.

Hereinafter, the base station is the entity that performs resource allocation for the user equipment and may be at least one of gNode B, eNode B, Node B, BS (Base Station), wireless access unit, base station controller, or node on the network. A user equipment may include a UE (User Equipment), MS (Mobile Station), a cellular phone, a smartphone, a computer, or a multimedia system capable of performing communication functions. In this disclosure, downlink (DL) refers to a wireless transmission path of a signal transmitted from a base station to a user equipment, and uplink (UL) refers to a wireless transmission path of a signal transmitted from a user equipment to a base station. In addition, although the LTE, LTE-A or 5G system may be described below as an example, embodiments of the present disclosure may also be applied to other communication systems with similar technical background or channel type. For example, this may include the 5th generation mobile communication technology (5G, new radio, NR) developed after LTE-A, and the term 5G hereinafter may also include the existing LTE, LTE-A, and other similar services. In addition, this disclosure may be applied to other communication systems through some modifications without significantly departing from the scope of the present disclosure at the discretion of a person with skilled technical knowledge.

In this case, it will be understood that each block of the processing flowchart illustrations and combinations of the flowchart illustrations may be performed by computer program instructions. These computer program instructions may be mounted on a processor of a general purpose computer, a special purpose computer, or other programmable data processing equipment, such that the instructions, when executed by the processor of the computer or other programmable data processing equipment, create means for performing the functions described in the flowchart block(s). These computer program instructions may be stored in computer-usable or computer-readable memory that may be directed to a computer or other programmable data processing equipment to implement the functions in a specific manner, so that the instructions stored in the computer-usable or computer-readable memory may produce a manufactured item comprising instructional means for performing the functions described in the flowchart block(s). The computer program instructions may also be mounted on a computer or other programmable data processing equipment and a series of operational steps are performed on the computer or other programmable data processing equipment to create a computer-executable process, such that the instructions performing the computer or other programmable data processing equipment may also provide steps for performing the functions described in the flowchart block(s).

In addition, each block may represent a module, a segment, or a portion of code comprising one or more executable instructions for performing a specified logical function(s). It should also be noted that in some alternative embodiments, the functions recited in the blocks may occur out of sequence. For example, two blocks shown one after the other may in fact be performed substantially simultaneously, or the blocks may be performed in reverse order according to the functions they sometimes perform.

In this case, the term '~unit' used in the present embodiment refers to software or a hardware component such as an FPGA (Field Programmable Gate Array) or ASIC (Application Specific Integrated Circuit), which may perform any of the roles. However, '~unit' is not software or hardware specific. It may be configured to reside on an addressable storage medium, or it may be configured to execute one or more processors. Therefore, in one example, '~unit' includes components such as software components, object-oriented software components, class components, and task components, processes, functions, properties, procedures, subroutines, segments of program code, drivers, firmware, microcode, circuits, data, databases, data structures, tables, arrays, and variables. The functionality provided within the components and '~units' may be combined into fewer components and '~units', or further separated into additional components and '~units'. Furthermore, the components and '~units' may be implemented to play one or more CPUs within the device or the security multimedia card.

Wireless communication systems have evolved from providing initially voice-oriented services to broadband wireless communication systems that provide high-speed, high-quality packet data services, for example, using communication standards such as 3GPP's High Speed Packet Access (HSPA), Long Term Evolution (LTE) or Evolved Universal Terrestrial Radio Access (E-UTRA), LTE-Advanced (LTE-A), LTE-Pro, 3GPP2's High Rate Packet Data (HRPD), Ultra Mobile Broadband (UMB), and IEEE's 802.16e.

As a representative example of the above broadband wireless communication system, the LTE system adopts the OFDM (Orthogonal Frequency Division Multiplexing) method for the downlink (DL) and the SC-FDMA (Single Carrier Frequency Division Multiple Access) method for the uplink (UL). Uplink refers to a wireless link in which a user equipment (UE (User Equipment) or MS (Mobile Station)) transmits data or control signals to a base station (eNode B, or base station (BS)), and downlink refers to a wireless link in which a base station transmits data or control signals to a user equipment. In the above multiple access method, the data or control information of each user may be distinguished by allocating and operating the time-frequency resources to carry data or control information for each user so that they do not overlap, i.e., orthogonality is established.

As a future communication system after LTE, i.e., 5G communication system, the 5G communication system should be able to freely reflect various requirements of users and service providers, so services that satisfy various requirements simultaneously should be supported. The services considered for 5G communication systems include enhanced Mobile Broadband (eMBB), massive Machine Type Communication (mMTC), and Ultra Reliability Low Latency Communication (URLLC).

eMBB aims to provide higher data rates than those supported by conventional LTE, LTE-A, or LTE-Pro. For example, in a 5G communication system, eMBB should be able to provide a peak data rate of 20 Gbps in the downlink and 10 Gbps in the uplink from the perspective of one base station. In addition, 5G communication systems must provide peak data rates while also providing increased user perceived data rates. To meet these requirements, various transmission and reception technologies will need to be improved, including more advanced multi-antenna (Multi Input Multi Output, MIMO) transmission technologies. **In** addition, while LTE uses up to 20 MHz transmission bandwidth in the 2 GHz band to transmit signals, 5G communication systems will use wider frequency bandwidths than 20 MHz in the 3-6 GHz or 6 GHz or higher frequency bands to meet the data rates required by 5G communication systems.

At the same time, mMTC is being considered to support application services such as the Internet of Things (IoT) in 5G communication systems. **In** order to efficiently deliver the Internet of Things, mMTC needs to support the access of a large number of user equipments within a cell, improve coverage of user equipments, improve battery life, and reduce the cost of user equipments. Since the Internet of Things will be attached to multiple sensors and various devices to provide communication capabilities, it must be able to support a large number of user equipments (e.g., 1,000,000 user equipments/km2) within a cell. Additionally, due to the nature of the service, mMTC-enabled user equipments are likely to be located in shadowed areas that are not covered by cells, such as the basement of a building, and may require greater coverage than other services provided by 5G communication systems. The mMTC-enabled devices will need to be low-cost devices and may require very long battery life times, such as 10 to 15 years, as it is difficult to replace the device's battery frequently.

Lastly, URLLC is a cellular-based wireless communication service used for specific mission-critical purposes. Examples include services used for remote control of robots or machinery, industrial automation, unmanned aerial vehicles, remote health care, emergency alerts, etc. As such, the communication provided by URLLC must be extremely low latency and highly reliable. For example, services that support URLLC must satisfy an air interface latency of less than 0.5 milliseconds, while simultaneously having a packet error rate requirement of 75 or less. Therefore, for services supporting URLLC, the 5G system may need to provide a smaller Transmit Time Interval (TTI) than other services, and at the same time, the design may require a large resource allocation in the frequency band to ensure the reliability of the communication link.

The three services of 5G, namely eMBB, URLLC, and mMTC, may be multiplexed and transmitted in one system. In this case, different transmission and reception techniques and transmission and reception parameters may be used among the services to satisfy the different requirements of each service. Of course, 5G is not limited to the above three services.

[NR time-frequency resource]

In the following, the frame structure of the 5G system will be described in more detail with reference to the drawings.

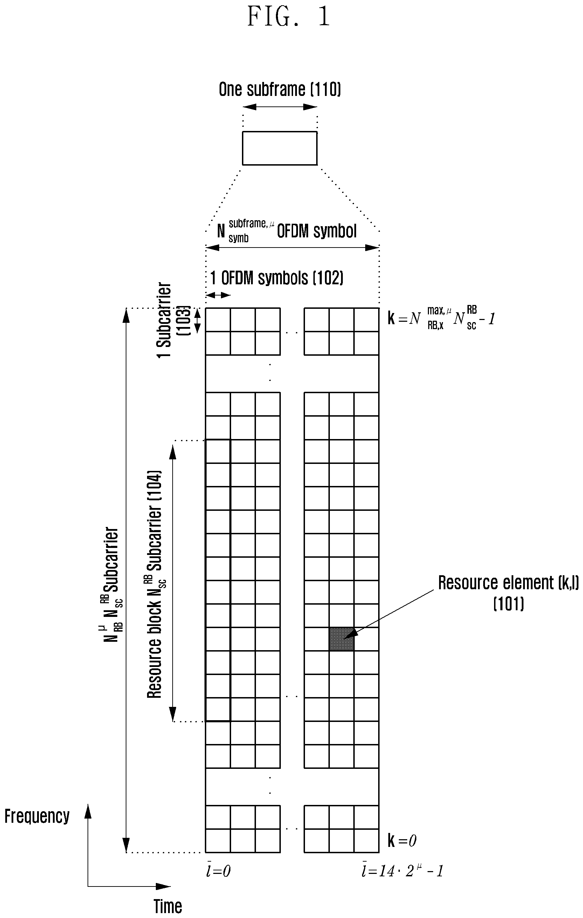

FIG. 1 is a diagram illustrating the basic structure of the time-frequency domain, which is a radio resource domain where data or control channels are transmitted in a 5G wireless communication system.

With reference to FIG. 1, the horizontal axis represents the time domain, and the vertical axis represents the frequency domain. The basic unit of resources in the time and frequency domains is a Resource Element (RE) 101, which is defined as 1 OFDM (Orthogonal Frequency Division Multiplexing) symbol 102 on the time axis and 1 subcarrier 103 on the frequency axis. In the frequency domain, $N_{sc}^{RB}$ (for example, 12) consecutive REs may constitute one Resource Block (RB) 104.

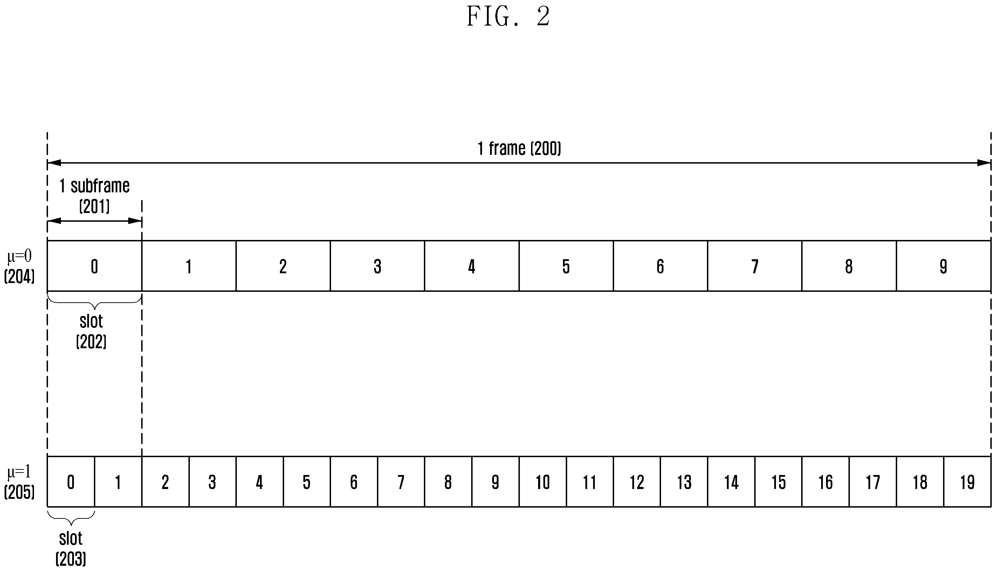

FIG. 2 is a diagram illustrating an example of a slot structure used in a 5G wireless communication system.

With reference to FIG. 2, an example of a structure of a frame 200, a subframe 201, and a slot 202 is illustrated. 1 frame 200 may be defined as 10ms. 1 subframe 201 may be defined as 1 ms, and therefore 1 frame 200 may consist of a total of 10 subframes 201. 1 slot 202 and 203 may be defined by 14 OFDM symbols (that is, the number of symbols per slot $(N_{symb}^{slot}) = 14$). 1 subframe 201 may consist of one or a plurality of slots 202 and 203, and the number of slots 202 and 203 per 1 subframe 201 may vary depending on the configuration value μ 204 and 205 for the subcarrier spacing. In an example of FIG. 2, a case where μ=0 204 and a case where μ=1 205 are illustrated as the subcarrier spacing configuration value. When μ=0 204, 1 subframe 201 may consist of one slot 202, and when μ=1 205, 1 subframe 201 may consist of two slots 203. That is, the number of slots per subframe $(N_{slot}^{subframe,\mu})$

may vary depending on the configuration value $\mu$ for the subcarrier spacing, and the number of slots per one frame ( $N_{slot}^{frame,\mu}$ ) may vary accordingly.

$$N_{slot}^{subframe,\mu}$$

and $N_{slot}^{frame,\mu}$ according to each subcarrier spacing configuration $\mu$ may be defined as [Table 1] below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth Part (BWP)]

Next, Bandwidth Part (BWP) configurations in the 5G communication system will be described in detail with reference to the drawings.

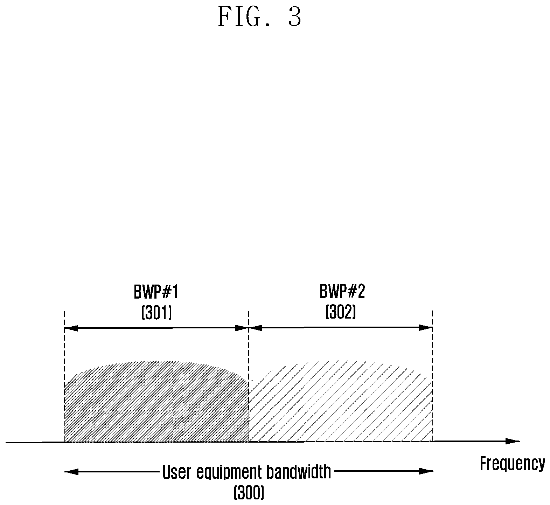

FIG. 3 is a diagram illustrating an example of configurations for a bandwidth part (BWP) in a 5G wireless communication system.

With reference to FIG. 3, an example is shown where the UE bandwidth 300 is configured to two bandwidth parts, that is, bandwidth part #1 (BWP#1) 301 and bandwidth part #2 (BWP#2) 302. The base station may configure one or more bandwidth parts to the user equipment and may configure the following information for each bandwidth part.

【Table 2】

```
BWP ::=                    SEQUENCE {
bwp-Id                     BWP-Id,
locationAndBandwidth       INTEGER (1..65536),
subcarrierSpacing          ENUMERATED {n0, n1, n2, n3, n4, n5},
cyclicPrefix               ENUMERATED { extended }
}
```

Of course, the configurations for the bandwidth part are not limited to the above examples, and various parameters related to the bandwidth part may be configured to the user equipment in addition to the above configuration information. The configuration information may be transmitted by the base station to the user equipment through higher layer signaling, e.g., Radio Resource Control (RRC) signaling. At least one bandwidth part of the configured one or more bandwidth parts may be activated. The activation status for a configured bandwidth part may be semi-statically transmitted from the base station to the user equipment through RRC signaling or dynamically transmitted through Downlink Control Information (DCI).

According to an embodiment, the user equipment prior to the Radio Resource Control (RRC) connection may receive the Initial Bandwidth Part (Initial BWP) for the initial connection from the base station through the Master Information Block (MIB). More specifically, during the initial connection phase, the user equipment may receive configuration information for the Control Resource Set (CORESET) and the search space in which a PDCCH may be transmitted to receive the system information required for the initial connection (which may correspond to Remaining System Information (RMSI) or System Information Block 1 (SIB1)) through the MIB. The control resource set and search space configured by the MIB may be regarded as Identity (ID) 0, respectively. The base station may notify the user equipment of configuration information such as frequency allocation information, time allocation information, and numerology for control resource set #0 through the MIB. In addition, the base station may notify the user equipment of the monitoring period and occasion for the control resource set #0 through the MIB, that is, the configuration information for the search space #0. The user equipment may regard the frequency domain configured in the control resource set #0 obtained from the MIB as the initial bandwidth part for the initial connection. In this case, the identity (ID) of the initial bandwidth part may be regarded as 0.

The configuration for the bandwidth part supported by the 5G wireless communication system may be used for various purposes.

According to an embodiment, the configuration for the bandwidth part may be used when the bandwidth supported by the user equipment is smaller than the system bandwidth. For example, the base station may configure the frequency location of the bandwidth part (configuration information 2) to the user equipment, allowing the user equipment to transmit and receive data at a specific frequency location within the system bandwidth.

In addition, according to an embodiment, the base station may configure a plurality of bandwidth parts to the user equipment for the purpose of supporting different numerologies. For example, to support both data transmission and reception using a subcarrier spacing of 15kHz and a subcarrier spacing of 30kHz for a user equipment, the base station may configure the two bandwidth parts to the subcarrier spacing of 15kHz and 30kHz, respectively. Different bandwidth parts may be frequency division multiplexed, and when the base station wants to transmit and receive data at a specific subcarrier interval, the bandwidth part configured at the corresponding subcarrier interval may be activated.

In addition, according to an embodiment, for the purpose of reducing power consumption of the user equipment, the base station may configure bandwidth parts with bandwidths of different sizes to the user equipment. For example, if the user equipment supports a very large bandwidth, for example, 100 MHz, and always transmits and receives data through that bandwidth, very large power consumption may occur. In particular, monitoring unnecessary downlink control channels with a large bandwidth of 100 MHz in a situation where there is no traffic may be very inefficient in terms of power consumption. For the purpose of reducing the power consumption of the user equipment, the base station may configure a relatively small bandwidth part, for example, a bandwidth part of 20 MHz, to the user equipment. In a situation where there is no traffic, the user equipment may perform monitoring operations in the 20 MHz bandwidth part, and when data is generated, it may transmit and receive data in the 100 MHz bandwidth part according to the instructions of the base station.

In the method of configuring the bandwidth part, user equipments before RRC connection may receive configuration information regarding the Initial Bandwidth Part through Master Information Block (MIB) in the initial connection stage. To be more specific, the user equipment may have a Control Resource Set (CORESET) be configured for the downlink control channel through which Downlink Control Information (DCI) scheduling System Information Block (SIB) may be transmitted from the MIB of Physical Broadcast Channel (PBCH). The bandwidth of the Control Resource Set configured as MIB may be regarded as the initial bandwidth part, and through the configured initial bandwidth part, the user equipment may receive Physical Downlink Shared Channel (PDSCH) on which the SIB is transmitted. In addition to receiving SIB, the initial bandwidth part may also be used for Other System Information (OSI), Paging, and Random Access.

[Bandwidth part (BWP) change]

If one or more bandwidth parts are configured, the base station may instruct the user equipment to change the bandwidth part using the bandwidth part indicator field in the DCI. For example, in FIG. 3, if the currently activated bandwidth part of the user equipment is bandwidth part #1 301, the base station may instruct the user equipment to use the bandwidth part indicator in the DCI to indicate bandwidth part #2 302, and the user equipment may perform a bandwidth part switch to bandwidth part #2 302 as indicated by the bandwidth part indicator in the received DCI.

As described above, since the DCI based bandwidth part switch may be directed by the DCI scheduling the PDSCH or PUSCH, the user equipment shall be able to receive or transmit the PDSCH or PUSCH scheduled by that DCI in the switched bandwidth part without any difficulty when it receives the bandwidth part switch request. To this end, the standard specifies requirements for the required time delay ($T_{BWP}$) for a bandwidth part switch, which may be defined, for example, as follows.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | [1] | [3] |
| 1 | 0.5 | [2] | [5] |
| 2 | 0.25 | [3] | [9] |
| 3 | 0.125 | [6] | [17] |
| Note 1: Depends on UE capability. | | | |
| Note 2: If the BWP switch involves changing of SCS, the BWP switch delay is determined by the larger one between the SCS before BWP switch and the SCS after BWP switch. | | | |

Requirements for bandwidth part switch delay time may support type 1 or type 2 depending on the UE capability. The user equipment may report the supportable bandwidth part delay time type to the base station.

According to the requirements for bandwidth part switch time delay described above, when the user equipment receives a DCI including a bandwidth part change indicator in slot n, the user equipment may complete the change to the new bandwidth part indicated by the bandwidth part change indicator at a time not later than slot n+ $T_{BWP}$, and may perform transmission and reception on the data channel scheduled by the DCI in the new bandwidth part. When the base station wants to schedule a data channel with a new bandwidth part, the base station may determine the time domain resource allocation for the data channel by considering the bandwidth part change delay time ($T_{BWP}$) of the user equipment. That is, when the base station schedules a data channel with a new bandwidth part, the base station may schedule the data channel after the bandwidth part change delay time in determining the time domain resource allocation for the data channel. Accordingly, the user equipment may not expect a DCI indicating a bandwidth part change to indicate a slot offset (K0 or K2) value that is less than the bandwidth part change delay time ($T_{BWP}$).

If the user equipment has received a DCI (e.g., DCI format 1_1 or 0_1) that indicates a bandwidth part change, the user equipment may not perform any transmissions or receptions during the time interval from the third symbol of the slot in which it received the PDCCH including that DCI to the beginning of the slot indicated by the slot offset (K0 or K2) value indicated by the time domain resource allocation indicator field within that DCI. For example, if a user equipment receives a DCI instructing a bandwidth part change in slot n, and the slot offset value indicated by that DCI is K, the user equipment may not perform any transmissions or receptions from the third symbol of slot n until the symbol before slot n+K (i.e., the last symbol of slot n+K-1).

[SS/PBCH block]

Next, the SS (Synchronization Signal)/PBCH block in the 5G wireless communication system will be described.

SS/PBCH block may refer to a physical layer channel block consisting of primary SS (PSS), secondary SS (SSS), and PBCH. Specifically, it may be as follows.

- PSS: It is a signal that serves as a standard for downlink time/frequency synchronization and provides some information about the cell ID.
- SSS: It is the standard for downlink time/frequency synchronization and provides the remaining cell ID information not provided by PSS. Additionally, it can serve as a reference signal for demodulation of PBCH.
- PBCH: It provides essential system information necessary for transmitting and receiving data channels and control channels of the user equipment. Essential system information may include search space-related control information indicating radio resource mapping information of the control channel, scheduling control information for a separate data channel transmitting system information, etc.
- SS/PBCH block: SS/PBCH block consists of a combination of PSS, SSS, and PBCH. One or more SS/PBCH blocks may be transmitted within 5ms, and each transmitted SS/PBCH block may be distinguished by an index.

The user equipment may detect PSS and SSS in the initial access stage and decode the PBCH. The MIB may be obtained from the PBCH, and a control resource set (CORE SET) #0 (which may correspond to a control resource set with a control resource set index of 0) may be configured from this. The user equipment may perform monitoring on control resource set #0 assuming that the selected SS/PBCH block and the Demodulation Reference Signal (DMRS) transmitted in control resource set #0 are in Quasi Co Location (QCL). The user equipment may receive system information through downlink control information transmitted from control resource set #0. The user equipment may obtain Random Access Channel (RACH) related configuration information necessary for initial access from the received system information. The user equipment may transmit Physical RACH (PRACH) to the base station in consideration of the SS/PBCH index selected, and the base station receiving the PRACH may obtain information about the SS/PBCH block index selected by the user equipment. The base station may know which block the user equipment has selected among each SS/PBCH block and monitor the control resource set #0 related to it.

[PDCCH: DCI- related]

Next, Downlink Control Information (DCI) in the 5G wireless communication system will be described in detail.

In a 5G system, scheduling information for uplink data (or Physical Uplink Shared Channel (PUSCH)) or downlink data (or Physical Downlink Shared Channel (PDSCH)) may be transmitted from the base station to the user equipment through DCI. The user equipment may monitor a fallback DCI format and a non-fallback DCI format for PUSCH or PDSCH. The fallback DCI format may consist of fixed fields that are predetermined between the base station and the user equipment, while the non-fallback DCI format may include configurable fields.

DCI may be transmitted through the Physical Downlink Control Channel (PDCCH) after channel coding and modulation. A Cyclic Redundancy Check (CRC) is attached to the DCI message payload and the CRC may be scrambled with a Radio Network Temporary Identifier (RNTI) corresponding to the identity of the user equipment. Different RNTIs may be used depending on the purpose of the DCI message, e.g., for UE-specific data transmission, power control commands or random access responses. That is, the RNTI is not transmitted explicitly but is included in the CRC calculation. When the user equipment receives a DCI message transmitted on the PDCCH, it checks the CRC using the assigned RNTI and if the CRC check result is correct, the user equipment knows that the message has been transmitted to the user equipment.

For example, the DCI that schedules PDSCHs for System Information (SI) may be scrambled with SI-RNTI. The DCI that schedules PDSCHs for Random Access Response (RAR) messages may be scrambled with RA-RNTI. The DCI that schedules PDSCHs for paging messages may be scrambled with P-RNTI. The DCI that notifies the Slot Format Indicator (SFI) may be scrambled with the SFI-RNTI. The DCI that notifies the Transmit Power Control (TPC) may be scrambled with the TPC-RNTI. The DCIs that schedule UE-specific PDSCHs or PUSCHs may be scrambled with Cell RNTI (C-RNTI), Modulation Coding Scheme C-RNTI (MCS-C-RNTI), or Configured Scheduling RNTI (CS-RNTI).

DCI format 0_0 may be used as a fallback DCI for scheduling PUSCH, where the CRC may be scrambled with C-RNTI. DCI format 0_0 with the CRC scrambled with the C-RNTI may include, for example, the following information.

【Table 4】

- Identifier for DCI formats – 1 bit
  - The value of this bit field is always set to 0, indicating an UL DCI format
- Frequency domain resource assignment – $\left\lceil \log_2(N_{RB}^{UL,BWP}(N_{RB}^{UL,BWP}+1)/2) \right\rceil$ bits where $N_{RB}^{UL,BWP}$ is defined in subclause 7.3.1.0
  - For PUSCH hopping with resource allocation type 1:
    - $N_{UL\_hop}$ MSB bits are used to indicate the frequency offset according to Subclause 6.3 of [6, TS 38.214], where $N_{UL\_hop}=1$ if the higher layer parameter *frequencyHoppingOffsetLists* contains two offset values and $N_{UL\_hop}=2$ if the higher layer parameter *frequencyHoppingOffsetLists* contains four offset values
    - $\left\lceil \log_2(N_{RB}^{UL,BWP}(N_{RB}^{UL,BWP}+1)/2) \right\rceil - N_{UL\_hop}$ bits provides the frequency domain resource allocation according to Subclause 6.1.2.2.2 of [6, TS 38.214]
  - For non-PUSCH hopping with resource allocation type 1:
    - $\left\lceil \log_2(N_{RB}^{UL,BWP}(N_{RB}^{UL,BWP}+1)/2) \right\rceil$ bits provides the frequency domain resource allocation according to Subclause 6.1.2.2.2 of [6, TS 38.214]
- Time domain resource assignment – 4 bits as defined in Subclause 6.1.2.1 of [6, TS 38.214]
- Frequency hopping flag – 1 bit according to Table 7.3.1.1.1-3, as defined in Subclause 6.3 of [6, TS 38.214]
- Modulation and coding scheme – 5 bits as defined in Subclause 6.1.4.1 of [6, TS 38.214]
- New data indicator – 1 bit

---

  - Redundancy version – 2 bits as defined in Table 7.3.1.1.1-2
  - HARQ process number – 4 bits
  - TPC command for scheduled PUSCH – 2 bits as defined in Subclause 7.1.1 of [5, TS 38.213]
  - Padding bits, if required.
  - UL/SUL indicator – 1 bit for UEs configured with *supplementaryUplink* in *ServingCellConfig* in the cell as defined in Table 7.3.1.1.1-1 and the number of bits for DCI format 1_0 before padding is larger than the number of bits for DCI format 0_0 before padding; 0 bit otherwise. The UL/SUL indicator, if present, locates in the last bit position of DCI format 0_0, after the padding bit(s).
    - If the UL/SUL indicator is present in DCI format 0_0 and the higher layer parameter *pusch-Config* is not configured on both UL and SUL the UE ignores the UL/SUL indicator field in DCI format 0_0, and the corresponding PUSCH scheduled by the DCI format 0_0 is for the UL or SUL for which high layer parameter *pucch-Config* is configured;
    - If the UL/SUL indicator is not present in DCI format 0_0 and *pucch-Config* is configured, the corresponding PUSCH scheduled by the DCI format 0_0 is for the UL or SUL for which high layer parameter *pucch-Config* is configured.
    - If the UL/SUL indicator is not present in DCI format 0_0 and *pucch-Config* is not configured, the corresponding PUSCH scheduled by the DCI format 0_0 is for the uplink on which the latest PRACH is transmitted.

DCI format 0_1 may be used as a non-fallback DCI for scheduling PUSCH, where the CRC may be scrambled with C-RNTI. DCI format 0_1 with the CRC scrambled with the C-RNTI may include, for example, the following information.

【Table 5】

- Identifier for DCI formats – 1 bit
  - The value of this bit field is always set to 0, indicating an UL DCI format
- Carrier indicator – 0 or 3 bits, as defined in Subclause 10.1 of [5, TS38.213].
- UL/SUL indicator – 0 bit for UEs not configured with *supplementaryUplink* in *ServingCellConfig* in the cell or UEs configured with *supplementaryUplink* in *ServingCellConfig* in the cell but only PUCCH carrier in the cell is configured for PUSCH transmission; otherwise, 1 bit as defined in Table 7.3.1.1.1-1.
- Bandwidth part indicator – 0, 1 or 2 bits as determined by the number of UL BWPs $n_{\text{BWP,RRC}}$ configured by higher layers, excluding the initial UL bandwidth part. The bitwidth for this field is determined as $\lceil \log_2(n_{\text{BWP}}) \rceil$ bits, where
  - $n_{\text{BWP}} = n_{\text{BWP,RRC}} + 1$ if $n_{\text{BWP,RRC}} \leq 3$, in which case the bandwidth part indicator is equivalent to the ascending order of the higher layer parameter *BWP-Id*;
  - otherwise $n_{\text{BWP}} = n_{\text{BWP,RRC}}$, in which case the bandwidth part indicator is defined in Table 7.3.1.1.2-1;

  If a UE does not support active BWP change via DCI, the UE ignores this bit field.
- Frequency domain resource assignment – number of bits determined by the following, where $N_{\text{RB}}^{\text{UL,BWP}}$ is the size of the active UL bandwidth part:
  - $N_{\text{RBG}}$ bits if only resource allocation type 0 is configured, where $N_{\text{RBG}}$ is defined in Subclause 6.1.2.2.1 of [6, TS 38.214],
  - $\lceil \log_2(N_{\text{RB}}^{\text{UL,BWP}}(N_{\text{RB}}^{\text{UL,BWP}}+1)/2) \rceil$ bits if only resource allocation type 1 is configured, or $\max\left(\lceil \log_2(N_{\text{RB}}^{\text{UL,BWP}}(N_{\text{RB}}^{\text{UL,BWP}}+1)/2) \rceil, N_{\text{RBG}}\right)+1$ bits if both resource allocation type 0 and 1 are configured.
  - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.
  - For resource allocation type 0, the $N_{\text{RBG}}$ LSBs provide the resource allocation as defined in Subclause 6.1.2.2.1 of [6, TS 38.214].
  - For resource allocation type 1, the $\lceil \log_2(N_{\text{RB}}^{\text{UL,BWP}}(N_{\text{RB}}^{\text{UL,BWP}}+1)/2) \rceil$ LSBs provide the resource allocation as follows:
    - For PUSCH hopping with resource allocation type 1:
      - $N_{\text{UL\_hop}}$ MSB bits are used to indicate the frequency offset according to Subclause 6.3 of [6, TS 38.214], where $N_{\text{UL\_hop}} = 1$ if the higher layer parameter *frequencyHoppingOffsetLists* contains two offset values and $N_{\text{UL\_hop}} = 2$ if the higher layer parameter *frequencyHoppingOffsetLists* contains four offset values
      - $\lceil \log_2(N_{\text{RB}}^{\text{UL,BWP}}(N_{\text{RB}}^{\text{UL,BWP}}+1)/2) \rceil - N_{\text{UL\_hop}}$ bits provides the frequency domain resource allocation according to Subclause 6.1.2.2.2 of [6, TS 38.214]
    - For non-PUSCH hopping with resource allocation type 1:
      - $\lceil \log_2(N_{\text{RB}}^{\text{UL,BWP}}(N_{\text{RB}}^{\text{UL,BWP}}+1)/2) \rceil$ bits provides the frequency domain resource allocation according to Subclause 6.1.2.2.2 of [6, TS 38.214]

  If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment – 0, 1, 2, 3, or 4 bits as defined in Subclause 6.1.2.1 of [6, TS38.214]. The bitwidth for this field is determined as $\lceil \log_2(I) \rceil$ bits, where $I$ is the number of entries in the higher layer parameter *pusch-TimeDomainAllocationList* if the higher layer parameter is configured; otherwise $I$ is the number of entries in the default table.
- Frequency hopping flag – 0 or 1 bit:
  - 0 bit if only resource allocation type 0 is configured or if the higher layer parameter *frequencyHopping* is not configured;
  - 1 bit according to Table 7.3.1.1.1-3 otherwise, only applicable to resource allocation type 1, as defined in Subclause 6.3 of [6, TS 38.214].
- Modulation and coding scheme – 5 bits as defined in Subclause 6.1.4.1 of [6, TS 38.214]
- New data indicator – 1 bit
- Redundancy version – 2 bits as defined in Table 7.3.1.1.1-2
- HARQ process number – 4 bits
- 1st downlink assignment index – 1 or 2 bits:
  - 1 bit for semi-static HARQ-ACK codebook;
  - 2 bits for dynamic HARQ-ACK codebook.
- 2nd downlink assignment index – 0 or 2 bits:
  - 2 bits for dynamic HARQ-ACK codebook with two HARQ-ACK sub-codebooks;
  - 0 bit otherwise.
- TPC command for scheduled PUSCH – 2 bits as defined in Subclause 7.1.1 of [5, TS38.213]

- SRS resource indicator – $\left\lceil \log_2\left( \sum_{k=1}^{\min\{L_{max},N_{SRS}\}} \binom{N_{SRS}}{k} \right) \right\rceil$ or $\lceil \log_2(N_{SRS}) \rceil$ bits, where $N_{SRS}$ is the number of configured SRS resources in the SRS resource set associated with the higher layer parameter *usage* of value 'codeBook' or 'nonCodeBook',
  - $\left\lceil \log_2\left( \sum_{k=1}^{\min\{L_{max},N_{SRS}\}} \binom{N_{SRS}}{k} \right) \right\rceil$ bits according to Tables 7.3.1.1.2-28/29/30/31 if the higher layer parameter *txConfig = nonCodebook*, where $N_{SRS}$ is the number of configured SRS resources in the SRS resource set associated with the higher layer parameter *usage* of value 'nonCodeBook' and
    - if UE supports operation with *maxMIMO-Layers* and the higher layer parameter *maxMIMO-Layers* of *PUSCH-ServingCellConfig* of the serving cell is configured, $L_{max}$ is given by that parameter
    - otherwise, $L_{max}$ is given by the maximum number of layers for PUSCH supported by the UE for the serving cell for non-codebook based operation.
  - $\lceil \log_2(N_{SRS}) \rceil$ bits according to Tables 7.3.1.1.2-32 if the higher layer parameter *txConfig = codebook*, where $N_{SRS}$ is the number of configured SRS resources in the SRS resource set associated with the higher layer parameter *usage* of value 'codeBook'.
- Precoding information and number of layers – number of bits determined by the following:
  - 0 bits if the higher layer parameter *txConfig = nonCodeBook*;
  - 0 bits for 1 antenna port and if the higher layer parameter *txConfig = codebook*;
  - 4, 5, or 6 bits according to Table 7.3.1.1.2-2 for 4 antenna ports, if *txConfig = codebook*, and according to whether transform precoder is enabled or disabled, and the values of higher layer parameters *maxRank*, and *codebookSubset*;

- 2, 4, or 5 bits according to Table 7.3.1.1.2-3 for 4 antenna ports, if *txConfig = codebook,* and according to whether transform precoder is enabled or disabled, and the values of higher layer parameters *maxRank,* and *codebookSubset;*
- 2 or 4 bits according to Table7.3.1.1.2-4 for 2 antenna ports, if *txConfig = codebook,* and according to whether transform precoder is enabled or disabled, and the values of higher layer parameters *maxRank* and *codebookSubset;*
- 1 or 3 bits according to Table7.3.1.1.2-5 for 2 antenna ports, if *txConfig = codebook,* and according to whether transform precoder is enabled or disabled, and the values of higher layer parameters *maxRank* and *codebookSubset.*

- Antenna ports – number of bits determined by the following
  - 2 bits as defined by Tables 7.3.1.1.2-6, if transform precoder is enabled, *dmrs-Type=*1, and *maxLength=*1;
  - 4 bits as defined by Tables 7.3.1.1.2-7, if transform precoder is enabled, *dmrs-Type=*1, and *maxLength=*2;
  - 3 bits as defined by Tables 7.3.1.1.2-8/9/10/11, if transform precoder is disabled, *dmrs-Type=*1, and *maxLength=*1, and the value of rank is determined according to the SRS resource indicator field if the higher layer parameter *txConfig = nonCodebook* and according to the Precoding information and number of layers field if the higher layer parameter *txConfig = codebook;*
  - 4 bits as defined by Tables 7.3.1.1.2-12/13/14/15, if transform precoder is disabled, *dmrs-Type=*1, and *maxLength=*2, and the value of rank is determined according to the SRS resource indicator field if the higher layer parameter *txConfig = nonCodebook* and according to the Precoding information and number of layers field if the higher layer parameter *txConfig = codebook;*
  - 4 bits as defined by Tables 7.3.1.1.2-16/17/18/19, if transform precoder is disabled, *dmrs-Type=*2, and *maxLength=*1, and the value of rank is determined according to the SRS resource indicator field if the higher layer parameter *txConfig = nonCodebook* and according to the Precoding information and number of layers field if the higher layer parameter *txConfig = codebook;*

  - 5 bits as defined by Tables 7.3.1.1.2-20/21/22/23, if transform precoder is disabled, *dmrs-Type=*2, and *maxLength=*2, and the value of rank is determined according to the SRS resource indicator field if the higher layer parameter *txConfig = nonCodebook* and according to the Precoding information and number of layers field if the higher layer parameter *txConfig = codebook.*

  where the number of CDM groups without data of values 1, 2, and 3 in Tables 7.3.1.1.2-6 to 7.3.1.1.2-23 refers to CDM groups {0}, {0,1}, and {0, 1,2} respectively.

  If a UE is configured with both *dmrs-UplinkForPUSCH-MappingTypeA* and *dmrs-UplinkForPUSCH-MappingTypeB*, the bitwidth of this field equals $\max\{x_A, x_B\}$, where $x_A$ is the "Antenna ports" bitwidth derived according to *dmrs-UplinkForPUSCH-MappingTypeA* and $x_B$ is the "Antenna ports" bitwidth derived according to *dmrs-UplinkForPUSCH-MappingTypeB*. A number of $|x_A - x_B|$ zeros are padded in the MSB of this field, if the mapping type of the PUSCH corresponds to the smaller value of $x_A$ and $x_B$.

- SRS request – 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].
- CSI request – 0, 1, 2, 3, 4, 5, or 6 bits determined by higher layer parameter *reportTriggerSize.*
- CBG transmission information (CBGTI) – 0 bit if higher layer parameter *codeBlockGroupTransmission* for PDSCH is not configured, otherwise, 2, 4, 6, or 8 bits determined by higher layer parameter *maxCodeBlockGroupsPerTransportBlock* for PUSCH.

- PTRS-DMRS association – number of bits determined as follows
    - 0 bit if *PTRS-UplinkConfig* is not configured and transform precoder is disabled, or if transform precoder is enabled, or if *maxRank=1*;
    - 2 bits otherwise, where Table 7.3.1.1.2-25 and 7.3.1.1.2-26 are used to indicate the association between PTRS port(s) and DMRS port(s) for transmission of one PT-RS port and two PT-RS ports respectively, and the DMRS ports are indicated by the Antenna ports field.

  If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part.
- beta_offset indicator – 0 if the higher layer parameter *betaOffsets = semiStatic*; otherwise 2 bits as defined by Table 9.3-3 in [5, TS 38.213].
- DMRS sequence initialization – 0 bit if transform precoder is enabled; 1 bit if transform precoder is disabled.
- UL-SCH indicator – 1 bit. A value of "1" indicates UL-SCH shall be transmitted on the PUSCH and a value of "0" indicates UL-SCH shall not be transmitted on the PUSCH. Except for DCI format 0_1 with CRC scrambled by SP-CSI-RNTI, a UE is not expected to receive a DCI format 0_1 with UL-SCH indicator of "0" and CSI request of all zero(s).

DCI format 1_0 may be used as a fallback DCI for scheduling PDSCH, where the CRC may be scrambled with C-RNTI. DCI format 1_0 with the CRC scrambled with C-RNTI may include, for example, the following information.

[Table 6]

| |
|---|
| - Identifier for DCI formats - 1 bits |
|          - The value of this bit field is always set to 1, indicating a DL DCI format |
| - Frequency domain resource assignment - $\left\lceil \log_2(N_{RB}^{DLBWP}(N_{RB}^{DLBWP}+1)/2) \right\rceil$ bits where $N_{RB}^{DLBWP}$ is given by subclause 7.3.1.0 |
| If the CRC of the DCI format 1_0 is scrambled by C-RNTI and the "Frequency domain resource assignment" field are of all ones, the DCI format 1_0 is for random access procedure initiated by a PDCCH order, with all remaining fields set as follows: |
| - Random Access Preamble index - 6 bits according to *ra-PreambleIndex* in Subclause 5.1.2 of [8, TS38.321] |
| - UL/SUL indicator - 1 bit. If the value of the "Random Access Preamble index" is not all zeros and if the UE is configured with *supplementaryUplink* in *ServingCellConfig* in the cell, this field indicates which UL carrier in the cell to transmit the PRACH according to Table 7.3.1.1.1-1; otherwise, this field is reserved |
| - SS/PBCH index - 6 bits. If the value of the "Random Access Preamble index" is not all zeros, this field indicates the SS/PBCH that shall be used to determine the RACH occasion for the PRACH transmission; otherwise, this field is reserved. |
| - PRACH Mask index - 4 bits. If the value of the "Random Access Preamble index" is not all zeros, this field indicates the RACH occasion associated with the SS/PBCH indicated by "SS/PBCH index" for the PRACH transmission, according to Subclause 5.1.1 of [8, TS38.321]; otherwise, this field is reserved |
| - Reserved bits - 10 bits |
| Otherwise, all remaining fields are set as follows: |
| - Time domain resource assignment - 4 bits as defined in Subclause 5.1.2.1 of [6, TS 38.214] |
| - VRB-to-PRB mapping -1 bit according to Table 7.3.1.2.2-5 |
| - Modulation and coding scheme - 5 bits as defined in Subclause 5.1.3 of [6, TS 38.214] |
| - New data indicator - 1 bit |
| - Redundancy version - 2 bits as defined in Table 7.3.1.1.1-2 |
| - HARQ process number - 4 bits |
| - Downlink assignment index - 2 bits as defined in Subclause 9.1.3 of [5, TS 38.213], as counter DAI |

(continued)

| |
|---|
| - TPC command for scheduled PUCCH - 2 bits as defined in Subclause 7.2.1 of [5, TS 38.213]<br>- PUCCH resource indicator - 3 bits as defined in Subclause 9.2.3 of [5, TS 38.213]<br>- PDSCH-to-HARQ_feedback timing indicator - 3 bits as defined in Subclause 9.2.3 of [5, TS38.213] |

DCI format 1_1 may be used as a non-fallback DCI for scheduling PDSCH, where the CRC may be scrambled with C-RNTI. DCI format 1_1 with the CRC scrambled with the C-RNTI may include, for example, the following information.

【Table 7】

- Identifier for DCI formats – 1 bits
  - The value of this bit field is always set to 1, indicating a DL DCI format
- Carrier indicator – 0 or 3 bits as defined in Subclause 10.1 of [5, TS 38.213].
- Bandwidth part indicator – 0, 1 or 2 bits as determined by the number of DL BWPs $n_{BWP,RRC}$ configured by higher layers, excluding the initial DL bandwidth part. The bitwidth for this field is determined as $\lceil \log_2(n_{BWP}) \rceil$ bits, where
  - $n_{BWP} = n_{BWP,RRC} + 1$ if $n_{BWP,RRC} \leq 3$, in which case the bandwidth part indicator is equivalent to the ascending order of the higher layer parameter *BWP-Id*;
  - otherwise $n_{BWP} = n_{BWP,RRC}$, in which case the bandwidth part indicator is defined in Table 7.3.1.1.2-1;

  If a UE does not support active BWP change via DCI, the UE ignores this bit field.
- Frequency domain resource assignment – number of bits determined by the following, where $N_{RB}^{DL,BWP}$ is the size of the active DL bandwidth part:
  - $N_{RBG}$ bits if only resource allocation type 0 is configured, where $N_{RBG}$ is defined in Subclause 5.1.2.2.1 of [6, TS38.214],
  - $\lceil \log_2(N_{RB}^{DL,BWP}(N_{RB}^{DL,BWP}+1)/2) \rceil$ bits if only resource allocation type 1 is configured, or
  - $\max\left( \lceil \log_2(N_{RB}^{DL,BWP}(N_{RB}^{DL,BWP}+1)/2) \rceil, N_{RBG} \right) + 1$ bits if both resource allocation type 0 and 1 are configured.
  - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.
  - For resource allocation type 0, the $N_{RBG}$ LSBs provide the resource allocation as defined in Subclause 5.1.2.2.1 of [6, TS 38.214].

- For resource allocation type 1, the $\left\lceil \log_2(N_{RB}^{DLBWP}(N_{RB}^{DLBWP}+1)/2) \right\rceil$ LSBs provide the resource allocation as defined in Subclause 5.1.2.2.2 of [6, TS 38.214]

If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment – 0, 1, 2, 3, or 4 bits as defined in Subclause 5.1.2.1 of [6, TS 38.214]. The bitwidth for this field is determined as $\left\lceil \log_2(I) \right\rceil$ bits, where $I$ is the number of entries in the higher layer parameter *pdsch-TimeDomainAllocationList* if the higher layer parameter is configured; otherwise $I$ is the number of entries in the default table.

- VRB-to-PRB mapping – 0 or 1 bit:
  - 0 bit if only resource allocation type 0 is configured or if interleaved VRB-to-PRB mapping is not configured by high layers;
  - 1 bit according to Table 7.3.1.2.2-5 otherwise, only applicable to resource allocation type 1, as defined in Subclause 7.3.1.6 of [4, TS 38.211].

- PRB bundling size indicator – 0 bit if the higher layer parameter *prb-BundlingType* is not configured or is set to 'static', or 1 bit if the higher layer parameter *prb-BundlingType* is set to 'dynamic' according to Subclause 5.1.2.3 of [6, TS 38.214].

- Rate matching indicator – 0, 1, or 2 bits according to higher layer parameters *rateMatchPatternGroup1* and *rateMatchPatternGroup2*, where the MSB is used to indicate *rateMatchPatternGroup1* and the LSB is used to indicate *rateMatchPatternGroup2* when there are two groups.

- ZP CSI-RS trigger – 0, 1, or 2 bits as defined in Subclause 5.1.4.2 of [6, TS 38.214]. The bitwidth for this field is determined as $\left\lceil \log_2(n_{ZP}+1) \right\rceil$ bits, where $n_{ZP}$ is the number of aperiodic ZP CSI-RS resource sets configured by higher layer.

For transport block 1:
  - Modulation and coding scheme – 5 bits as defined in Subclause 5.1.3.1 of [6, TS 38.214]
  - New data indicator – 1 bit
  - Redundancy version – 2 bits as defined in Table 7.3.1.1.1-2

For transport block 2 (only present if *maxNrofCodeWordsScheduledByDCI* equals 2):
  - Modulation and coding scheme – 5 bits as defined in Subclause 5.1.3.1 of [6, TS 38.214]
  - New data indicator – 1 bit
  - Redundancy version – 2 bits as defined in Table 7.3.1.1.1-2

If "Bandwidth part indicator" field indicates a bandwidth part other than the active bandwidth part and the value of *maxNrofCodeWordsScheduledByDCI* for the indicated bandwidth part equals 2 and the value of *maxNrofCodeWordsScheduledByDCI* for the active bandwidth part equals 1, the UE assumes zeros are padded when interpreting the "Modulation and coding scheme", "New data indicator", and "Redundancy version" fields of transport block 2 according to Subclause 12 of [5, TS38.213], and the UE ignores the "Modulation and coding scheme", "New data indicator", and "Redundancy version" fields of transport block 2 for the indicated bandwidth part.

- HARQ process number – 4 bits
- Downlink assignment index – number of bits as defined in the following
  - 4 bits if more than one serving cell are configured in the DL and the higher layer parameter *pdsch-HARQ-ACK-Codebook=dynamic*, where the 2 MSB bits are the counter DAI and the 2 LSB bits are the total DAI;

- 2 bits if only one serving cell is configured in the DL and the higher layer parameter *pdsch-HARQ-ACK-Codebook=dynamic*, where the 2 bits are the counter DAI;
- 0 bits otherwise.
- TPC command for scheduled PUCCH – 2 bits as defined in Subclause 7.2.1 of [5, TS 38.213]
- PUCCH resource indicator – 3 bits as defined in Subclause 9.2.3 of [5, TS 38.213]
- PDSCH-to-HARQ_feedback timing indicator – 0, 1, 2, or 3 bits as defined in Subclause 9.2.3 of [5, TS 38.213]. The bitwidth for this field is determined as $\lceil \log_2(I) \rceil$ bits, where $I$ is the number of entries in the higher layer parameter *dl-DataToUL-ACK*.
- Antenna port(s) – 4, 5, or 6 bits as defined by Tables 7.3.1.2.2-1/2/3/4, where the number of CDM groups without data of values 1, 2, and 3 refers to CDM groups {0}, {0,1}, and {0, 1,2} respectively. The antenna ports $\{p_0,...,p_{v-1}\}$ shall be determined according to the ordering of DMRS port(s) given by Tables 7.3.1.2.2-1/2/3/4.
  If a UE is configured with both *dmrs-DownlinkForPDSCH-MappingTypeA* and *dmrs-DownlinkForPDSCH-MappingTypeB*, the bitwidth of this field equals $\max\{x_A, x_B\}$, where $x_A$ is the "Antenna ports" bitwidth derived according to *dmrs-DownlinkForPDSCH-MappingTypeA* and $x_B$ is the "Antenna ports" bitwidth derived according to *dmrs-DownlinkForPDSCH-MappingTypeB*. A number of $|x_A - x_B|$ zeros are padded in the MSB of this field, if the mapping type of the PDSCH corresponds to the smaller value of $x_A$ and $x_B$.
- Transmission configuration indication – 0 bit if higher layer parameter *tci-PresentInDCI* is not enabled; otherwise 3 bits as defined in Subclause 5.1.5 of [6, TS38.214].
  If "Bandwidth part indicator" field indicates a bandwidth part other than the active bandwidth part,

  - if the higher layer parameter *tci-PresentInDCI* is not enabled for the CORESET used for the PDCCH carrying the DCI format 1_1,
    - the UE assumes *tci-PresentInDCI* is not enabled for all CORESETs in the indicated bandwidth part;
  - otherwise,
    - the UE assumes *tci-PresentInDCI* is enabled for all CORESETs in the indicated bandwidth part.
  - SRS request – 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].
  - CBG transmission information (CBGTI) – 0 bit if higher layer parameter *codeBlockGroupTransmission* for PDSCH is not configured, otherwise, 2, 4, 6, or 8 bits as defined in Subclause 5.1.7 of [6, TS38.214], determined by the higher layer parameters *maxCodeBlockGroupsPerTransportBlock* and *maxNrofCodeWordsScheduledByDCI* for the PDSCH.
  - CBG flushing out information (CBGFI) – 1 bit if higher layer parameter *codeBlockGroupFlushIndicator* is configured as "TRUE", 0 bit otherwise.
  - DMRS sequence initialization – 1 bit.

[PDCCH: CORESET, REG, CCE, Search Space]

In the following, the downlink control channel in the 5G wireless communication system will be described in more detail with reference to the drawings.

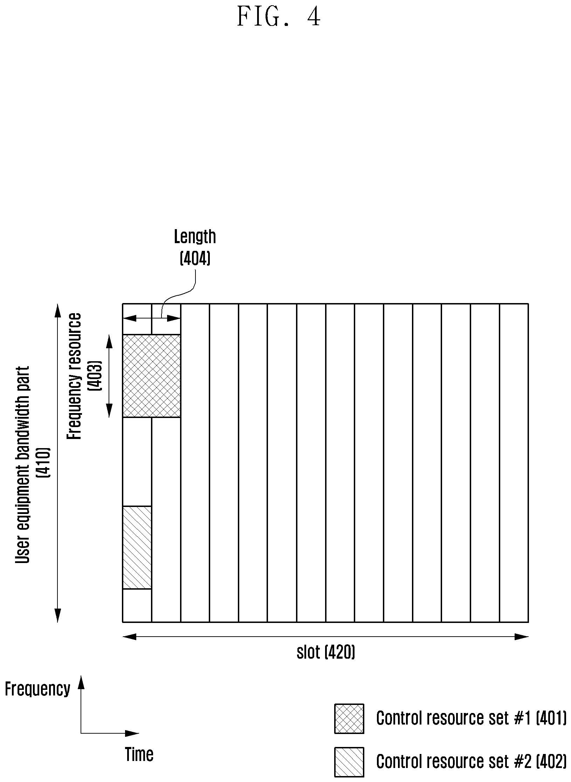

FIG. 4 is a diagram illustrating an example of a Control Resource Set (CORESET) through which a downlink control channel is transmitted in a 5G wireless communication system.

With reference to FIG. 4, the UE bandwidth part 410 may be configured on the frequency axis, and two control resource sets (control resource set #1 401, control resource set #2 402) may be configured within one slot 420 on the time axis. The control resource sets 401 and 402 may be configured to specific frequency resources 403 within the overall UE bandwidth part 410 on the frequency axis. In addition, the control resource sets 401 and 402 may be configured to one or more OFDM symbols on the time axis, which may be defined as a Control Resource Set Duration 404. With reference to the example shown in FIG. 4, control resource set #1 401 is configured to a control resource set duration of 2 symbols, and control resource set #2 402 is configured to a control resource set duration of 1 symbol.

In the above-described 5G wireless communication system, the control resource set may be configured by the base station to the user equipment through higher layer signaling (e.g., System Information, Master Information Block (MIB), Radio Resource Control (RRC) signaling). Configuring a control resource set to a user equipment means providing information such as the control resource set identity, the frequency location of the control resource set, and the symbol length of the control resource set. For example, the information may include the following.

【Table 8】

| ControlResourceSet ::= | SEQUENCE { |
|---|---|
| Corresponds to L1 parameter 'CORESET-ID' | |
| controlResourceSetId | ControlResourceSetId, |
| frequencyDomainResources | BIT STRING (SIZE (45)), |
| duration | INTEGER |
| (1..maxCoReSetDuration), | |
| cce-REG-MappingType | CHOICE { |
| interleaved | |
| SEQUENCE { | |
| reg-BundleSize | ENUMERATED |
| {n2, n3, n6}, | |
| precoderGranularity | ENUMERATED |
| {sameAsREG-bundle, allContiguousRBs}, | |
| interleaverSize | ENUMERATED |
| {n2, n3, n6} | |

```
shiftIndex
        INTEGER(0..maxNrofPhysicalResourceBlocks-1)
                                        OPTIONAL
},
nonInterleaved                                          NULL
},
tci-StatesPDCCH
        SEQUENCE(SIZE (1..maxNrofTCI-StatesPDCCH)) OF TCI-StateId
                        OPTIONAL,
tci-PresentInDCI                                        ENUMERATED
{enabled}
                                OPTIONAL,    -- Need S
}
```

In [Table 8], the tci-StatesPDCCH (simply named Transmission Configuration Indication (TCI) state) configuration information may include information of one or more Synchronization Signal (SS)/Physical Broadcast Channel (PBCH) Block indices or Channel State Information Reference Signal (CSI-RS) indices that are in a Quasi Co Location (QCL) relationship with the DMRS transmitted by the corresponding control resource set.

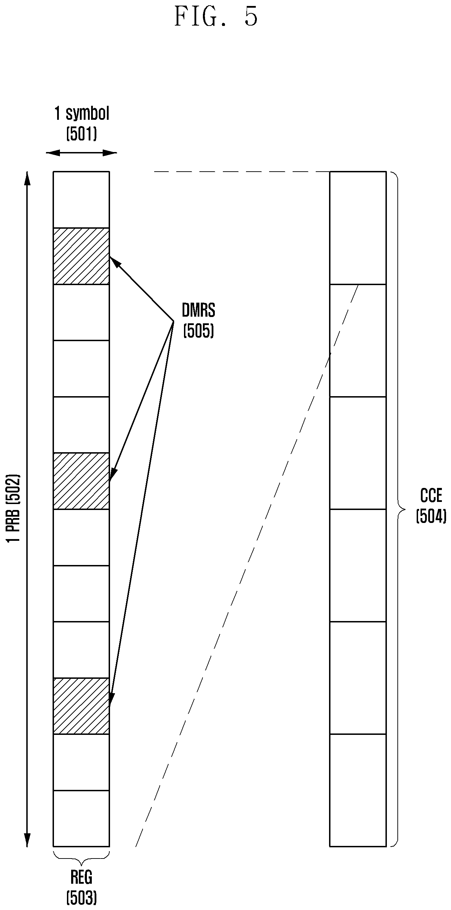

FIG. 5 is a diagram illustrating the structure of a downlink control channel in a 5G wireless communication system.

That is, FIG. 5 is a diagram illustrating an example of the basic units of time and frequency resources that constitute a downlink control channel that may be used in a 5G wireless communication system.

With reference to FIG. 5, the basic unit of time and frequency resources constituting a control channel may be a Resource Element Group (REG) 503, wherein the REG 503 may be defined by 1 OFDM symbol 501 on the time axis and 1 Physical Resource Block (PRB) 502 on the frequency axis, i.e., 12 subcarriers. The base station can configure a downlink control channel allocation unit by concatenating REGs 503.

As illustrated in FIG. 5, if the basic unit to which a downlink control channel is assigned in a 5G wireless communication system is referred to as a Control Channel Element (CCE) 504, one CCE 504 may consist of a plurality of REGs 503. Using the REG 503 shown in FIG. 5 as an example, the REG 503 may consist of 12 REs, and if one CCE 504 consists of six REG 503s, then one CCE 504 may consist of 72 REs. When a downlink control resource set is configured, the corresponding area may consist of a plurality of CCEs 504, and a particular downlink control channel may be mapped to one or more CCEs 504 for transmission on the basis of an Aggregation Level (AL) within the control resource set. The CCEs 504 within the control resource set may be numbered, wherein the CCEs 504 may be numbered according to a logical mapping method.

The basic unit of the downlink control channel shown in FIG. 5, i.e., the REG 503, may include both REs to which DCIs are mapped and areas to which DMRSs 505, which are reference signals for decoding them, are mapped. As shown in FIG. 5, three DMRSs 505 may be transmitted within one REG 503. The number of CCEs required to transmit the PDCCH may be 1, 2, 4, 8, or 16 depending on the Aggregation Level (AL), and different numbers of CCEs may be used to implement link adaptation of the downlink control channel. For example, when AL=L, one downlink control channel may be transmitted through L CCEs. Since the user equipment must detect the signal without knowing the information about the downlink control channel, a search space representing the set of CCEs is defined for blind decoding. A search space is a set of downlink control channel candidates consisting of CCEs that the user equipment must attempt to decode at a given aggregation level, and since there are several aggregation levels that create bundles of 1, 2, 4, 8, and 16 CCEs, a user equipment may have multiple search spaces. A search space set may be defined as the set of search spaces at all configured aggregation levels.

The search space may be categorized into common search space and UE-specific search space. The common search space of the PDCCH may be searched by a certain group of user equipments or all user equipments to receive cell common control information such as dynamic scheduling or paging messages for system information. For example, PDSCH scheduling allocation information for the transmission of SIBs including the cell's operator information, etc. may be received by searching the common search space of the PDCCH. The common search space may be defined as the set of CCEs that are pre-defined because a certain group of user equipments or all user equipments should receive the PDCCH.

Scheduling assignment information for a UE-specific PDSCH or PUSCH may be received by searching the UE-specific search space of the PDCCH. The UE-specific search space may be defined UE-specifically as a function of the identity of the user equipment and various system parameters.

In the 5G wireless communication system, parameters for the search space for the PDCCH may be configured from the base station to the user equipment by higher layer signaling (e.g., SIB, MIB, RRC signaling). For example, the base station may configure to the user equipment the number of PDCCH candidates at each aggregation level L, the monitoring period for the search space, the monitoring occasion per symbol in the slot for the search space, the type of search space (common search space or UE-specific search space), the combination of DCI format and RNTI to be monitored in the search space, and the control resource set index to monitor the search space. For example, the parameters for a search space for a PDCCH may include the following information.

【Table 9】

```
SearchSpace ::=                    SEQUENCE {
    -- Identity of the search space. SearchSpaceId = 0 identifies the
SearchSpace configured via PBCH (MIB) or ServingCellConfigCommon.
    searchSpaceId                   SearchSpaceId,
    controlResourceSetId            ControlResourceSetId,
    monitoringSlotPeriodicityAndOffset    CHOICE {
        sl1                         NULL,
        sl2                         INTEGER (0..1),
        sl4                         INTEGER (0..3),
        sl5                         INTEGER (0..4),
        sl8                         INTEGER (0..7),
        sl10                        INTEGER (0..9),
        sl16                        INTEGER (0..15),
        sl20                        INTEGER (0..19)
    }
                            OPTIONAL,
    duration            INTEGER (2..2559)
    monitoringSymbolsWithinSlot            BIT STRING (SIZE (14))
                            OPTIONAL,
```

```
    nrofCandidates                    SEQUENCE {
        aggregationLevel1                 ENUMERATED {n0, n1, n2, n3, n4, n5,
n6, n8},
        aggregationLevel2                 ENUMERATED {n0, n1, n2, n3, n4, n5,
n6, n8},
        aggregationLevel4                 ENUMERATED {n0, n1, n2, n3, n4, n5,
n6, n8},
        aggregationLevel8                 ENUMERATED {n0, n1, n2, n3, n4, n5,
n6, n8},
        aggregationLevel16                ENUMERATED {n0, n1, n2, n3, n4, n5,
n6, n8}
    },
    searchSpaceType                   CHOICE {
        -- Configures this search space as common search space (CSS) and DCI
formats to monitor.
        common                        SEQUENCE {
        }
        ue-Specific                   SEQUENCE {
            -- Indicates whether the UE monitors in this USS for DCI formats 0-
0 and 1-0 or for formats 0-1 and 1-1.
            formats                       ENUMERATED {formats0-0-And-1-0,
formats0-1-And-1-1},
            ...
        }
```

On the basis of the configuration information, the base station may configure one or more search space sets to the user equipment. According to an embodiment, the base station may configure a search space set 1 and a search space set 2 for the user equipment, and may configure DCI format A scrambled with X-RNTI in search space set 1 to be monitored in a common search space, and may configure DCI format B scrambled with Y-RNTI in search space set 2 to be monitored in a UE-specific search space.

According to the configuration information, one or more sets of search spaces may exist in the common search space or the UE-specific search space. For example, search space set #1 and search space set #2 may be configured as the common search spaces, and search space set #3 and search space set #4 may be configured as the UE-specific search spaces.

In the common search space, the combination of the following DCI format and RNTI may be monitored. Of course, this is not limited to the following examples.

- DCI format 0_0/1_0 with CRC scrambled by C-RNTI, CS-RNTI, MCS-C-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the combination of the following DCI format and RNTI may be monitored. Of course, this is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may have the following definitions and uses.

C-RNTI (Cell RNTI): Used for UE-specific PDSCH scheduling
MCS-C-RN TI (Modulation Coding Scheme C-RNTI): Used for UE-specific PDSCH scheduling
TC-RNTI (Temporary Cell RNTI): Used for UE-specific PDSCH scheduling
CS-RNTI (Configured Scheduling RNTI): Used for semi-statically configured UE-specific PDSCH scheduling
RA-RNTI (Random Access RNTI): Used for PDSCH scheduling in the random access phase
P-RNTI (Paging RNTI): Used for PDSCH scheduling where paging is transmitted
SI-RNTI (System Information RNTI): Used for PDSCH scheduling where system information is transmitted
INT-RNTI (Interruption RNTI): Used to indicate whether puncturing has been applied to the PDSCH
TPC-PUSCH-RNTI (Transmit Power Control for PUSCH RNTI): Used to indicate power control commands to PUSCH
TPC-PUCCH-RNTI (Transmit Power Control for PUCCH RNTI): Used to indicate power control commands to PUCCH
TPC-SRS -RNTI (Transmit Power Control for SRS RNTI): Used to indicate power control commands to SRS

The DCI formats specified above may follow the definitions below.
[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In a 5G wireless communication system, the search space of the aggregation level L in the control resource set p and the search space set s may be expressed as the following equation.
【Equation 1】

$$ L \cdot \left\{ \left( Y_{p,n_{s,f}^{\mu}} + \left\lfloor \frac{m_{s,n_{CI}} \cdot N_{CCE,p}}{L \cdot M_{p,s,\max}^{(L)}} \right\rfloor + n_{CI} \right) \bmod \left\lfloor N_{CCE,p}/L \right\rfloor \right\} + i $$

- L: Aggregation level
- $n_{CI}$: Carrier index
- $N_{CCE,p}$: Total number of CCEs existing in control resource set p
- $n_{s,f}^{\mu}$ : slot index
- $M_{p,s,\max}^{(L)}$ : Number of PDCCH candidates at aggregation level L
- $m_{s n_{CI}} = 0, \dots , M_{p,s,\max}^{(L)} -1$: PDCCH candidate index of aggregation level L

- i = 0, ... , L-1

-
$$Y_{p,n_{sf}^{\mu}} = \left(A_p \cdot Y_{p,n_{sf}^{\mu}-1}\right) \bmod D$$
, $Y_{p-1} = n_{RNTI} \neq 0$, $A_0 = 39827$ ,
$A_1 = 39829$ , $A_2 = 39839$ , $D = 65537$

- nRNTI : User equipment identifier

$Y\_(p,n^{\mu}_{s,f})$ value may correspond to 0 in the case of a common search space.

$Y\_(p,n^{\mu}_{s,f})$ value may correspond to a value that changes depending on the UE's identity (C-RNTI or ID configured for the UE by the base station) and time index.

[Uplink-downlink configurations]

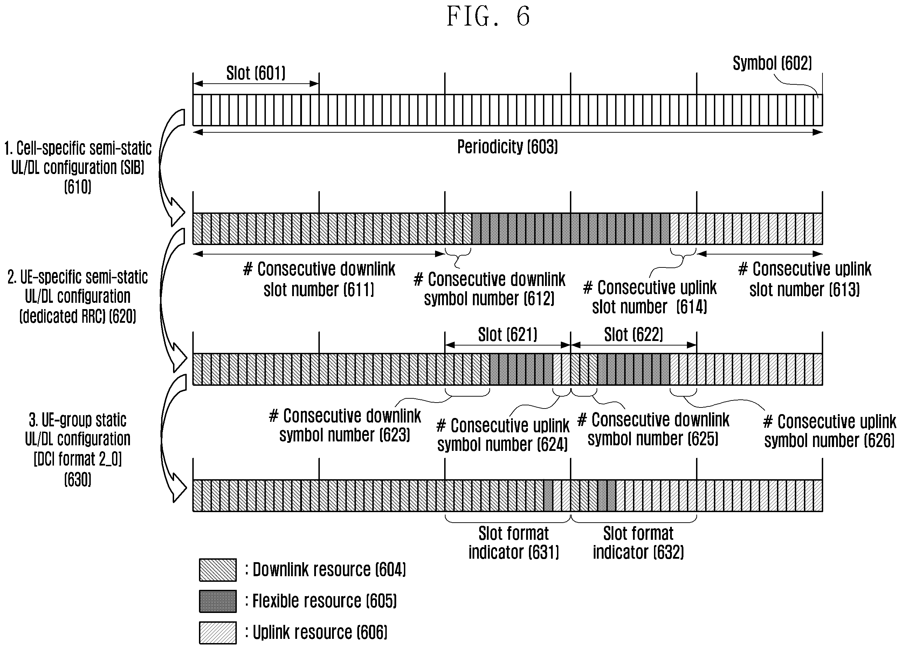

FIG. 6 is a diagram illustrating an example of uplink-downlink configurations considered in a 5G communication system according to an embodiment of the present disclosure.

With reference to FIG. 6, the slot 601 may include 14 symbols 602. In a 5G communication system, the uplink-downlink configurations of symbols/slots may be established in three steps. First, on a semi-static, symbol-by-symbol basis, the uplink-downlink of a symbol/slot may be configured semi-statically through cell-specific configuration information 610 through system information in a symbol unit. Specifically, the cell-specific uplink-downlink configuration information through system information may include uplink-downlink pattern information and reference subcarrier information. The uplink-downlink pattern information may indicate a pattern periodicity 603 and a consecutive downlink slot number 611 and a symbol number 612 of the next slot from the start of each pattern, and a consecutive uplink slot number 613 and a symbol number 614 of the next slot from the end of the pattern. In this case, slots and symbols not indicated as uplink slots/symbols 606 or downlink slots/symbols 604 may be determined to be flexible slots/symbols 605.

Second, the slots 621 and 622 including flexible slots or flexible symbols through user-specific configuration information 620 through dedicated higher layer signaling may be indicated to a consecutive number of downlink symbols 623 and 625 from the beginning symbol of the slot and a consecutive number of uplink symbols 624 and 626 from the end of the slot, respectively, or to a slot-wide downlink or slot-wide uplink.

In addition, finally, to dynamically change between downlink and uplink signaling, the symbols that are indicated as flexible symbols in each slot (i.e., symbols that are not indicated as downlink and uplink) may be indicated whether they are downlink symbols, uplink symbols, or flexible symbols through Slot Format Indicators (SFIs) 631 and 632 included in the downlink control channel 630. The slot format indicator may be selected by a single index from a table of preset uplink-downlink configurations of 14 symbols in a single slot, as shown in Table 11 below.

【Table 11】

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | D | F | F | U | U | D | D | D | F | F | U | U |
| 51 | D | F | F | U | U | U | U | D | F | F | F | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 – 254 | Reserved | | | | | | | | | | | | | |
| 255 | UE determines the slot format for the slot based on *TDD-UL-DL-ConfigurationCommon*, or *TDD-UL-DL-ConfigDedicated* and, if any, on detected DCI formats | | | | | | | | | | | | | |

[QCL, TCI state]

In a wireless communication system, one or more different antenna ports (or one or more channels, signals, and combinations thereof, but hereinafter referred to collectively as different antenna ports for convenience) may be associated with each other by a Quasi Co Location (QCL) configuration as shown in Table 12 below. The TCI state is intended to announce the QCL relationship between PDCCH (or PDCCH DMRS) and other RSs or channels, and when a reference antenna port A (reference RS #A) and another target antenna port B (target RS #B) are QCLed, it means that the user equipment is allowed to apply some or all of the large-scale channel parameters estimated at antenna port A to the channel measurements from antenna port B. The QCL may need to relate different parameters depending on the situation, such as 1) time tracking, which is affected by average delay and delay spread, 2) frequency tracking, which is affected by Doppler shift and Doppler spread, 3) radio resource management (RRM), which is affected by average gain, and 4) beam management (BM), which is affected by spatial parameters. Therefore, NR supports four types of QCL relationships as shown in Table 12 below.

[Table 12]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to any or all of various parameters such as Angle of arrival (AoA), Power Angular Spectrum (PAS) of AoA, Angle of departure (AoD), PAS of AoD, transmit/receive channel correlation, transmit/receive beamforming, spatial channel correlation, etc.

The QCL relationship may be configured to the user equipment through the RRC parameters TCI-State and QCL-Info as shown in Table 13 below. With reference to Table 13, the base station may configure one or more TCI states to inform the user equipment of up to two QCL relationships (qcl-Type1, qcl-Type2) for the RS referring to the ID of the TCI state, i.e., the target RS. In this case, each QCL information (QCL-Info) included in each TCI state includes the serving cell index and BWP index of the reference RS to which the QCL information refers, the type and ID of the reference RS, and the QCL type as shown in Table 13.

【Table 13】

| | |
|---|---|
| TCI-State ::= | SEQUENCE { |
| tci-StateId | TCI-StateId, |
| qcl-Type1 | QCL-Info, |

```
qcl-Type2                                            QCL-Info
              OPTIONAL,    -- Need R

...

}


QCL-Info ::=                               SEQUENCE {
cell                                          ServCellIndex
              OPTIONAL,     -- Need R
bwp-Id                                        BWP-Id
                OPTIONAL, -- Cond CSI-RS-Indicated
referenceSignal                            CHOICE {
csi-rs                                       NZP-CSI-RS-ResourceId,
ssb                                           SSB-Index
},
qcl-Type                                     ENUMERATED    {typeA,
typeB, typeC, typeD},
...

}
```

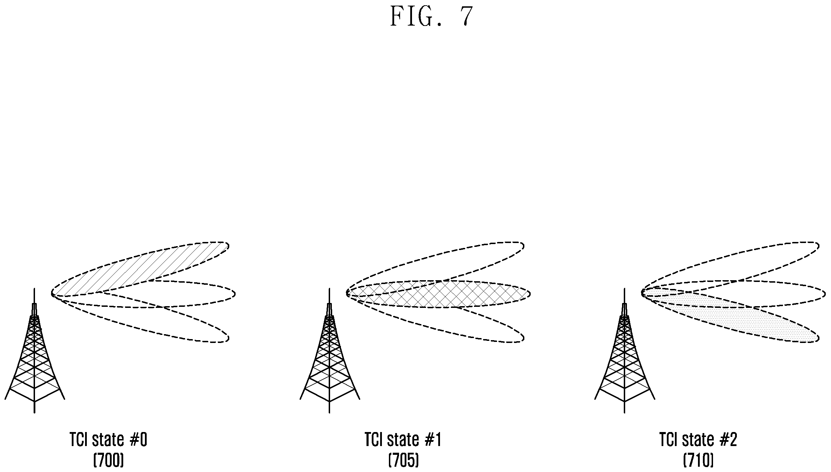

FIG. 7 is a diagram illustrating an example of base station beam allocation according to TCI state configurations. With reference to FIG. 7, the base station may communicate information about different N beams to the user equipment through different N TCI states. For example, in the case of N=3 as shown in FIG. 7, the base station may communicate that the antenna ports referencing the three TCI states 700, 705, and 710 have different spatial Rx parameters, i.e., different beams, by ensuring that the qcl-Type2 parameters included in the three TCI states 700, 705, and 710 are associated with CSI-RS or SSB corresponding to different beams and are configured to QCL type D.

Tables 14-1 through 14-5 below show the valid TCI state according to target antenna port type.

Table 14-1 illustrates valid TCI state configurations when the target antenna port is CSI-RS for tracking (TRS). The TRS refers to an NZP CSI-RS in which the repetition parameter is not configured, and trs-Info is configured to true among CSI-RSs. Configuration number 3 in Table 14-1 may be used for aperiodic TRS.

[Table 14-1] Valid TCI state configurations when the target antenna port is CSI-RS for tracking (TRS)

| Valid TCI state Configuration | DL RS 1 | qcl-Type1 | DL RS 2 (if configured) | qcl-Type2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 14-2 illustrates valid TCI state configurations when the target antenna port is CSI-RS for CSI. The CSI-RS for CSI refers to an NZP CSI-RS in which a parameter indicating repetition (e.g., repetition parameter) is not configured and trs-Info is also not configured to true among CSI-RSs.

[Table 14-2] Valid TCI state configurations when the target antenna port is CSI-RS for CSI

| Valid TCI state Configuration | DL RS 1 | qcl-Type1 | DL RS 2 (if configured) | qcl-Type2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 14-3 illustrates valid TCI state configurations when the target antenna port is CSI-RS for beam management (BM, same meaning as CSI-RS for L1 RSRP reporting). The CSI-RS for BM refers to an NZP CSI-RS in which the repetition parameter is configured and has a value of On or Off, and trs-Info is not configured to true among CSI-RSs.

[Table 14-3] Valid TCI state configurations when the target antenna port is CSI-RS for BM (for L1 RSRP reporting)

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 14-4 illustrates valid TCI state configurations when the target antenna port is PDCCH DMRS.

[Table 14-4] Valid TCI state configurations when the target antenna port is PDCCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 14-5 illustrates valid TCI state configurations when the target antenna port is PDSCH DMRS.

[Table 14-5] Valid TCI state configurations when the target antenna port is PDSCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

The representative QCL configuration method according to the Tables 14-1 to 14-5 is to configure the target antenna port and reference antenna port for each step as "SSB" -> "TRS" -> "CSI-RS for CSI, or CSI-RS for BM, or PDCCH DMRS, or PDSCH DMRS". This allows the statistical features measured from SSB and TRS to be linked to each antenna port to help the reception operation of the user equipment.

[PDCCH: TCI status related]

Specifically, the TCI state combinations applicable to the PDCCH DMRS antenna port are shown in Table 15 below. The fourth row in Table 15 is the combination assumed by the user equipment before RRC configuration, and configuration after RRC is not possible.

[Table 15]

| Valid TCI state Configuration | DL RS 1 | qcl- Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

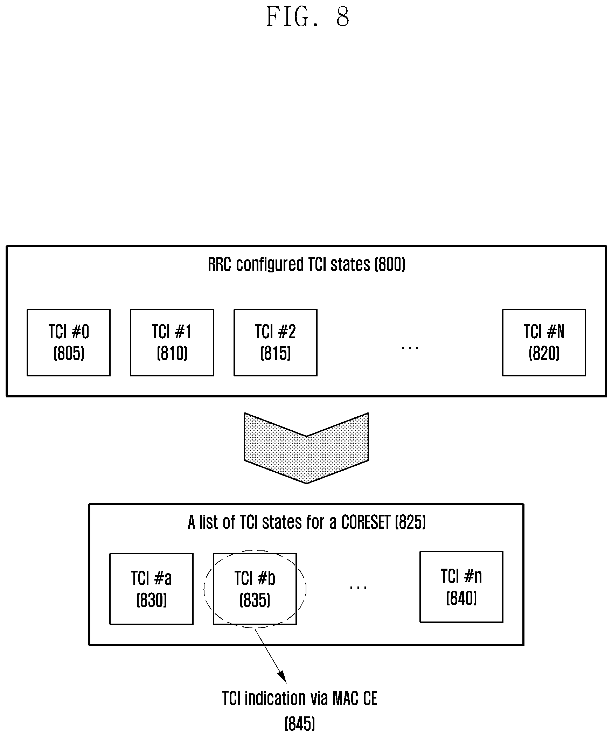

The NR supports a hierarchical signaling method, as illustrated in FIG. 8, for dynamic allocation of PDCCH beams. With reference to FIG. 8, the base station may configure N TCI states 805, 810, 815, ..., 820 to the user equipment through RRC signaling 800, some of which may be configured as TCI states for CORESET 825. The base station may then indicate one of the TCI states 830, 835, and 840 for CORESET to the user equipment through MAC CE signaling 845. The user equipment then receives a PDCCH on the basis of beam information that includes the TCI state indicated by the MAC CE signaling.

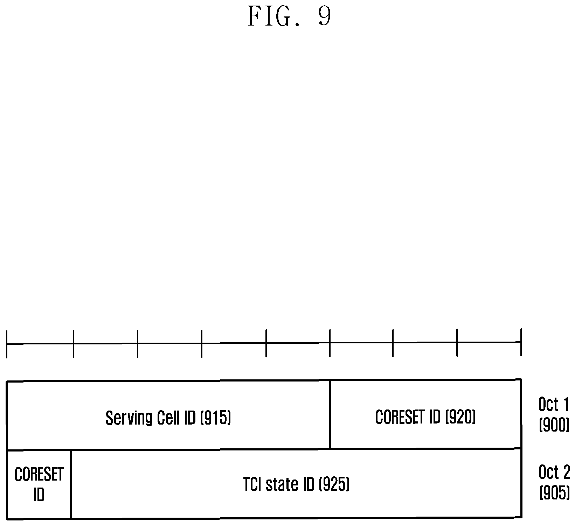

FIG. 9 is a diagram illustrating a TCI indication MAC CE signaling structure for the PDCCH DMRS. With reference to FIG. 9, the TCI indication MAC CE signaling for the PDCCH DMRS consists of 2 bytes (16 bits) and includes a 5-bit serving cell ID 915, a 4-bit CORESET ID 920, a 7-bit TCI state ID 925.

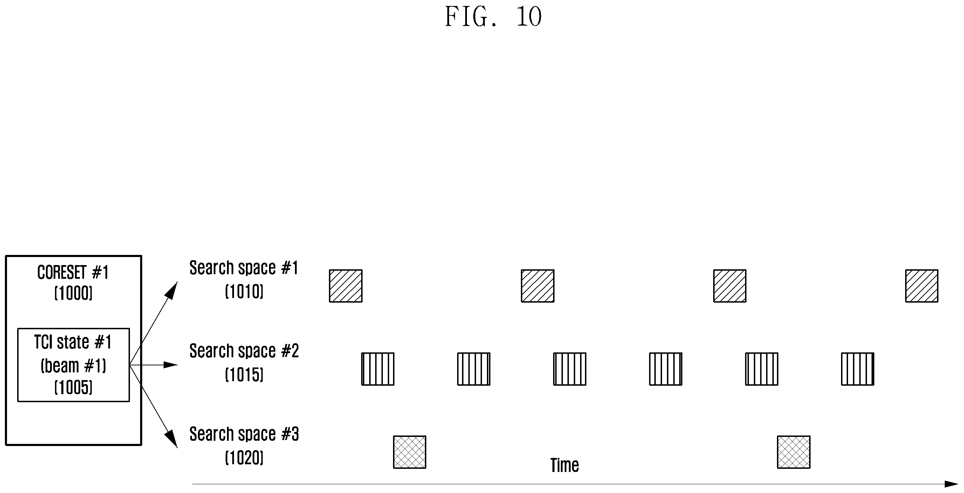

FIG. 10 is a diagram illustrating an example of beam configurations of a control resource set (CORESET) and search space according to the above description. With reference to FIG. 10, the base station may indicate one of the TCI state lists included in the CORESET 1000 configuration through MAC CE signaling 1005. Afterwards, until a different TCI state is subsequently indicated to that CORESET through another MAC CE signaling, the user equipment considers that the same QCL information (beam #1) 1005 applies to all of the one or more search spaces 1010, 1015, and 1020 associated with the CORESET. The above-described PDCCH beam allocation method has the disadvantage that it is difficult to indicate a beam change faster than the MAC CE signaling delay, and also has the disadvantage that the same beam is applied to all of the CORESETs regardless of the search space features, which makes it difficult to operate flexible PDCCH beams. The following embodiments of the present invention provide a more flexible PDCCH beam configuration and operation method. Hereinafter, in describing the embodiments of the present invention below, several distinct examples are provided for ease of explanation, but they are not mutually exclusive and may be combined with each other as appropriate depending on the situation.

The base station may configure one or more TCI states for a specific control area to the user equipment and may activate one of the configured TCI states through the MAC CE activation command. For example, if control area #1 has {TCI state#0, TCI state#1, TCI state#2} configured as the TCI state for control area #1, the base station may transmit a command to the user equipment through MAC CE to enable the user equipment to assume TCI state#0 as the TCI state for control area #1. On the basis of the activation command for the TCI state received by the MAC CE, the user equipment may correctly receive DMRS for the corresponding control area on the basis of the QCL information in the activated TCI state.

For the control area (control area #0) with index configured to 0, if the user equipment does not receive a MAC CE activation command for the TCI state of control area #0, the user equipment may assume that the DMRS transmitted from control area #0 is QCL with the SS/PBCH block identified in the initial access process or in the non-contention based random access process that is not triggered by the PDCCH command.

For a control area (control area #X) with an index configured to a value other than 0, if the user equipment has not received a TCI state for control area #X, or if it has received one or more TCI states but has not received a MAC CE activation command to activate one of them, the user equipment may assume that it is QCL with the SS/PBCH block identified during the initial connection process for DMRS transmitted from control area #X.

[PDCCH: QCL prioritization rule related]

In the following, the QCL priority determination operation for PDCCH will be described in detail.

If the user equipment operates in single cell or intra-band carrier aggregation and multiple control resource sets within the activated bandwidth part of a single or multiple cells overlap in time with the same or different QCL-TypeD attributes in a particular PDCCH monitoring interval, the user equipment may select a particular control resource set according to the QCL prioritization operation and monitor the control resource sets with the same QCL-TypeD attributes as the corresponding control resource set. In other words, when multiple control resource sets overlap in time, only one QCL-TypeD attribute can be received. In this case, the criteria for determining QCL priority may be as follows.

- Criterion 1. Within the cell corresponding to the lowest index of the cells including the common search space, the control resource set associated with the lowest indexed common search space.

- Criterion 2. Within the cell corresponding to the lowest index of the cells including the UE-specific search space, the control resource set associated with the lowest indexed UE-specific search space.

As described above, for each of the above criteria, the next criterion shall be applied if the corresponding criterion is not met. For example, if control resource sets overlap in time in a particular PDCCH monitoring interval, and if all control resource sets are connected to a UE-specific search interval and not to a common search interval, i.e., if criterion 1 is not met, the user equipment may omit applying criterion 1 and apply criterion 2.

When selecting the control resource set according to the criteria described above, the user equipment may additionally consider two points regarding the QCL information configured in the control resource set as follows. First, if control resource set 1 has CSI-RS 1 as a reference signal with a QCL-TypeD relationship, the reference signal with which this CSI-RS 1 has a QCL-TypeD relationship is SSB 1, and another control resource set 2 has a reference signal with which a QCL-TypeD relationship is SSB 1, the user equipment may consider that these two control resource sets 1 and 2 have different QCL-TypeD features. Secondly, if control resource set 1 has CSI-RS 1 configured in cell 1 as the reference signal with QCL-TypeD relationship, the reference signal with which CSI-RS 1 has QCL-TypeD relationship is SSB 1, control resource set 2 has CSI-RS 2 configured in cell 2 as the reference signal with QCL-TypeD relationship, and the reference signal with which CSI-RS 2 has QCL-TypeD relationship is the same SSB 1, the user equipment may consider the two control resource sets to have the same QCL-TypeD features.

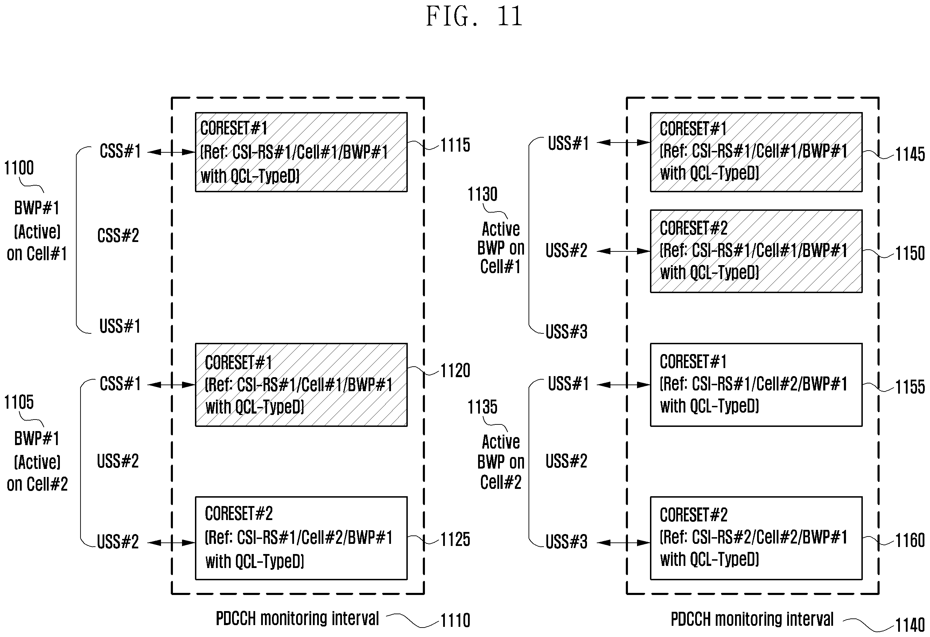

FIG. 11 is a diagram illustrating a method for a user equipment to select a set of control resources that can be received in consideration of priority when receiving a downlink control channel in a wireless communication system according to an embodiment of the present disclosure. For example, the user equipment may be configured to receive multiple control resource sets (CORESET) that overlap in time in a specific PDCCH monitoring interval 1110, and these multiple control resource sets may be connected to a common search space (CSS) or a UE-specific search space (USS) for multiple cells. Within the corresponding PDCCH monitoring interval, there may be a first control resource set 1115 associated with the first common search space within the first bandwidth part 1100 of cell 1, and there may be a first control resource set 1120 associated with the first common search space and a second control resource set 1125 associated with the second UE-specific search space within the first bandwidth part 1105 of cell 2. The control resource sets 1115 and 1120 may have a relationship of QCL-TypeD with the CSI-RS resource configured in the first bandwidth part of cell 1, and the control resource set 1125 may have a relationship of QCL-TypeD with the CSI-RS resource configured in the first bandwidth part of cell 2. Therefore, applying criterion 1 for the corresponding PDCCH monitoring interval 1110 allows the user equipment to receive all other control resource sets having the same QCL-TypeD reference signal as control resource set 1115. Thus, the user equipment may receive control resource sets 1115 and 1120 in the corresponding PDCCH monitoring interval 1110. In another example, the user equipment may be configured to receive a plurality of temporally overlapping control resource sets in a specific PDCCH monitoring interval 1140, wherein the plurality of control resource sets may be associated with a common search space or a UE-specific search space for the plurality of cells. Within the corresponding PDCCH monitoring interval, there may be a first control resource set 1145 associated with the first UE-specific search space and a second control resource set 1150 associated with the second UE-specific search space within the first bandwidth part 1130 of the first cell, and there may be a first control resource set 1155 associated with the first UE-specific search space and a second control resource set 1160 associated with the third UE-specific search space within the first bandwidth part 1135 of the second cell. The control resource sets 1145 and 1150 may have a QCL-TypeD relationship with the first CSI-RS resource set within the first bandwidth part of the first cell, the control resource set 1155 may have a QCL-TypeD relationship with the first CSI-RS resource configured within the first bandwidth part of the second cell, and the control resource set 1160 may have a QCL-TypeD relationship with the second CSI-RS resource configured within the first bandwidth part of the second cell. However, applying criterion 1 to the corresponding PDCCH monitoring interval 1140 shows that there is no common search interval, so the next criterion, criterion 2, may be applied. Applying criterion 2 for the corresponding PDCCH monitoring interval 1140 allows the user equipment to receive all other control resource sets that have the same QCL-TypeD reference signal as the control resource set 1145. Therefore, the user equipment may receive control resource sets 1145 and 1150 in the corresponding PDCCH monitoring interval 1140.

[PDSCH: Frequency resource allocation related]

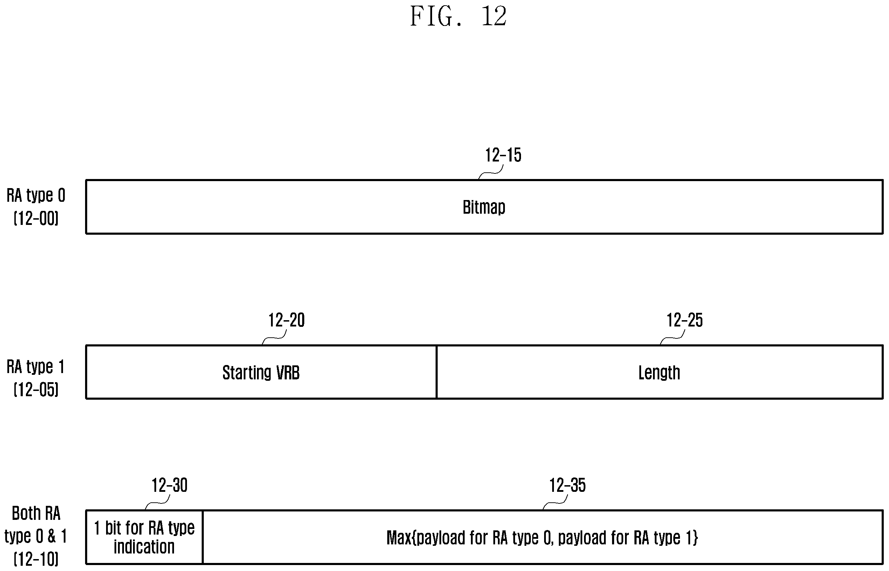

FIG. 12 is a diagram illustrating an example of frequency axis resource allocation of a physical downlink shared channel (PDSCH) in a wireless communication system according to an embodiment of the present disclosure.

FIG. 12 is a diagram illustrating three frequency axis resource allocation methods, type 0 12-00, type 1 12-05, and dynamic switch 12-10, that may be configured through the higher layer in an NR wireless communication system.

With reference to FIG. 12, if the user equipment is configured to use only resource type 0 through higher layer signaling 12-00, some of the downlink control information (DCI) that allocates a PDSCH to the corresponding user equipment includes a bitmap consisting of bits of NRBGs. The conditions for this will be described later. In this case, NRBG means the number of resource block groups (RBGs) determined by the BWP size assigned by the BWP indicator and the higher layer parameter rbg-Size as shown in Table 16 below, and data is transmitted to the RBGs indicated by 1 in the bitmap.

[Table 16]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

If the user equipment is configured to use only resource type 1 through higher layer signaling 12-05, some DCIs that allocate the PDSCH to the user equipment include frequency axis resource allocation information consisting of

$$\lceil \log_2 (N_{RB}^{DL,BWP} (N_{RB}^{DL,BWP} +1)/2 \rceil$$ bits. The conditions for this will be explained later. Through this, the base station may configure the starting VRB 12-20 and the length 12-25 of the frequency axis resources continuously allocated from it.

If the user equipment is configured to use both resource type 0 and resource type 1 through higher layer signaling 12-10, some DCIs that allocate PDSCHs to the corresponding user equipment include frequency axis resource allocation information consisting of bits 12-35 of the greater of payload 12-15 for configuring resource type 0 and payloads 12-20 and 12-25 for configuring resource type 1. The conditions for this will be described later. In this case, one bit may be added to the most significant bit (MSB) of the frequency axis resource allocation information in the DCI, and if the bit has a value of '0', it indicates that resource type 0 is used, and if the bit has a value of '1', it indicates that resource type 1 is used.

[PDSCH/PUSCH: Time resource allocation related]

In the following, a time domain resource allocation method for data channels in the 5G wireless communication system will be described.

The base station may configure a table of time domain resource allocation information for the Physical Downlink Shared Channel (PDSCH) and Physical Uplink Shared Channel (PUSCH) to the user equipment for higher layer signaling (e.g., RRC signaling). A table with a maximum of maxNrofDL-Allocations=16 entries may be configured for PDSCH, and a table with a maximum of maxNrofUL-Allocations=16 entries may be configured for PUSCH. Time domain resource allocation information may include, for example, PDCCH-to-PDSCH slot timing (corresponding to the time interval in slots between when a PDCCH is received and when the PDSCH scheduled by the received PDCCH is transmitted, denoted as K0) or PDCCH-to-PUSCH slot timing (corresponding to the time interval in slots between when a PDCCH is received and when the PUSCH scheduled by the received PDCCH is transmitted, denoted as K2), information about the position and length of the start symbol within the slot for which the PDSCH or PUSCH is scheduled, and the mapping type of the PDSCH or PUSCH. For example, information such as [Table 17] and [Table 18] below may be communicated from the base station to the user equipment.

【Table 17】

---

*PDSCH-TimeDomainResourceAllocationList* **information element**

PDSCH-TimeDomainResourceAllocationList ::=  SEQUENCE (SIZE(1..maxNrofDL-Allocations)) OF PDSCH-TimeDomainResourceAllocation

PDSCH-TimeDomainResourceAllocation ::=    SEQUENCE {

k0                     INTEGER(0..32)                    OPTIONAL,  -- Need S

mappingType            ENUMERATED {typeA, typeB},

startSymbolAndLength           INTEGER (0..127)

}

---

【Table 18】

---

*PUSCH-TimeDomainResourceAllocation* **information element**

PUSCH-TimeDomainResourceAllocationList ::=        SEQUENCE         (SIZE(1..maxNrofUL-Allocations)) OF PUSCH-TimeDomainResourceAllocation

PUSCH-TimeDomainResourceAllocation ::=    SEQUENCE {

k2                     INTEGER(0..32)       OPTIONAL,  -- Need S

---

mappingType            ENUMERATED {typeA, typeB},

startSymbolAndLength           INTEGER (0..127)

}

---

The base station may notify the user equipment through L1 signaling (e.g., a DCI) of one of the entries in the table for the time domain resource allocation information (e.g., as indicated by the 'time domain resource allocation' field in the DCI). The user equipment may obtain the time domain resource allocation information for PDSCH or PUSCH on the basis of the DCI received from the base station.

In the following, a method of allocating frequency domain resources for data channels in a 5G wireless communication system will be described.

The 5G wireless communication system supports two types, resource allocation type 0 and resource allocation type 1, as a method to indicate frequency domain resource allocation information for the Physical Downlink Shared Channel (PDSCH) and Physical Uplink Shared Channel (PUSCH).

**Resource allocation type 0**

- RB allocation information may be notified from the base station to the user equipment in the form of a bitmap for Resource Block Group (RBG). In this case, the RBG may consist of a set of consecutive Virtual RBs (VRBs), and the size P of the RBG may be determined on the basis of the value configured by the higher layer parameter (*rbg-Size*) and the size value of the bandwidth part defined by the table below.

[Table 19]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

- The total number of RBGs ($N_{RBG}$) of bandwidth part i of size $N_{BWP,i}^{size}$ may be defined as follows.

■

$$N_{RBG} = \left\lceil \left( N_{BWP,i}^{size} + \left( N_{BWP,i}^{start} \bmod P \right) \right) / P \right\rceil ,$$

where

   ♦ the size of the first RBG is

$$RBG_0^{size} = P - N_{BWP,i}^{start} \bmod P ,$$

   ♦ the size of last RBG is

$$RBG_{last}^{size} = \left( N_{BWP,i}^{start} + N_{BWP,i}^{size} \right) \bmod P$$

   if

$$\left( N_{BWP,i}^{start} + N_{BWP,i}^{size} \right) \bmod P > 0$$

   and *P* otherwise,
   ♦ the size of all other RBGs is *P*.

- Each bit of $N_{REG}$ bit-sized bitmap may correspond to a respective RBG. The RBGs may be indexed in order of increasing frequency, starting at the lowest frequency position of the bandwidth part. For the $N_{RBG}$ RBGs within a bandwidth part, RBG#0 through RBG#($N_{RBG}$-1) may be mapped from MSB to LSB of the RBG bitmap. The user equipment may determine that if the value of a particular bit in the bitmap is 1, the RBG corresponding to that bit value is allocated, and if the value of a particular bit in the bitmap is 0, the user equipment may determine that the RBG corresponding to that bit value is not allocated.

## Resource Allocation Type 1

- RB allocation information may be notified from the base station to the user equipment as information about the starting position and length of consecutively allocated VRBs. In this case, interleaving or non-interleaving may be further applied to the consecutively allocated VRBs. The resource allocation field of the resource allocation type 1 may consist of a Resource Indication Value (RIV), wherein the RIV may consist of a starting point ($RB_{start}$) of the VRB and a length ($L_{REs}$) of the consecutively allocated RBs. More specifically, the RIV within a bandwidth part of a size $N^{size}_{BWP}$ may be defined as follows.

- if $(L_{RBs} - 1) \leq \left\lfloor N^{size}_{BWP} / 2 \right\rfloor$ then

  ◆ $RIV = N^{size}_{BWP} (L_{RBs} - 1) + RB_{start}$

- else

  ◆ $RIV = N^{size}_{BWP} (N^{size}_{BWP} - L_{RBs} + 1) + (N^{size}_{BWP} - 1 - RB_{start})$

- where $L_{RBs} \geq 1$ and shall not exceed $N^{size}_{BWP} - RB_{start}$.

The base station may configure the resource allocation type through higher layer signaling to the user equipment (e.g., the higher layer parameter resourceAllocation may be configured to one of the values, resourceAllocationType0 or resourceAllocationType1 or dynamicSwitch). If the user equipment has both resource allocation type 0 and 1 configured (or equivalently, if the higher layer parameter resourceAllocation is configured to dynamicSwitch), the base station may indicate whether the bit corresponding to the Most Significant Bit (MSB) of the field indicating the resource allocation in the DCI format indicating scheduling is resource allocation type 0 or resource allocation type 1. In addition, on the basis of the indicated resource allocation type, the resource allocation information may be indicated through the remaining bits except the bit corresponding to the MSB, and the user equipment may interpret the resource allocation field information in the DCI field on the basis of this. If the user equipment has received either resource allocation type 0 or resource allocation type 1 (or equivalently, if the higher layer parameter resourceAllocation has been configured to one of the values, resourceAllocationType0 or resourceAllocationType1), then the resource allocation information in the field indicating resource allocation in the DCI format indicating scheduling may be indicated on the basis of the indicated resource allocation type, and the user equipment may interpret the resource allocation field information in the DCI field on the basis of the indicated resource allocation type.

[PDSCH: TCI state activation MAC-CE]

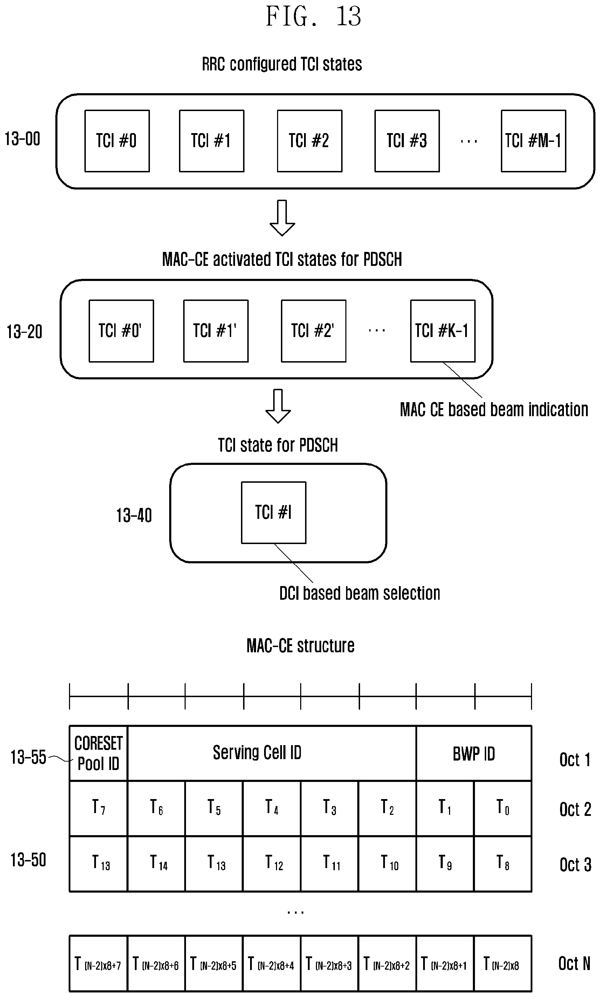

Next, we will look at the beam configuration method for PDSCH. FIG. 13 illustrates the process for beam configuration and activation of PDSCH. The list of TCI states for the PDSCH may be indicated through a higher layer list such as the RRC 13-00. The list of TCI states may be indicated, for example, as tci-StatesToAddModList and/or tci-StatesToReleaseList in the PDSCH-Config IE for each BWP. Next, some of the above list of TCI states may be activated through MAC-CE 13-20. Next, some of the TCI states activated through MAC-CE may be selected through DCI 13-40. The maximum number of activated TCI states may be determined by the capability reported by the user equipment. 13-50 shows an example of a MAC-CE structure for PDSCH TCI state activation/deactivation.

The meaning of each field in the MAC CE and the values that may be configured for each field are as follows.

- Serving Cell ID: This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;
- BWP ID (Bandwidth Part Identity): This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;
- Ti(TCI state identity): If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e., the first TCI State with $T_i$ field set to 1 shall be mapped to the codepoint value 0, second TCI State with Ti field set to 1 shall be mapped to the codepoint value 1 and so on. The maximum number of activated TCI states is 8;

- CORESET Pool ID (CORESET Pool ID identity) 13-55: This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE.

[PUSCH: Transmission method related]

Next, the scheduling method of PUSCH transmission will be described. PUSCH transmission may be dynamically scheduled by the UL grant in DCI or operated by configured grant Type 1 or Type 2. Dynamic scheduling instructions for PUSCH transmission are possible in DCI format 0_0 or 0_1.

Configured grant Type 1 PUSCH transmissions may be configured semi-statically by the receipt of a configuredGrantConfig including the rrc-ConfiguredUplinkGrant of [Table 20] through higher layer signaling, without the receipt of a UL grant through DCI. Configured grant Type 2 PUSCH transmissions may be scheduled semi-persistently by the UL grant in the DCI, following the receipt of a configuredGrantConfig that does not include the rrc-ConfiguredUplinkGrant of [Table 20] through higher layer signaling. When the PUSCH transmission is operated by a configured grant, the parameters applied to the PUSCH transmission may be applied through the configuredGrantConfig in [Table 20] that is received through higher layer signaling, except dataScramblingIdentityPUSCH, txConfig, codebookSubset, maxRank, and scaling of UCI-OnPUSCH, which are provided by the pusch-Config in [Table 21] that is higher layer signaling. If the user equipment has been provided a transformPrecoder in configuredGrantConfig in [Table 20] through higher layer signaling, the user equipment shall apply tp-pi2BPSK in pusch-Config in [Table 21] for PUSCH transmissions operated by the configured grant.

【Table 20】

```
                                              sym6,  sym1x12,  sym2x12,
sym4x12,  sym5x12,  sym8x12,  sym10x12,  sym16x12,  sym20x12,  sym32x12,
                                              sym40x12,  sym64x12,
sym80x12,  sym128x12,  sym160x12,  sym256x12,  sym320x12,  sym512x12,  sym640x12,
                                              sym1280x12,  sym2560x12
    },
    configuredGrantTimer                    INTEGER (1..64)
OPTIONAL,    -- Need R
    rrc-ConfiguredUplinkGrant               SEQUENCE {
        timeDomainOffset                    INTEGER (0..5119),
        timeDomainAllocation                INTEGER  (0..15),
        frequencyDomainAllocation           BIT STRING (SIZE(18)),
        antennaPort                         INTEGER (0..31),
        dmrs-SeqInitialization              INTEGER (0..1)
OPTIONAL,    -- Need R
        precodingAndNumberOfLayers          INTEGER (0..63),
        srs-ResourceIndicator               INTEGER (0..15)
OPTIONAL,    -- Need R
        mcsAndTBS                           INTEGER (0..31),
        frequencyHoppingOffset              INTEGER (1..
maxNrofPhysicalResourceBlocks-1)               OPTIONAL,    -- Need R
        pathlossReferenceIndex              INTEGER (0..maxNrofPUSCH-
PathlossReferenceRSs-1),
        ...
    }
OPTIONAL,    -- Need R
    ...
}
```

Next, the PUSCH transmission method will be described. The DMRS antenna port for PUSCH transmission is the same as the antenna port for SRS transmission. PUSCH transmission may follow a codebook-based transmission method and a non-codebook-based transmission method, respectively, depending on whether the value of txConfig in pusch-Config of [Table 21], which is higher layer signaling, is 'codebook' or 'nonCodebook'.

As described above, PUSCH transmissions may be dynamically scheduled through DCI format 0_0 or 0_1 and may be semi-statically configured by a configured grant. If the user equipment is indicated to schedule a PUSCH transmission through DCI format 0_0, the user equipment performs beam configuration for the PUSCH transmission using the pucch-spatialRelationInfoID corresponding to the UE-specific PUCCH resource corresponding to the minimum ID within the activated uplink BWP in the serving cell, and, in this case, the PUSCH transmission is on the basis of a single antenna port. The user equipment does not expect scheduling for PUSCH transmissions through DCI format 0_0 within a BWP for which a PUCCH resource including pucch-spatialRelationInfo has not been configured. If the user equipment has not configured txConfig in pusch-Config in [Table 21], the user equipment does not expect to be scheduled in DCI format

0_1.

【Table 21】

```
PUSCH-Config ::=                        SEQUENCE {
        dataScramblingIdentityPUSCH     INTEGER (0..1023)
OPTIONAL,    -- Need S
        txConfig                        ENUMERATED {codebook,
nonCodebook}                             OPTIONAL,    -- Need S
        dmrs-UplinkForPUSCH-MappingTypeA SetupRelease { DMRS-
UplinkConfig }                               OPTIONAL,    -- Need M
        dmrs-UplinkForPUSCH-MappingTypeB SetupRelease { DMRS-
UplinkConfig }                               OPTIONAL,    -- Need M
        pusch-PowerControl              PUSCH-PowerControl
OPTIONAL,    -- Need M
        frequencyHopping                ENUMERATED {intraSlot,
interSlot}                               OPTIONAL,    -- Need S
        frequencyHoppingOffsetLists     SEQUENCE (SIZE (1..4)) OF
INTEGER (1.. maxNrofPhysicalResourceBlocks-1)


OPTIONAL,    -- Need M
        resourceAllocation              ENUMERATED
{ resourceAllocationType0, resourceAllocationType1, dynamicSwitch},
        pusch-TimeDomainAllocationList  SetupRelease { PUSCH-
TimeDomainResourceAllocationList }          OPTIONAL,    -- Need M
        pusch-AggregationFactor         ENUMERATED { n2, n4, n8 }
OPTIONAL,    -- Need S
        mcs-Table                       ENUMERATED {qam256, qam64LowSE}
OPTIONAL,    -- Need S
        mcs-TableTransformPrecoder      ENUMERATED {qam256, qam64LowSE}
OPTIONAL,    -- Need S
        transformPrecoder               ENUMERATED {enabled, disabled}
```

```
OPTIONAL,    -- Need S

    codebookSubset                    ENUMERATED

{fullyAndPartialAndNonCoherent, partialAndNonCoherent,nonCoherent}


OPTIONAL, -- Cond codebookBased

    maxRank                           INTEGER (1..4)

OPTIONAL, -- Cond codebookBased

    rbg-Size                          ENUMERATED { config2}

OPTIONAL, -- Need S

    uci-OnPUSCH                       SetupRelease { UCI-OnPUSCH}

OPTIONAL, -- Need M

    tp-pi2BPSK                        ENUMERATED {enabled}

OPTIONAL, -- Need S

    ...

}
```

Next, codebook-based PUSCH transmission is described. Codebook-based PUSCH transmissions may be dynamically scheduled through DCI format 0_0 or 0_1, or they may be operated semi-statically by the configured grant. When the codebook-based PUSCH is dynamically scheduled by DCI format 0_1 or semi-statically configured by the configured grant, the user equipment determines the precoder for PUSCH transmission on the basis of the SRS Resource Indicator (SRI), Transmission Precoding Matrix Indicator (TPMI), and transmission rank (number of PUSCH transmission layers).

In this case, the SRI may be given through the field, SRS resource indicator, in the DCI or configured through the higher layer signaling, srs-ResourceIndicator. The user equipment may configure at least one SRS resource in a codebook-based PUSCH transmission and may configure up to two. If the user equipment receives an SRI through DCI, the SRS resource indicated by the SRI means the SRS resource corresponding to the SRI among the SRS resources transmitted earlier than the PDCCH including the SRI. In addition, the TPMI and transmission rank may be given through the field, precoding information and number of layers, in the DCI, or may be configured through the higher layer signaling precodingAndNumberOfLayers. The TPMI is used to indicate which precoder is applied to the PUSCH transmission. If the user equipment has one SRS resource configured, the TPMI is used to indicate the precoder to be applied on the one SRS resource configured. If the user equipment is configured with multiple SRS resources, the TPMI is used to indicate the precoder to be applied in the SRS resource indicated through SRI.

The precoder to be used for PUSCH transmission is selected from the uplink codebook with the number of antenna ports equal to the value of nrofSRS-Ports in the higher layer signaling SRS-Config. In a codebook-based PUSCH transmission, the user equipment determines the codebook subset on the basis of the TPMI and codebookSubset in the higher layer signaling pusch-Config. The codebookSubset in the higher layer signaling, pusch-Config, may be configured to one of 'fullyAndPartialAndNonCoherent', 'partialAndNonCoherent', or 'nonCoherent' on the basis of the UE capability that the user equipment reports to the base station. If the user equipment reports 'partialAndNonCoherent' as the UE capability, the user equipment does not expect the value of the higher layer signaling codebookSubset to be configured to 'fullyAndPartialAndNonCoherent'. In addition, if the user equipment reports 'nonCoherent' as UE capability, the user equipment does not expect the value of the higher layer signaling codebookSubset to be configured to 'fullyAndPartialAndNonCoherent' or 'partialAndNonCoherent'. If nrofSRS-Ports in the higher layer signaling, SRS-ResourceSet, points to two SRS antenna ports, the user equipment does not expect the value of the higher layer signaling, codebookSubset, to be configured to 'partialAndNonCoherent'.

The user equipment may receive one SRS resource set with the value of usage in the higher layer signaling, SRS-ResourceSet, configured to 'codebook', and one SRS resource within that SRS resource set may be indicated through SRI. If multiple SRS resources are configured within an SRS resource set with the value of usage in the higher layer signaling, SRS-ResourceSet, configured to 'codebook', the user equipment expects the value of nrofSRS-Ports in the higher layer signaling, SRS-Resource, to be configured to the same value for all SRS resources.

The user equipment transmits to the base station one or more SRS resources included in the SRS resource set with the value of usage configured to 'codebook' according to the higher layer signaling, and the base station selects one of the SRS resources transmitted by the user equipment and indicates the user equipment to perform a PUSCH transmission using the transmission beam information of the SRS resource. In this case, in the codebook-based PUSCH transmission, the SRI is used as the information for selecting the index of the one SRS resource, and the SRI may be included in the DCI. Additionally, the base station includes in the DCI information indicating the TPMI and rank that the user equipment shall use for the PUSCH transmission. The user equipment performs the PUSCH transmission using the SRS resource indicated by the SRI, applying the precoder indicated by the rank and the TPMI indicated by the TPMI on the basis of the transmission beam of the SRS resource.

Next, non-codebook based PUSCH transmission is described. Non-codebook based PUSCH transmission may be dynamically scheduled through DCI format 0_0 or 0_1 and may be operated semi-statically by the configured grant. If at least one SRS resource is configured in the SRS resource set with the value of usage in the higher layer signaling, SRS-ResourceSet, configured to 'nonCodebook', the user equipment may receive scheduled non-codebook based PUSCH transmissions through DCI format 0_1.

The user equipment may receive, through higher layer signaling, the configuration of one NZP CSI-RS resource (non-zero power CSI-RS) associated with the SRS resource set with the value of usage in the SRS-ResourceSet configured to 'nonCodebook'. The user equipment may perform the calculation for the precoder for SRS transmission by measuring the NZP CSI-RS resource associated with the SRS resource set. If the difference between the last received symbol of the aperiodic NZP CSI-RS resource associated with the SRS resource set and the first symbol of the aperiodic SRS transmission from the user equipment is less than 42 symbols, the user equipment does not expect the information about the precoder for SRS transmission to be updated.

If the value of resource Type in the higher layer signaling, SRS-ResourceSet, is configured to 'aperiodic', the associated NZP CSI-RS is indicated to SRS request, which is a field in DCI format 0_1 or 1_1. In this case, if the associated NZP CSI-RS resource is an aperiodic NZP CSI-RS resource and the value of the SRS request field in DCI format 0_1 or 1_1 is not '00', it may indicate the existence of an NZP CSI-RS associated with the SRS resource set. In this case, the corresponding DCI shall not indicate cross carrier or cross BWP scheduling. In addition, if the value of the SRS request indicates the existence of an NZP CSI-RS, the corresponding NZP CSI-RS shall be located in the slot in which the PDCCH including the SRS request field was transmitted. In this case, the TCI states configured on the scheduled subcarrier shall not be configured to QCL-TypeD.

If a periodic or semi-persistent SRS resource set has been established, the associated NZP CSI-RS may be indicated through the associatedCSI-RS in the higher layer signaling, SRS-ResourceSet. For non-codebook based transmission, the user equipment does not expect the spatialRelationInfo, the higher layer signaling for the SRS resource, and the associatedCSI-RS in the higher layer signaling, SRS-ResourceSet, to be configured together.

The user equipment may determine the precoder and transmission rank to be applied to the PUSCH transmission on the basis of the SRI indicated by the base station when multiple SRS resources are configured. In this case, the SRI may be indicated through the SRS resource indicator field in the DCI or configured through the higher layer signaling, srs-ResourceIndicator. As with the codebook-based PUSCH transmission described above, when a user equipment receives an SRI through a DCI, the SRS resource to which the SRI refers is the SRS resource corresponding to the SRI, among the SRS resources transmitted prior to the PDCCH including the SRI. The user equipment may use one or multiple SRS resources for SRS transmission, and the maximum number of SRS resources and the maximum number of simultaneous transmissions on the same symbol within one SRS resource set are determined by the UE capability that the user equipment reports to the base station. In this case, the SRS resources transmitted simultaneously by the user equipment occupy the same RB. The user equipment configures one SRS port for each SRS resource. Only one SRS resource configured with the value of usage in the higher layer signaling, SRS-ResourceSet, configured to 'nonCodebook' may be configured, and up to four SRS resources for non-codebook based PUSCH transmission may be configured.

The base station transmits one NZP-CSI-RS associated with the SRS resource set to the user equipment, and the user equipment calculates the precoder to be used when transmitting one or more SRS resources in the SRS resource set on the basis of the measurement result when receiving the corresponding NZP-CSI-RS. The user equipment applies the above calculated precoder when transmitting one or more SRS resources in the SRS resource set whose usage is configured to 'nonCodebook' to the base station, and the base station selects one or more SRS resources among the one or more SRS resources received. In this case, in the non-codebook based PUSCH transmission, the SRI represents an index that can represent a combination of the one or more SRS resources, and the SRI is included in the DCI. In this case, the number of SRS resources indicated by the SRI transmitted by the base station may be the number of transmission layers of the PUSCH, and the user equipment transmits the PUSCH by applying the precoder applied to the SRS resource transmission to each layer.

[PUSCH: Preparation procedure time]

Next, the PUSCH preparation procedure time is described. When the base station schedules the user equipment to transmit PUSCH using DCI format 0_0 or DCI format 0_1, the user equipment may need PUSCH preparation procedure time to apply the transmission method (transmission precoding method of SRS resource, number of transmission layers, spatial domain transmission filter) indicated through DCI to transmit PUSCH. NR has defined the PUSCH preparation procedure time in consideration of this. The PUSCH preparation procedure time of a user equipment may be on the basis of [Equation 2] below.

【Equation 2】

$$T_{proc,2} = max(( N_2 + d_{2,1} + d_2)( 2048 + 144 ) \kappa 2^{-\mu} T_c + T_{ext} + T_{switch}, d_{2,2} )$$

In the above-described $T_{proc,2}$, each variable may have the following meaning.

$N_2$: Number of symbols determined by UE processing capability 1 or 2 and numerology $\mu$, depending on the capability of the user equipment. Depending on the capability reporting of the user equipment, it may have a value of [Table 22] if it is reported as UE processing capability 1, or a value of [Table 23] if it is reported as UE processing capability 2 and it is configured through higher layer signaling that UE processing capability 2 is available.

[Table 22]

| $\mu$ | PUSCH preparation time $N_2$ [symbols] |
|---|---|
| 0 | 10 |
| 1 | 12 |
| 2 | 23 |
| 3 | 36 |

[Table 23]

| $\mu$ | PUSCH preparation time $N_2$ [symbols] |
|---|---|
| 0 | 5 |
| 1 | 5.5 |
| 2 | 11 for frequency range 1 |

- $d_{2,1}$: The number of symbols configured to 0 if all resource elements of the first OFDM symbol of PUSCH transmission are configured to consist of DM-RS only, and 1 otherwise.
- $\kappa$: 64
- $\mu$: Among $\mu_{DL}$ or $\mu_{UL}$, $T_{proc,2}$ follows the larger value. $\mu_{DL}$ refers to the numerology of the downlink where PDCCH including the DCI scheduling PUSCH is transmitted, and $\mu_{UL}$ refers to the numerology of the uplink where PUSCH is transmitted.
- $T_c$: it has $1/(\Delta f_{max} \cdot N_f)$, $\Delta f_{max}$=480 $\cdot$ $10^3 Hz$, $N_f$=4096.
- $d_{2,2}$: If the DCI scheduling PUSCH indicates BWP switching, the BWP switching time is followed. Otherwise, it has 0.
- $d_2$: When PUCCH and the OFDM symbols of the PUSCH with a high priority index and the PUCCH with a low priority index overlap in time, the $d_2$ value of the PUSCH with a high priority index is used. Otherwise, $d_2$ is 0.
- $T_{ext}$: If the user equipment uses the shared spectrum channel access method, the user equipment may calculate $T_{ext}$ and apply it to the PUSCH preparation procedure time. Otherwise, $T_{ext}$ is assumed to be 0.
- $T_{switch}$: When the uplink switching interval is triggered, $T_{switch}$ is assumed to be the switching interval time. Otherwise, it is assumed to be 0.

The base station and the user equipment determines that the PUSCH preparation procedure time is insufficient if the first symbol of the PUSCH starts before the first uplink symbol initiated by the CP after $T_{proc,2}$ from the last symbol of the PDCCH including the DCI that scheduled the PUSCH, considering the time axis resource mapping information of the PUSCH scheduled through the DCI and the uplink-downlink timing advance (TA) impact. Otherwise, the base station and the user equipment determines that the PUSCH preparation procedure time is sufficient. The user equipment transmits the PUSCH only if the PUSCH preparation procedure time is sufficient and may ignore the DCI scheduling the PUSCH if the PUSCH preparation procedure time is insufficient.

Next, PUSCH repeat transmission is described. When a user equipment is scheduled for a PUSCH transmission with DCI format 0_1 in a PDCCH including a CRC scrambled with C-RNTI, MCS-C-RNTI, or CS-RNTI, and the user equipment configures a higher layer signaling, pusch-AggregationFactor, the same symbol allocation is applied in consecutive slots equal to the pusch-AggregationFactor, and the PUSCH transmission is limited to a single rank transmission. For example, the user equipment must repeat the same TB in as many consecutive slots as pusch-AggregationFactor, with the same symbol allocation for each slot. [Table 24] illustrates the redundancy version to be applied for PUSCH repeat transmissions for each slot. If the user equipment has scheduled PUSCH repeat transmissions in multiple slots in DCI format 0_1, and at least one of the symbols in the slots in which the PUSCH repeat transmissions are to occur is indicated as a downlink symbol according to the information in the higher layer signaling, tdd-UL-DL-ConfigurationCommon or tdd-UL-DL-ConfigurationDedicated, the user equipment does not perform PUSCH transmissions in the slot in which the symbol is located.

[Table 24]

| $rv_{id}$ indicated by the DCI scheduling the PUSCH | $rv_{id}$ to be applied to $n^{th}$ transmission occasion | | | |
|---|---|---|---|---|
| | $n$ mod 4 = 0 | $n$ mod 4 = 1 | $n$ mod 4 = 2 | $n$ mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

[PUSCH: Repeat transmission related]

In the following, repeat transmission of the uplink data channel in the 5G system will be described in detail. The 5G system supports two types of repeat transmission methods for the uplink data channel, PUSCH repetition type A and PUSCH repetition type B. The user equipment may be configured to either PUSCH repetition type A or B by higher layer signaling.

### PUSCH repetition type A

- As described above, within a slot, the symbol length of the uplink data channel and the position of the start symbol are determined by a time domain resource allocation method, and the base station may notify the user equipment of the number of repeat transmissions through higher layer signaling (e.g., RRC signaling) or L1 signaling (e.g., DCI).
- The user equipment may repeatedly transmit the same uplink data channel in consecutive slots of the repeat transmission interval identified on the basis of the length of the uplink data channel configured on the basis of the start symbol and the number of repeat transmissions. In this case, if a slot in the repeat transmission interval is configured as a downlink by the base station to the user equipment, or if at least one or more symbols of the uplink data channel configured by the user equipment are configured as a downlink, the user equipment omits the uplink data channel transmission in that slot or symbol, but counts the number of repeated transmissions of the uplink data channel.

### PUSCH repetition type B

- As described above, within a slot, the start symbol and length of the uplink data channel are determined by the time domain resource allocation method, and the base station may notify the user equipment of the number of repeat transmissions numberofrepetitions through higher layer signaling (e.g., RRC signaling) or L1 signaling (e.g., DCI).
- On the basis of the start symbol and length of the uplink data channel configured first, the nominal repetition of the uplink data channel is determined as follows. The slot at which the n-th nominal repetition starts is given by

$$K_s + \left\lfloor \frac{S + n \cdot L}{N_{symb}^{slot}} \right\rfloor$$

and the symbol starting at that slot is given by $\mathbf{mod}\left(S + n \cdot L, N_{symb}^{slot}\right)$. The slot at which the n-th nominal repetition ends is given by

$$K_s + \left\lfloor \frac{S + (n+1) \cdot L - 1}{N_{symb}^{slot}} \right\rfloor$$

and the symbol ending at that slot is given by

$$\mathbf{mod}\left(S + (n+1) \cdot L - 1, N_{symb}^{slot}\right)$$

. Here, n=0,..., numberofprepetitions-1, S represents the start symbol of the configured uplink data channel, and L represents the symbol length of the configured uplink data channel. $K_s$ represents the slot where PUSCH transmission starts and $N_{symb}^{slot}$ represents the number of symbols per slot.

- The user equipment may determine a specific OFDM symbol as an invalid symbol for PUSCH repetition type B in the following cases.

   1. The symbol configured for downlink by tdd-UL-DL-ConfigurationCo mmon or tdd-UL-DL-ConfigurationDedicated may be determined as an invalid symbol for PUSCH repetition type B.
   2. The symbols indicated by ssb-PositionsInBurst in SIB1 for SSB reception in unpaired spectrum (TDD spectrum) or ssb-PositionsInBurst in ServingCellConfigCommon for higher layer signaling may be determined as an invalid symbol for PUSCH repetition type B.
   3. The symbols indicated through pdcch-ConfigSIB 1 in the MIB to transmit a control resource set associated with a Type0-PDCCH CSS set in unpaired spectrum (TDD spectrum) may be determined as an invalid symbol for PUSCH repetition type B.
   4. In an unpaired spectrum (TDD spectrum), if the higher layer signaling numberOfInvalidSymbolsForDL-UL-Switching is configured, the symbols configured as downlinks by tdd-UL-DL-ConfigurationCommon or tdd-UL-DL-ConfigurationDedicated may be determined to be invalid for the number of symbols equal to numberOfInvalidSymbolsForDL-UL-Switching.

- Additionally, invalid symbols may be configured in a higher layer parameter (e.g., InvalidSymbolPattern). A higher layer parameter (e.g., InvalidSymbolPattern) may provide a symbol-level bitmap spanning one or two slots in which invalid symbols may be configured. In the bitmap, a 1 indicates an invalid symbol. Additionally, the periodicity and pattern of the bitmap may be configured through higher layer parameters (e.g., periodicityAndPattern). If a higher layer parameter (e.g., InvalidSymbolPattern) is configured and the InvalidSymbolPatternIndicator-ForDCIFormat0_1 or InvalidSymbolPatternIndicator-ForDCIFormat0_2 parameter indicates 1, the user equipment applies the invalid symbol pattern, and if the parameter indicates 0, the user equipment does not apply the invalid symbol pattern. If a higher layer parameter (e.g., InvalidSymbolPattern) is configured and the InvalidSymbolPatternIndicator-ForDCIFormat0_1 or InvalidSymbolPatternIndicator-ForDCIFormat0 2 parameters are not configured, the user equipment applies the invalid symbol pattern.

After the invalid symbol is determined, for each nominal repetition, the user equipment may consider symbols other than the invalid symbol as valid symbols. If at least one valid symbol is included in each nominal repetition, the nominal repetition may include one or more actual repetitions. Here, each actual repetition includes a consecutive set of valid symbols that may be used for a PUSCH repetition type B within one slot. If the OFDM symbol length of the nominal repetition is not one, the user equipment may ignore the transmission for that actual repetition if the length of the actual repetition becomes one.

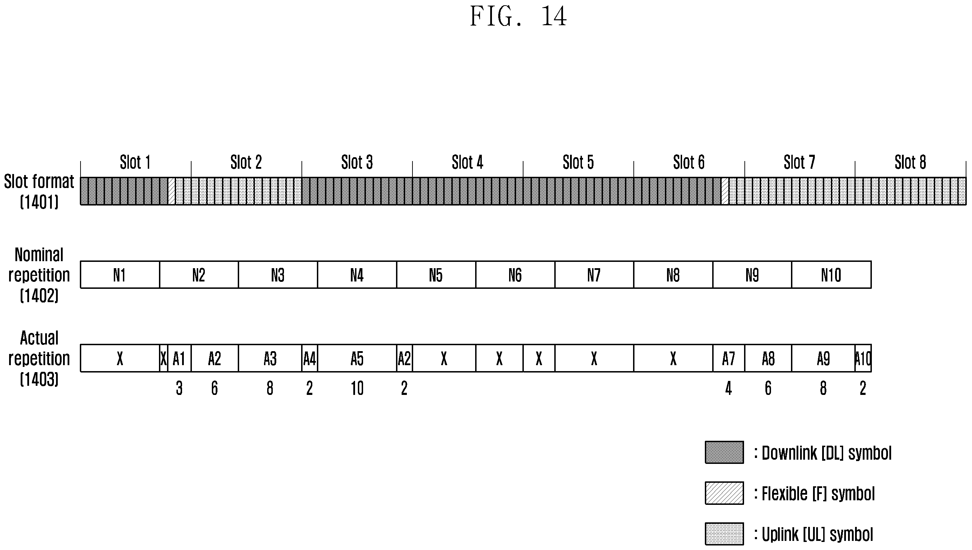

FIG. 14 illustrates an example of PUSCH repetition type B according to an embodiment of the present disclosure.

FIG. 14 illustrates an example in which the user equipment receives a transmission start symbol S configured to 0, a length L of the transmission symbol configured to 10, and the number of repeat transmissions configured to 10 for a nominal repetition 1402, which may be represented by N1 to N10 in the drawing. In this case, the user equipment may determine the actual repetition 1403 by determining the invalid symbol in consideration of the slot format 1401, and may be represented by A1 to A10 in the drawing. In this case, according to the invalid symbol and actual repetition determination method described above, PUSCH repetition type B is not transmitted in a symbol whose slot format is determined as a downlink (DL), and if a slot boundary exists within the nominal repetition, the nominal repetition may be divided into two actual repetitions on the basis of the slot boundary and be transmitted. For example, A1, the first actual repetition, may consist of three OFDM symbols, and A2, which may be transmitted next, may consist of six OFDM symbols.

In addition, for PUSCH repeat transmissions, NR Release 16 may define the following additional methods for UL grant-based PUSCH transmission and configured grant-based PUSCH transmission across slot boundaries.

- Method 1 (mini-slot level repetition): With a single UL grant, two or more PUSCH repeat transmissions are scheduled within a single slot or across the boundary of consecutive slots. In addition, for method 1, the time domain resource allocation information in the DCI points to the resources of the first repeat transmission. In addition, on the basis of the time domain resource information of the first repeat transmission and the uplink or downlink direction determined for each symbol in each slot, the time domain resource information of the remaining repeat transmissions may be determined. Each repeat transmission occupies the consecutive symbols.
- Method 2 (multi-segment transmission): Two or more PUSCH repeat transmissions are scheduled in consecutive slots through one UL grant. In this case, one transmission is designated for each slot, and each transmission may have a different starting point or different repetition length. Additionally, in method 2, time domain resource allocation information in DCI indicates the starting point and repetition length of all repeat transmissions. Additionally, when repeat transmission is performed within a single slot through method 2, if there are multiple bundles of consecutive uplink symbols within the slot, each repeat transmission is performed for each uplink symbol bundle. If there is a unique set of consecutive uplink symbols in the slot, one PUSCH repeat transmission is performed according to the method of NR Release 15.
- Method 3: Two or more PUSCH repeat transmissions are scheduled in consecutive slots through two or more UL grants. In this case, one transmission is designated for each slot, and the n-th UL grant may be received before the PUSCH transmission scheduled for the n-1st UL grant ends.
- Method 4: Through one UL grant or one configured grant, one or several PUSCH repeat transmissions within a single slot, or two or more PUSCH repeat transmissions across the boundaries of consecutive slots may be supported. The number of repetitions indicated by the base station to the user equipment is only a nominal value, and the number of PUSCH repeat transmissions actually performed by the user equipment may be greater than the nominal number of repetitions. Time domain resource allocation information within the DCI or configured grant refers to the resources of the first repeat transmission indicated by the base station. Time domain resource information of the remaining repeat transmissions may be determined by referring to the resource information of at least the first repeat transmission and the uplink or downlink direction of the symbols. If the time domain resource information of the repeat transmission indicated by the base station spans a slot boundary or includes an uplink/downlink switching point, the repeat transmission may be divided into a plurality of repeat transmissions. In this case, one repeat transmission may be included for each uplink period within one slot.

[Rate matching for UCI multiplexing to PUSCH]

In the following, rate matching for uplink control information (UCI) in the 5G system will be described in detail. First, before explaining rate matching for UCI, the case where UCI is multiplexed to PUSCH will be explained. When PUCCH and PUSCH overlap and the timeline conditions for UCI multiplexing are satisfied, the user equipment may multiplex the HARQ-ACK and/or CSI information included in PUCCH into the PUSCH and may not transmit PUCCH according to the UCI information included in PUSCH. In this case, timeline conditions for UCI multiplexing may refer to 3GPP standard TS 38.213 clause 9.2.5. As an example of a timeline condition for UCI multiplexing, if either PUCCH transmission or PUSCH transmission is scheduled through DCI, the user equipment transmits the earliest PUCCH or PUSCH among the PUCCH and PUSCH overlapping in the slot. UCI multiplexing may be performed only if the symbol $S_0$ satisfies the following conditions:

- $S_0$ is not a symbol transmitted before a symbol including a CP starting after $T_{proc,1}^{mux}$ after the last symbol of the corresponding PDSCH. Here $T_{proc,1}^{mux}$, for the i-th PDSCH related to the HARQ-ACK transmitted to the PUCCH within the overlapping PUCCH and PUSCH group, becomes the maximum value among $\{T_{proc,1}^{mux,1}, \ldots, T_{proc,1}^{mux,i}, \ldots\}$. $T_{proc,1}^{mux,1}$ is defined as

$$T_{proc,1}^{mux,i} = (N_1 + d_{1,1}) \cdot (2048 + 144) \cdot \kappa \cdot 2^{-\mu} \cdot T_c$$

as the processing procedure time for the i-th PDSCH. Here, $d_{1,1}$ is a value determined for the i-th PDSCH with reference to 3GPP standard TS 38.214 clause 5.3, and $N_1$ is the PDSCH processing time value according to PDSCH processing capability. And $\mu$ is the smallest subcarrier configuration value among all PUSCHs in the PDCCH scheduling the i-th PDSCH, the i-th PDSCH, the PUCCH including HARQ-ACK for the i-th PDSCH, and the overlapping PUCCH and PUSCH groups. $T_c$ is $1/(\Delta f_{max} \cdot N_f)$, $\Delta f_{max} = 480 \cdot 10^3 Hz$, $N_f = 4096$ and $\kappa$ is 64.

This is part of the timeline conditions for UCI multiplexing, and when all conditions are satisfied by referring to clause 9.2.5 of TS 38.213 of the 3GPP standard, the user equipment may perform UCI multiplexing on PUSCH.

If the PUCCH and PUSCH overlap and the timeline conditions for UCI multiplexing are satisfied, and the user equipment decides to multiplex the UCI included in the PUCCH into the PUSCH, the user equipment performs UCI rate matching to multiplex the UCI. UCI multiplexing is performed in the following order: HARQ-ACK, configured grant uplink control information (CG-UCI), CSI part 1, and CSI part 2. The user equipment performs rate matching considering the UCI multiplexing order. Therefore, the user equipment calculates the coded modulation symbol per layer for HARQ-ACK and CG-UCI and considers this to calculate the coded modulation symbol per layer of CSI part 1. Afterwards, the user equipment calculates the coded modulation symbol per layer of CSI part 2 by considering the coded modulation symbol per layer for HARQ-ACK, CG-UCI, and CSI part 1.

When performing rate matching for each UCI type, the method for calculating the number of coded modulation symbols per layer is different depending on the type of repeat transmission of the PUSCH on which the UCI is multiplexed and whether or not uplink data (uplink shared channel, hereinafter UL-SCH) is included. For example, when performing rate matching for HARQ-ACK, the calculation formula for the number of coded modulation symbols per layer depending on the PUSCH over which the UCI is multiplexed are as follows.

【Equation 3】

$$Q'_{ACK} = min\left\{ \left\lceil \frac{(O_{ACK} + L_{ACK}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\}$$

【Equation 4】

$$Q'_{ACK} = min\left\{ \left\lceil \frac{(O_{ACK} + L_{ACK}) \cdot \beta_{offset}^{PUSCH} \cdot \sum_{l=0}^{N_{symb,nominal}^{PUSCH}-1} M_{sc,nominal}^{UCI}(l)}{\sum_{r=0}^{C_{UL-SCH}-1} K_r} \right\rceil, \left\lceil \alpha \cdot \sum_{l=0}^{N_{symb,nominal}^{PUSCH}-1} M_{sc,nominal}^{UCI}(l) \right\rceil, \right.$$

$$\left. \sum_{l=0}^{N_{symb,actual}^{PUSCH}-1} M_{sc,actual}^{UCI}(l) \right\}$$

【Equation 5】

$$Q'_{ACK} = min\left\{ \left\lceil \frac{(O_{ACK} + L_{ACK}) \cdot \beta_{offset}^{PUSCH}}{R \cdot Q_m} \right\rceil, \left\lceil \alpha \cdot \sum_{l=l_0}^{N_{symb,all}^{PUSCH}-1} M_{sc}^{UCI}(l) \right\rceil \right\}$$

[Equation 3] is the coded modulation symbol calculation formula per layer for HARQ-ACK multiplexed on the PUSCH when the PUSCH including UL-SCH is not a repetition type B, and [Equation 4] is the formula for calculating the coded modulation symbol per layer for the PUSCH including the UL-SCH. This is the coded modulation symbol calculation formula per layer for HARQ-ACK multiplexed in the repetition transmission type B. [Equation 5] is the coded modulation symbol calculation formula per layer for HARQ-ACK multiplexed to PUSCH that does not include UL-SCH. In [Equation 3],

$O_{ACK}$ is the number of HARQ-ACK bits. $L_{ACK}$ is the number of CRC bits for HARQ-ACK. $\beta_{offset}^{PUSCH}$ is the beta offset for HARQ-ACK and is equal to

$$\beta_{offset}^{HARQ\text{-}ACK}.$$

$C_{UL\text{-}SCH}$ is the number of code blocks of UL-SCH for PUSCH transmission, and $K_r$ is the code block size of the r-th code block.

$$M_{sc}^{UCI}(l)$$

means the number of resource elements that may be used for UCI transmission in a symbol $l$, and the number is determined depending on the presence or absence of DMRS and PTRS in the symbol $l$. If the symbol $l$ includes DMRS,

$$M_{sc}^{UCI}(l)=0.$$

For symbol $l$ that does not include DMRS, it is as follows

$$M_{sc}^{UCI}(l)=M_{sc}^{PUSCH}-M_{SC}^{PT\text{-}RS}(l). \quad M_{sc}^{PUSCH}$$

is the number of subcarriers for the bandwidth for which PUSCH transmission is scheduled, and

$$M_{sc}^{PT\text{-}RS}(l)$$

is the number of subcarriers including PTRS in the symbol $l$.

$$N_{symb,al}^{PUSCH}.$$

represents the total number of symbols of PUSCH. $\alpha$ is higher layer parameter scaling, which means the ratio of resources on which UCI may be multiplexed among all resources for PUSCH transmission. $l_o$ represents the index of the first symbol that does not include the DMRS after the first DMRS. In [Equation 4],

$$M_{sc,nominal}^{UCI}(l)$$

represents the number of resource elements that may be used for UCI transmission for nominal repetition, is 0 for symbols including DMRS, and is equal to

$$M_{sc,nominal}^{UCI}(l)=M_{sc}^{PUSCH}-M_{sc,nominal}^{PT\text{-}RS}(l)$$

for symbols not including DMRS, and

$$M_{sc,nominal}^{PT\text{-}RS}(l)$$

is the number of subcarriers including PTRS in the symbol *l* for PUSCH assuming nominal repetition.

$$N_{symb,nominal}^{PUSCH}$$

means the total number of symbols for the nominal repetition of PUSCH.

$$M_{sc,actual}^{UCI}(l)$$

represents the number of resource elements that may be used for UCI transmission for the actual repetition, is 0 for symbols including a DMRS, and is equal to

$$M_{sc,actual}^{UCI}(l) = M_{sc}^{PUSCH} - M_{sc,actual}^{PT\text{-}RS}(l)$$

for symbols not including a DMRS, and

$$M_{sc,actual}^{PT\text{-}RS}(l)$$

is the number of subcarriers including PTRS in the symbol *l* for actual repetition of PUSCH.

$$N_{symb,actual}^{PUSCH}$$

means the total number of symbols for the actual repetition of PUSCH. In [Equation 5], $R$ is the code rate of the PUSCH and $Q_m$ is the modulation order of the PUSCH.

The number of coded modulation symbols per layer with rate matching of CSI part 1 may be calculated similarly to HARQ-ACK, but the number of resources that may be allocated to the maximum of the total resources is reduced to the value excluding the number of coded modulation symbols for HARQ-ACK/CG-UCI. The calculation formula for coded modulation symbols per layer in CSI part 1 is as follows: [Equation 6], [Equation 7], [Equation 8], and [Equation 9] depending on the repetition type of PUSCH and whether UL-SCH is included or not.

【Equation 6】

$$Q'_{CSI-1} = min\left\{\left\lceil \frac{(O_{CSI-1}+L_{CSI-1})\cdot\beta_{offset}^{PUSCH}\cdot\sum_{l=0}^{N_{symb,all}^{PUSCH}-1}M_{sc}^{UCI}(l)}{\sum_{r=0}^{C_{UL-SCH}-1}K_r}\right\rceil, \left\lceil \alpha\cdot\sum_{l=0}^{N_{symb,all}^{PUSCH}-1}M_{sc}^{UCI}(l)\right\rceil - Q'_{ACK/CG-UCI}\right\}$$

【Equation 7】

$$Q'_{CSI-1} = min \left\{ \left[ \frac{(O_{CSI-1} + L_{CSI-1}) \cdot \beta^{PUSCH}_{offset} \cdot \sum_{l=0}^{N^{PUSCH}_{symb,nominal}-1} M^{UCI}_{sc,nominal}(l)}{\sum_{r=0}^{C^{UL-SCH}-1} K_r} \right], \left[ \alpha \cdot \sum_{l=0}^{N^{PUSCH}_{symb,nominal}-1} M^{UCI}_{sc,nominal}(l) \right] - Q'_{ACK/CG-} \right.$$

$$\left. \sum_{l=0}^{N^{PUSCH}_{symb,actual}-1} M^{UCI}_{sc,actual}(l) - Q'_{ACK/CG-UCI} \right\}$$

【Equation 8】

$$Q'_{CSI-1} = min \left\{ \left[ \frac{(O_{CSI-1} + L_{CSI-1}) \cdot \beta^{PUSCH}_{offset}}{R \cdot Q_m} \right], \sum_{l=0}^{N^{PUSCH}_{symb,all}-1} M^{UCI}_{sc}(l) - Q'_{ACK} \right\}$$

【Equation 9】

$$Q'_{CSI-1} = \sum_{l=0}^{N^{PUSCH}_{symb,all}-1} M^{UCI}_{sc}(l) - Q'_{ACK}$$

[Equation 6] is the coded modulation symbol calculation formula per layer for CSI part 1 multiplexed to the PUSCH in the case of non-PUSCH repetition type B including the UL-SCH, and [Equation 7] is the formula for calculating the coded modulation symbol per layer for the PUSCH including the UL-SCH. This is the coded modulation symbol calculation formula per layer for CSI part 1 multiplexed in repetition type B. [Equation 8] is the coded modulation symbol calculation formula per layer for the multiplexed CSI part 1 when CSI part 1 and CSI part 2 are multiplexed in the PUSCH that does not include the UL-SCH. [Equation 9] is the coded modulation symbol calculation formula per layer for CSI part 1 that is multiplexed when CSI part 2 is not multiplexed in PUSCH that does not include UL-SCH. In [Equation 6], $O_{CSI-1}$ and $L_{CSI-1}$ mean the number of bits for CSI part 1 and the number of CRC bits for CSI part 1, respectively. $\beta^{PUSCH}_{offset}$ is the beta offset for CSI part 1 and is equal to $\beta^{CSI-part1}_{offset}$ . $Q'_{ACK/CG-UCI}$ is the number of coded modulation symbols per layer calculated for HARQ-ACK and/or CG-UCI. Other parameters are the same as those required to calculate the number of coded modulation symbols per layer for HARQ-ACK.

The number of coded modulation symbols per layer with rate matching of CSI part 2 may be calculated similarly to CSI part 1, but the maximum number of resources that can be allocated among the total resources is reduced to the value excluding the number of coded modulation symbols for HARQ-ACK/CG-UCI and the number of coded modulation symbols for CSI part 2. The calculation equations for coded modulation symbols per layer in CSI part 1 are as follows: [Equation 10], [Equation 11], and [Equation 12] depending on the repetition type of PUSCH and whether UL-SCH is included or not.

【Equation 10】

$$Q'_{CSI-2} = min\left\{\left[\frac{(O_{CSI-2} + L_{CSI-2}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right], \left[\alpha \cdot \sum_{l=0}^{N_{symb,all}^{PUSCH}-1} M_{sc}^{UCI}(l)\right] - Q'_{ACK/CG-UCI} - Q'_{CSI-1}\right\}$$

【Equation 11】

$$Q'_{CSI-2} = min\left\{\left[\frac{(O_{CSI-2} + L_{CSI-2}) \cdot \beta_{offset}^{PUSCH} \cdot \sum_{l=0}^{N_{symb,nominal}^{PUSCH}-1} M_{sc,nominal}^{UCI}(l)}{\sum_{r=0}^{C_{UL-SCH}-1} K_r}\right], \left[\alpha \cdot \sum_{l=0}^{N_{symb,nominal}^{PUSCH}-1} M_{sc,nominal}^{UCI}(l)\right] - Q'_{ACK/CG-UCI}\right.$$

$$\left. - Q'_{CSI-1}, \sum_{l=0}^{N_{symb,actual}^{PUSCH}-1} M_{sc,actual}^{UCI}(l) - Q'_{ACK/CG-UCI} - Q'_{CSI-1}\right\}$$

【Equation 12】

$$Q'_{CSI-2} = \sum_{l=0}^{N_{symb,all}^{PUSCH}-1} M_{sc}^{UCI}(l) - Q'_{ACK} - Q'_{CSI-1}$$

[Equation 10] is the coded modulation symbol calculation formula per layer for CSI part 2 multiplexed to the PUSCH when the PUSCH including the UL-SCH is not repetition type B, and [Equation 11] is the formula for calculating the coded modulation symbol per layer for the PUSCH including the UL-SCH. This is the coded modulation symbol calculation formula per layer for CSI part 2 multiplexed in repetition type B. [Equation 12] is the coded modulation symbol calculation formula per layer for CSI part 2 multiplexed to PUSCH that does not include UL-SCH. In [Equation 10], $O_{CSI-2}$ and $L_{CSI-2}$ mean the number of bits for CSI part 2 and the number of CRC bits for CSI part 2, respectively. $\beta_{offset}^{PUSCH}$ is the beta offset for CSI part 2 and is equal to

$$\beta_{offset}^{CSI-part2}$$

Other parameters are the same as those required to calculate the number of coded modulation symbols per layer for HARQ-ACK and CSI part 1.

The number of coded modulation symbols per layer that performed rate matching of CG-UCI may also be calculated similarly to HARQ-ACK. The calculation formula for the coded modulation symbol per layer of CG-UCI multiplexed to the PUSCH including the UL-SCH is as in [Equation 13].

【Equation 13】

$$Q'_{CG-UCI} = min\left\{\left[\frac{(O_{CG-UCI} + L_{CG-UCI}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right], \left[\alpha \cdot \sum_{l=l_0}^{N_{symb,all}^{PUSCH}-1} M_{sc}^{UCI}(l)\right]\right\}$$

In [Equation 13] $O_{CG-UCI}$, and $L_{CG-UCI}$ mean the number of bits of CG-UCI and the number of CRC bits for CG-

UCI, respectively. $\beta_{offset}^{PUSCH}$ is the beta offset for CG-UCI and is equal to $\beta_{offset}^{CG-UCI}$ . Other parameters are the same as those required to calculate the number of coded modulation symbols per layer for HARQ-ACK.

When HARQ-ACK and CG-UCI are multiplexed on a PUSCH including UL-SCH, the number of coded modulation symbols per layer that performed rate matching of H ARQ- ACK and CG-UCI may be calculated as in [Equation 14].

【Equation 14】

$$Q'_{CG-UCI} = min\left\{ \left\lceil \frac{(O_{ACK} + O_{CG-UCI} + L_{ACK}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\}$$

In [Equation 14], $\beta_{offset}^{PUSCH}$ is the beta offset for HARQ-ACK and is equal to $\beta_{offset}^{HARQ-ACK}$ , and other parameters are the same as the parameters required to calculate the number of coded modulation symbols per layer for HARQ-ACK.

[CSI measurement and reporting related]

The following describes in detail how to measure and report channel status in 5G communication systems.

Channel state information (CSI) may include channel quality information (CQI), precoding matrix indicator (PMI), CSI-RS resource indicator (CRI), and synchronization signa /physical broadcast channel (SS/PBCH) block resource indicator (SSBRI), layer indicator (LI), rank indicator (RI), and/or L1-Reference Signal Received Power (RSRP), etc. The base station may control time and frequency resources for CSI measurement and reporting of the user equipment.

For the above-described CSI measurement and reporting, the user equipment may receive at least one of the configuration information *CSI-ReportConfig* for N (≥1) CSI reports, the configuration information *CSI-ResourceConfig* for M (≥1) RS transmission resources, and the trigger status lists *CSI- At least one of AperiodicTriggerStateList* and *CSI-SemiPersistentOnPUSCH-TriggerStateList* through higher layer signaling.

Configuration information for the above-described CSI measurement and reporting may be more specifically as described in Tables 25 to 31 below.

【Table 25】

The IE *CSI-ReportConfig* is used to configure a periodic or semi-persistent report sent on PUCCH on the cell in which the *CSI-ReportConfig* is included, or to configure a semi-persistent or aperiodic report sent on PUSCH triggered by DCI received on the cell in which the *CSI-ReportConfig* is included (in this case, the cell on which the report is sent is determined by the received DCI). See TS 38.214 [19], clause 5.2.1.

***CSI-ReportConfig* information element**

```
-- ASN1START
-- TAG-CSI-REPORTCONFIG-START

CSI-ReportConfig ::=                    SEQUENCE {
    reportConfigId                      CSI-ReportConfigId,
    carrier                             ServCellIndex
OPTIONAL,    -- Need S
    resourcesForChannelMeasurement      CSI-ResourceConfigId,
    csi-IM-ResourcesForInterference     CSI-ResourceConfigId
OPTIONAL,    -- Need R
    nzp-CSI-RS-ResourcesForInterference CSI-ResourceConfigId
OPTIONAL,    -- Need R
    reportConfigType                    CHOICE {
        periodic                        SEQUENCE {
            reportSlotConfig            CSI-
ReportPeriodicityAndOffset,
            pucch-CSI-ResourceList              SEQUENCE (SIZE
(1..maxNrofBWPs)) OF PUCCH-CSI-Resource
        },
        semiPersistentOnPUCCH           SEQUENCE {
            reportSlotConfig            CSI-
ReportPeriodicityAndOffset,
            pucch-CSI-ResourceList              SEQUENCE (SIZE
(1..maxNrofBWPs)) OF PUCCH-CSI-Resource
        },
        semiPersistentOnPUSCH           SEQUENCE {
            reportSlotConfig                ENUMERATED {sl5, sl10,
sl20, sl40, sl80, sl160, sl320},
            reportSlotOffsetList        SEQUENCE (SIZE (1..
maxNrofUL-Allocations)) OF INTEGER(0..32),
            p0alpha                     P0-PUSCH-AlphaSetId
        },
        aperiodic                       SEQUENCE {
            reportSlotOffsetList        SEQUENCE (SIZE
(1..maxNrofUL-Allocations)) OF INTEGER(0..32)
        }
    },
    reportQuantity                      CHOICE {
        none                            NULL,
        cri-RI-PMI-CQI                  NULL,
        cri-RI-i1                       NULL,
        cri-RI-i1-CQI                   SEQUENCE {
            pdsch-BundleSizeForCSI              ENUMERATED {n2, n4}
OPTIONAL    -- Need S
        },
        cri-RI-CQI                      NULL,
        cri-RSRP                        NULL,
        ssb-Index-RSRP                  NULL,
        cri-RI-LI-PMI-CQI               NULL
```

```
        },
        reportFreqConfiguration          SEQUENCE {
            cqi-FormatIndicator              ENUMERATED { widebandCQI,
subbandCQI }                             OPTIONAL,   -- Need R
            pmi-FormatIndicator              ENUMERATED { widebandPMI,
subbandPMI }                             OPTIONAL,   -- Need R
            csi-ReportingBand                CHOICE {
                subbands3                        BIT STRING(SIZE(3)),
                subbands4                        BIT STRING(SIZE(4)),
                subbands5                        BIT STRING(SIZE(5)),
                subbands6                        BIT STRING(SIZE(6)),
                subbands7                        BIT STRING(SIZE(7)),
                subbands8                        BIT STRING(SIZE(8)),
                subbands9                        BIT STRING(SIZE(9)),
                subbands10                       BIT STRING(SIZE(10)),
                subbands11                       BIT STRING(SIZE(11)),
                subbands12                       BIT STRING(SIZE(12)),
                subbands13                       BIT STRING(SIZE(13)),
                subbands14                       BIT STRING(SIZE(14)),
                subbands15                       BIT STRING(SIZE(15)),
                subbands16                       BIT STRING(SIZE(16)),
                subbands17                       BIT STRING(SIZE(17)),
                subbands18                       BIT STRING(SIZE(18)),

                ...,
                subbands19-v1530                 BIT STRING(SIZE(19))
            } OPTIONAL    -- Need S


        }
OPTIONAL,   -- Need R
        timeRestrictionForChannelMeasurements        ENUMERATED
{configured, notConfigured},
        timeRestrictionForInterferenceMeasurements   ENUMERATED
{configured, notConfigured},
        codebookConfig                   CodebookConfig
OPTIONAL,   -- Need R
        dummy                            ENUMERATED {n1, n2}
OPTIONAL,   -- Need R
        groupBasedBeamReporting          CHOICE {
            enabled                          NULL,
            disabled                         SEQUENCE {
                nrofReportedRS                   ENUMERATED {n1, n2, n3,
n4}                              OPTIONAL    -- Need S
            }
        },
        cqi-Table                        ENUMERATED {table1, table2, table3,
spare1}                              OPTIONAL,   -- Need R
        subbandSize                      ENUMERATED {value1, value2},
        non-PMI-PortIndication           SEQUENCE (SIZE (1..maxNrofNZP-
CSI-RS-ResourcesPerConfig)) OF PortIndexFor8Ranks OPTIONAL,   -- Need
R
        ...,
        [[
        semiPersistentOnPUSCH-v1530      SEQUENCE {
            reportSlotConfig-v1530           ENUMERATED {sl4, sl8, sl16}
        }
OPTIONAL    -- Need R
```

```
        ]]
    }

    CSI-ReportPeriodicityAndOffset ::= CHOICE {
        slots4                      INTEGER(0..3),
        slots5                      INTEGER(0..4),
        slots8                      INTEGER(0..7),
        slots10                     INTEGER(0..9),
        slots16                     INTEGER(0..15),
        slots20                     INTEGER(0..19),
        slots40                     INTEGER(0..39),
        slots80                     INTEGER(0..79),
        slots160                    INTEGER(0..159),
        slots320                    INTEGER(0..319)
    }

    PUCCH-CSI-Resource ::=          SEQUENCE {
        uplinkBandwidthPartId           BWP-Id,
        pucch-Resource                  PUCCH-ResourceId
    }

    PortIndexFor8Ranks ::=          CHOICE {
        portIndex8                      SEQUENCE{
            rank1-8                         PortIndex8
OPTIONAL,   -- Need R
            rank2-8                         SEQUENCE(SIZE(2)) OF PortIndex8
OPTIONAL,   -- Need R
            rank3-8                         SEQUENCE(SIZE(3)) OF PortIndex8
OPTIONAL,   -- Need R
            rank4-8                         SEQUENCE(SIZE(4)) OF PortIndex8
OPTIONAL,   -- Need R
            rank5-8                         SEQUENCE(SIZE(5)) OF PortIndex8
OPTIONAL,   -- Need R
            rank6-8                         SEQUENCE(SIZE(6)) OF PortIndex8
OPTIONAL,   -- Need R
            rank7-8                         SEQUENCE(SIZE(7)) OF PortIndex8
OPTIONAL,   -- Need R
            rank8-8                         SEQUENCE(SIZE(8)) OF PortIndex8
OPTIONAL    -- Need R
        },
        portIndex4                      SEQUENCE{
            rank1-4                         PortIndex4
OPTIONAL,   -- Need R
            rank2-4                         SEQUENCE(SIZE(2)) OF PortIndex4
OPTIONAL,   -- Need R
            rank3-4                         SEQUENCE(SIZE(3)) OF PortIndex4
OPTIONAL,   -- Need R
            rank4-4                         SEQUENCE(SIZE(4)) OF PortIndex4
OPTIONAL    -- Need R
        },
        portIndex2                      SEQUENCE{
            rank1-2                         PortIndex2
OPTIONAL,   -- Need R
            rank2-2                         SEQUENCE(SIZE(2)) OF PortIndex2
OPTIONAL    -- Need R
        },
```

```
        portIndex1                      NULL
    }

    PortIndex8::=                   INTEGER (0..7)
    PortIndex4::=                   INTEGER (0..3)
    PortIndex2::=                   INTEGER (0..1)

    -- TAG-CSI-REPORTCONFIG-STOP
    -- ASN1STOP
```

| CSI-ReportConfig field descriptions |
|---|
| **carrier**<br>Indicates in which serving cell the CSI-ResourceConfig indicated below are to be found. If the field is absent, the resources are on the same serving cell as this report configuration. |
| **codebookConfig**<br>Codebook configuration for Type-1 or Type-II including codebook subset restriction. |
| **cqi-FormatIndicator**<br>Indicates whether the UE shall report a single (wideband) or multiple (subband) CQI. (see TS 38.214 [19], clause 5.2.1.4). |
| **cqi-Table**<br>Which CQI table to use for CQI calculation (see TS 38.214 [19], clause 5.2.2.1). |
| **csi-IM-ResourcesForInterference**<br>CSI IM resources for interference measurement. csi-ResourceConfigId of a CSI-ResourceConfig included in the configuration of the serving cell indicated with the field "carrier" above. The CSI-ResourceConfig indicated here contains only CSI-IM resources. The bwp-Id in that CSI-ResourceConfig is the same value as the bwp-Id in the CSI-ResourceConfig indicated by resourcesForChannelMeasurement. |
| **csi-ReportingBand**<br>Indicates a contiguous or non-contiguous subset of subbands in the bandwidth part which CSI shall be reported for. Each bit in the bit-string represents one subband. The right-most bit in the bit string represents the lowest subband in the BWP. The choice determines the number of subbands (subbands3 for 3 subbands, subbands4 for 4 subbands, and so on) (see TS 38.214 [19], clause 5.2.1.4). This field is absent if there are less than 24 PRBs (no sub band) and present otherwise, the number of sub bands can be from 3 (24 PRBs, sub band size 8) to 18 (72 PRBs, sub band size 4). |
| **dummy**<br>This field is not used in the specification. If received it shall be ignored by the UE. |
| **groupBasedBeamReporting**<br>Turning on/off group beam based reporting (see TS 38.214 [19], clause 5.2.1.4) |
| **non-PMI-PortIndication**<br>Port indication for RI/CQI calculation. For each CSI-RS resource in the linked ResourceConfig for channel measurement, a port indication for each rank R, indicating which R ports to use. Applicable only for non-PMI feedback (see TS 38.214 [19], clause 5.2.1.4.2).<br>The first entry in non-PMI-PortIndication corresponds to the NZP-CSI-RS-Resource indicated by the first entry in nzp-CSI-RS-Resources in the NZP-CSI-RS-ResourceSet indicated in the first entry of nzp-CSI-RS-ResourceSetList of the CSI-ResourceConfig whose CSI-ResourceConfigId is indicated in a CSI-MeasId together with the above CSI-ReportConfigId; the second entry in non-PMI-PortIndication corresponds to the NZP-CSI-RS-Resource indicated by the second entry in nzp-CSI-RS-Resources in the NZP-CSI-RS-ResourceSet indicated in the first entry of nzp-CSI-RS-ResourceSetList of the same CSI-ResourceConfig, and so on until the NZP-CSI-RS-Resource indicated by the last entry in nzp-CSI-RS-Resources in the in the NZP-CSI-RS-ResourceSet indicated in the first entry of nzp-CSI-RS-ResourceSetList of the same CSI-ResourceConfig. Then the next entry corresponds to the NZP-CSI-RS-Resource indicated by the first entry in nzp-CSI-RS-Resources in the NZP-CSI-RS-ResourceSet indicated in the second entry of nzp-CSI-RS-ResourceSetList of the same CSI-ResourceConfig and so on. |
| **nrofReportedRS**<br>The number (N) of measured RS resources to be reported per report setting in a non-group-based report. N <= N_max, where N_max is either 2 or 4 depending on UE capability.<br>(see TS 38.214 [19], clause 5.2.1.4) When the field is absent the UE applies the value 1 |
| **nzp-CSI-RS-ResourcesForInterference**<br>NZP CSI RS resources for interference measurement. csi-ResourceConfigId of a CSI-ResourceConfig included in the configuration of the serving cell indicated with the field "carrier" above. The CSI-ResourceConfig indicated here contains only NZP-CSI-RS resources. The bwp-Id in that CSI-ResourceConfig is the same value as the bwp-Id in the CSI-ResourceConfig indicated by resourcesForChannelMeasurement. |

| |
|---|
| **p0alpha**<br>Index of the p0-alpha set determining the power control for this CSI report transmission (see TS 38.214 [19], clause 6.2.1.2). |
| **pdsch-BundleSizeForCSI**<br>PRB bundling size to assume for CQI calculation when reportQuantity is CRI/RI/i1/CQI. If the field is absent, the UE assumes that no PRB bundling is applied (see TS 38.214 [19], clause 5.2.1.4.2). |
| **pmi-FormatIndicator**<br>Indicates whether the UE shall report a single (wideband) or multiple (subband) PMI. (see TS 38.214 [19], clause 5.2.1.4). |
| **pucch-CSI-ResourceList**<br>Indicates which PUCCH resource to use for reporting on PUCCH. |
| **reportConfigType**<br>Time domain behavior of reporting configuration |
| **reportFreqConfiguration**<br>Reporting configuration in the frequency domain. (see TS 38.214 [19], clause 5.2.1.4). |
| **reportQuantity**<br>The CSI related quantities to report. Corresponds to L1 parameter 'ReportQuantity' (see TS 38.214 [19], clause 5.2.1). |
| **reportSlotConfig**<br>Periodicity and slot offset (see TS 38.214 [19], clause 5.2.1.4) . |
| **reportSlotConfig-v1530**<br>Extended value range for reportSlotConfig for semi-persistent CSI on PUSCH. If the field is present, the UE shall ignore the value provided in the legacy field (semiPersistentOnPUSCH.reportSlotConfig). |
| **reportSlotOffsetList**<br>Timing offset Y for semi persistent reporting using PUSCH. This field lists the allowed offset values. This list must have the same number of entries as the *pusch-TimeDomainAllocationList* in *PUSCH-Config*. A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on. The first report is transmitted in slot n+Y, second report in n+Y+P, where P is the configured periodicity.<br>Timing offset Y for aperiodic reporting using PUSCH. This field lists the allowed offset values. This list must have the same number of entries as the *pusch-TimeDomainAllocationList* in *PUSCH-Config*. A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on (see TS 38.214 [19], clause 5.2.3). |
| **resourcesForChannelMeasurement**<br>Resources for channel measurement. csi-ResourceConfigId of a CSI-ResourceConfig included in the configuration of the serving cell indicated with the field "carrier" above. The CSI-ResourceConfig indicated here contains only NZP-CSI-RS resources and/or SSB resources. This CSI-ReportConfig is associated with the DL BWP indicated by bwp-Id in that CSI-ResourceConfig. |
| **subbandSize**<br>Indicates one out of two possible BWP-dependent values for the subband size as indicated in TS 38.214 [19], table 5.2.1.4-2 . If *csi-ReportingBand* is absent, the UE shall ignore this field. |
| **timeRestrictionForChannelMeasurements**<br>Time domain measurement restriction for the channel (signal) measurements (see TS 38.214 [19], clause 5.2.1.1) |
| **timeRestrictionForInterferenceMeasurements**<br>Time domain measurement restriction for interference measurements (see TS 38.214 [19], clause 5.2.1.1) |

**[Table 26]**

The IE *CSI-ResourceConfig* defines a group of one or more *NZP-CSI-RS-ResourceSet*, *CSI-IM-ResourceSet* and/or *CSI-SSB-ResourceSet*.

**CSI-ResourceConfig information element**

```
-- ASN1START
-- TAG-CSI-RESOURCECONFIG-START

CSI-ResourceConfig ::=        SEQUENCE {
    csi-ResourceConfigId        CSI-ResourceConfigId,
    csi-RS-ResourceSetList      CHOICE {
        nzp-CSI-RS-SSB                 SEQUENCE {
            nzp-CSI-RS-ResourceSetList  SEQUENCE (SIZE (1..maxNrofNZP-
CSI-RS-ResourceSetsPerConfig)) OF NZP-CSI-RS-ResourceSetId

OPTIONAL, -- Need R
            csi-SSB-ResourceSetList     SEQUENCE (SIZE (1..maxNrofCSI-
SSB-ResourceSetsPerConfig)) OF CSI-SSB-ResourceSetId

OPTIONAL  -- Need R
        },
        csi-IM-ResourceSetList      SEQUENCE (SIZE (1..maxNrofCSI-IM-
ResourceSetsPerConfig)) OF CSI-IM-ResourceSetId
    },

    bwp-Id                      BWP-Id,
    resourceType                ENUMERATED { aperiodic, semiPersistent,
periodic },
    ...
}

-- TAG-CSI-RESOURCECONFIG-STOP
-- ASN1STOP
```

| CSI-ResourceConfig field descriptions |
|---|
| *bwp-Id*<br>The DL BWP which the CSI-RS associated with this CSI-ResourceConfig are located in (see TS 38.214 [19], clause 5.2.1.2 |
| *csi-ResourceConfigId*<br>Used in CSI-ReportConfig to refer to an instance of CSI-ResourceConfig |
| *csi-RS-ResourceSetList*<br>Contains up to maxNrofNZP-CSI-RS-ResourceSetsPerConfig resource sets if ResourceConfigType is 'aperiodic' and 1 otherwise (see TS 38.214 [19], clause 5.2.1.2) |
| *csi-SSB-ResourceSetList*<br>List of SSB resources used for beam measurement and reporting in a resource set   (see TS 38.214 [19], section FFS Section) |
| *resourceType*<br>Time domain behavior of resource configuration (see TS 38.214 [19], clause 5.2.1.2). It does not apply to resources provided in the csi-SSB-ResourceSetList. |

【Table 27】

The IE *NZP-CSI-RS-ResourceSet* is a set of Non-Zero-Power (NZP) CSI-RS resources (their IDs) and set-specific parameters.

**NZP-CSI-RS-ResourceSet information element**

```
-- ASN1START
-- TAG-NZP-CSI-RS-RESOURCESET-START
NZP-CSI-RS-ResourceSet ::=         SEQUENCE {
    nzp-CSI-ResourceSetId          NZP-CSI-RS-ResourceSetId,
    nzp-CSI-RS-Resources           SEQUENCE (SIZE (1..maxNrofNZP-
CSI-RS-ResourcesPerSet)) OF NZP-CSI-RS-ResourceId,
    repetition                     ENUMERATED { on, off }
OPTIONAL,    -- Need S
    aperiodicTriggeringOffset      INTEGER(0..6)
OPTIONAL,    -- Need S
    trs-Info                       ENUMERATED {true}
OPTIONAL,    -- Need R
    ...
}

-- TAG-NZP-CSI-RS-RESOURCESET-STOP
-- ASN1STOP
```

| NZP-CSI-RS-ResourceSet field descriptions |
|---|
| *aperiodicTriggeringOffset*<br>Offset X between the slot containing the DCI that triggers a set of aperiodic NZP CSI-RS resources and the slot in which the CSI-RS resource set is transmitted. The value 0 corresponds to 0 slots, value 1 corresponds to 1 slot, value 2 corresponds to 2 slots, value 3 corresponds to 3 slots, value 4 corresponds to 4 slots, value 5 corresponds to 16 slots, value 6 corresponds to 24 slots. When the field is absent the UE applies the value 0. |
| *nzp-CSI-RS-Resources*<br>NZP-CSI-RS-Resources associated with this NZP-CSI-RS resource set (see TS 38.214 [19], clause 5.2). For CSI, there are at most 8 NZP CSI RS resources per resource set |
| *repetition*<br>Indicates whether repetition is on/off. If the field is set to 'OFF' or if the field is absent, the UE may not assume that the NZP-CSI-RS resources within the resource set are transmitted with the same downlink spatial domain transmission filter and with same NrofPorts in every symbol (see TS 38.214 [19], clauses 5.2.2.3.1 and 5.1.6.1.2). Can only be configured for CSI-RS resource sets which are associated with CSI-ReportConfig with report of L1 RSRP or "no report" |
| *trs-Info*<br>Indicates that the antenna port for all NZP-CSI-RS resources in the CSI-RS resource set is same. If the field is absent or released the UE applies the value "false" (see TS 38.214 [19], clause 5.2.2.3.1). |

【Table 28】

The IE *CSI-SSB-ResourceSet* is used to configure one SS/PBCH block resource set which refers to SS/PBCH as indicated in *ServingCellConfigCommon*.

**CSI-SSB-ResourceSet information element**

```
-- ASN1START
-- TAG-CSI-SSB-RESOURCESET-START

CSI-SSB-ResourceSet ::=        SEQUENCE {
    csi-SSB-ResourceSetId         CSI-SSB-ResourceSetId,
    csi-SSB-ResourceList          SEQUENCE (SIZE(1..maxNrofCSI-SSB-
ResourcePerSet)) OF SSB-Index,
    ...
}

-- TAG-CSI-SSB-RESOURCESET-STOP
-- ASN1STOP
```

【Table 29】

The IE *CSI-IM-ResourceSet* is used to configure a set of one or more CSI Interference Management (IM) resources (their IDs) and set-specific parameters.

**CSI-IM-ResourceSet information element**

```
-- ASN1START
-- TAG-CSI-IM-RESOURCESET-START

CSI-IM-ResourceSet ::=          SEQUENCE {
    csi-IM-ResourceSetId            CSI-IM-ResourceSetId,
    csi-IM-Resources                SEQUENCE (SIZE(1..maxNrofCSI-IM-ResourcesPerSet))
OF CSI-IM-ResourceId,
    ...
}
-- TAG-CSI-IM-RESOURCESET-STOP
-- ASN1STOP
```

| CSI-IM-ResourceSet field descriptions |
|---|
| **csi-IM-Resources** |
| CSI-IM-Resources associated with this CSI-IM-ResourceSet (see TS 38.214 [19], clause 5.2) |

[Table 30]

The *CSI-AperiodicTriggerStateList* IE is used to configure the UE with a list of aperiodic trigger states. Each codepoint of the DCI field "CSI request" is associated with one trigger state. Upon reception of the value associated with a trigger state, the UE will perform measurement of CSI-RS (reference signals) and aperiodic reporting on L1 according to all entries in the *associatedReportConfigInfoList* for that trigger state.

**CSI-AperiodicTriggerStateList information element**

```
-- ASN1START
-- TAG-CSI-APERIODICTRIGGERSTATELIST-START

CSI-AperiodicTriggerStateList ::=  SEQUENCE (SIZE (1..maxNrOfCSI-
AperiodicTriggers)) OF CSI-AperiodicTriggerState

CSI-AperiodicTriggerState ::=      SEQUENCE {
    associatedReportConfigInfoList     SEQUENCE
(SIZE(1..maxNrofReportConfigPerAperiodicTrigger)) OF CSI-
AssociatedReportConfigInfo,
    ...
}

CSI-AssociatedReportConfigInfo ::=     SEQUENCE {
    reportConfigId                     CSI-ReportConfigId,
    resourcesForChannel                CHOICE {
        nzp-CSI-RS                         SEQUENCE {
            resourceSet                        INTEGER (1..maxNrofNZP-CSI-
RS-ResourceSetsPerConfig),
            qcl-info                           SEQUENCE (SIZE(1..maxNrofAP-
CSI-RS-ResourcesPerSet)) OF TCI-StateId OPTIONAL  -- Cond Aperiodic
        },
        csi-SSB-ResourceSet                INTEGER (1..maxNrofCSI-SSB-
ResourceSetsPerConfig)
    },
    csi-IM-ResourcesForInterference    INTEGER(1..maxNrofCSI-IM-
ResourceSetsPerConfig)            OPTIONAL,  -- Cond CSI-IM-ForInterference
    nzp-CSI-RS-ResourcesForInterference INTEGER (1..maxNrofNZP-CSI-RS-
ResourceSetsPerConfig)    OPTIONAL,  -- Cond NZP-CSI-RS-ForInterference
    ...
}

-- TAG-CSI-APERIODICTRIGGERSTATELIST-STOP
-- ASN1STOP
```

| CSI-AssociatedReportConfigInfo field descriptions |
|---|
| **csi-IM-ResourcesForInterference** |
| CSI-IM-ResourceSet for interference measurement. Entry number in csi-IM-ResourceSetList in the CSI-ResourceConfig indicated by csi-IM-ResourcesForInterference in the CSI-ReportConfig indicated by reportConfigId above (1 corresponds to the first entry, 2 to the second entry, and so on). The indicated CSI-IM-ResourceSet should have exactly the same number of resources like the NZP-CSI-RS-ResourceSet indicated in nzp-CSI-RS-ResourcesforChannel. |
| **csi-SSB-ResourceSet** |
| CSI-SSB-ResourceSet for channel measurements. Entry number in csi-SSB-ResourceSetList in the CSI-ResourceConfig indicated by resourcesForChannelMeasurement in the CSI-ReportConfig indicated by reportConfigId above (1 corresponds to the first entry, 2 to the second entry, and so on). |

| | |
|---|---|
| ***nzp-CSI-RS-ResourcesForInterference***<br>NZP-CSI-RS-ResourceSet for interference measurement. Entry number in nzp-CSI-RS-ResourceSetList in the CSI-ResourceConfig indicated by nzp-CSI-RS-ResourcesForInterference in the CSI-ReportConfig indicated by reportConfigId above (1 corresponds to the first entry, 2 to the second entry, and so on). | |
| ***qcl-info***<br>List of references to TCI-States for providing the QCL source and QCL type for each NZP-CSI-RS-Resource listed in nzp-CSI-RS-Resources of the NZP-CSI-RS-ResourceSet indicated by nzp-CSI-RS-ResourcesforChannel. Each *TCI-StateId* refers to the TCI-State which has this value for *tci-StateId* and is defined in *tci-StatesToAddModList* in the *PDSCH-Config* included in the *BWP-Downlink* corresponding to the serving cell and to the DL BWP to which the *resourcesForChannelMeasurement* (in the *CSI-ReportConfig* indicated by *reportConfigId* above) belong to. First entry in qcl-info-forChannel corresponds to first entry in nzp-CSI-RS-Resources of that NZP-CSI-RS-ResourceSet, second entry in qcl-info-forChannel corresponds to second entry in nzp-CSI-RS-Resources, and so on (see TS 38.214 [19], clause 5.2.1.5.1) | |
| ***reportConfigId***<br>The reportConfigId of one of the CSI-ReportConfigToAddMod configured in CSI-MeasConfig | |
| ***resourceSet***<br>NZP-CSI-RS-ResourceSet for channel measurements. Entry number in nzp-CSI-RS-ResourceSetList in the CSI-ResourceConfig indicated by resourcesForChannelMeasurement in the CSI-ReportConfig indicated by reportConfigId above (1 corresponds to the first entry, 2 to thesecond entry, and so on). | |

| Conditional Presence | Explanation |
|---|---|
| Aperiodic | The field is mandatory present if the *NZP-CSI-RS-Resources* in the associated *resourceSet* have the resourceType aperiodic. The field is absent otherwise. |
| CSI-IM-ForInterference | This field is optional need M if the *CSI-ReportConfig* identified by *reportConfigId* is configured with *csi-IM-ResourcesForInterference*; otherwise it is absent. |
| NZP-CSI-RS-ForInterference | This field is optional need M if the *CSI-ReportConfig* identified by *reportConfigId* is configured with *nzp-CSI-RS-ResourcesForInterference*; otherwise it is absent. |

【Table 31】

> The *CSI-SemiPersistentOnPUSCH-TriggerStateList* IE is used to configure the UE with list of trigger states for semi-persistent reporting of channel state information on L1. See also TS 38.214 [19], clause 5.2.

***CSI-SemiPersistentOnPUSCH-TriggerStateList* information element**

```
-- ASN1START
-- TAG-CSI-SEMIPERSISTENTONPUSCHTRIGGERSTATELIST-START

CSI-SemiPersistentOnPUSCH-TriggerStateList  ::=  SEQUENCE(SIZE
(1..maxNrOfSemiPersistentPUSCH-Triggers)) OF CSI-
SemiPersistentOnPUSCH-TriggerState

CSI-SemiPersistentOnPUSCH-TriggerState ::=     SEQUENCE {
    associatedReportConfigInfo               CSI-ReportConfigId,
    ...
}

-- TAG-CSI-SEMIPERSISTENTONPUSCHTRIGGERSTATELIST-STOP
-- ASN1STOP
```

Each reporting configuration *CSI-ReportConfig* may be associated with one downlink (DL) bandwidth part, identified by the bandwidth part identity *bwp-Id,* which is a higher layer parameter given by the CSI resource configuration *CSI-ResourceConfig* associated with the corresponding reporting configuration. Time domain reporting for each reporting configuration *CSI-ReportConfig* supports an 'aperiodic', 'semi-persistent' or 'periodic' method, which may be configured from the base station to the user equipment by the higher layer parameter *reportConfigType*. The semi-persistent CSI reporting method supports semi-persistent reporting on PUCCH, which is configured by *semi-PersistentOnPUCCH,* and semi-persistent reporting on PUSCH, which is configured by *semi-PersistentOnPUSCH.* For periodic or semi-persistent CSI reporting, the user equipment may receive the PUCCH resource or PUSCH resource to transmit CSI from the base station through higher layer signaling. The periodicity and slot offset to transmit the CSI may be given by the numerology of the uplink (UL) bandwidth part on which the CSI report is configured to be transmitted. For aperiodic CSI reporting, the user equipment may receive scheduling of PUSCH resources to transmit CSI from the base station through L1 signaling (e.g., DCI format 0_1).

For the above-described CSI resource configuration *CSI-ResourceConfig,* each CSI resource configuration *CSI-ReportConfig* may include S($\geq$1) CSI resource sets (given by the higher layer parameter *csi-RS-ResourceSetList* ). The CSI resource set list may consist of a non-zero power (NZP) CSI-RS resource set and an SS/PBCH block set, or a CSI interference measurement (CSI-IM) resource set. Each CSI resource configuration may be located in a downlink (DL) bandwidth part identified by the higher layer parameter *bwp-Id,* and the CSI resource configuration may be associated with the CSI reporting configuration of the same downlink bandwidth part. The time domain operation of the CSI-RS resource within the CSI resource configuration may be configured to one of 'aperiodic', 'periodic', or 'semi-permanent' from the higher layer parameter *resourceType*. For periodic or semi-permanent CSI resource configuration, the number of CSI-RS resource sets may be limited to S=1, and the configured period and slot offset may be given as the numerology of the downlink bandwidth part identified by *bwp-Id*. The user equipment may receive one or more CSI resource configurations for channel or interference measurement through higher layer signaling from the base station. For example, the CSI resource configurations may include at least one of the following resources.

- CSI-IM resource for interference measurements
- NZP CSI-RS resource for interference measurements
- NZP CSI-RS resource for channel measurements

For CSI-RS resource sets that are associated with a resource configuration with the higher layer parameter *resourceType* configured to 'aperiodic', 'periodic', or 'semi-periodic', the trigger state for CSI reporting configurations with *reportType* configured to 'aperiodic' and the resource configuration for channel or interference measurement for one or multiple component cells (CC) may be configured to the higher layer parameter *CSI-AperiodicTriggerStateList* .

Aperiodic CSI reporting of the user equipment may use PUSCH, periodic CSI reporting may use PUCCH, and semi-permanent CSI reporting may be performed using PUSCH when triggered or activated by DCI and using PUCCH after activated by MAC control elements (MAC CE).

CSI resource configurations may also be configured aperiodically, periodically, or semi-permanently. The combination between CSI reporting configurations and CSI resource configurations may be on the basis of Table 32 below.

[Table 32] Triggering/Activation of CSI Reporting for the possible CS I-RS Configurations.

| CSI-RS Configuration | Periodic CSI Reporting | Semi-Persistent CSI Reporting | Aperiodic CSI Reporting |
|---|---|---|---|
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

Aperiodic CSI reporting may be triggered by the "CSI request" field in DCI format 0_1, as an example corresponding to the scheduling DCI for PUSCH. The user equipment may monitor the PDCCH to obtain DCI format 0_1 and may obtain resource allocation information and CSI request field for PUSCH from DCI format 0_1. The CSI request field may be configured to $N_{TS}$ (=0, 1, 2, 3, 4, 5, or 6) bits, and $N_{TS}$ may be determined by the higher layer parameter *reportTriggerSize*. Among one or multiple aperiodic CSI reporting trigger states that may be configured with the higher layer parameter *CSI-AperiodicTriggerStateList,* one trigger state may be triggered by the CSI request field.

- If all bits in the CSI request field are 0, this may mean that CSI reporting is not requested.

- If the number (M) of CSI trigger states in the configured *CSI-AperiodicTriggerStateList* is greater than $2^{N^{TS}}-1$, then according to the predefined mapping relationship, M CSI trigger states may be mapped to $2^{N^{TS}}-1$ CSI trigger states, and one of the $2^{N^{TS}}-1$ trigger states may be indicated to the CSI request field.

- If the number (M) of CSI trigger states in the configured *CSI-AperiodicTriggerStateList* is less than or equal to $2^{N^{\wedge}TS} - 1$, one of the M CSI trigger states may be indicated to the CSI request field.

Table 33 below illustrates an example of the relationship between a CSI request field and a CSI trigger state that may be indicated by it.

[Table 33]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

The user equipment may perform measurements on the CSI resource in the CSI trigger state triggered by the CSI request field and may generate a CSI (including at least one of CQI, PMI, CRI, SSBRI, LI, RI, L1-RSRP, or L1-SINR) therefrom. The user equipment may transmit the generated CSI using a PUSCH scheduled by DCI format 0_1. If the uplink shared channel indicator of bit 1 of the UL-SCH indicator in DCI format 0_1 indicates "1", the uplink data from the UL-SCH and the above generated CSI may be multiplexed and transmitted on the PUSCH resource scheduled by DCI format 0_1. If the UL-SCH indicator in DCI format 0_1 indicates "0", only CSI without uplink data may be transmitted on the PUSCH resource scheduled by DCI format 0_1.

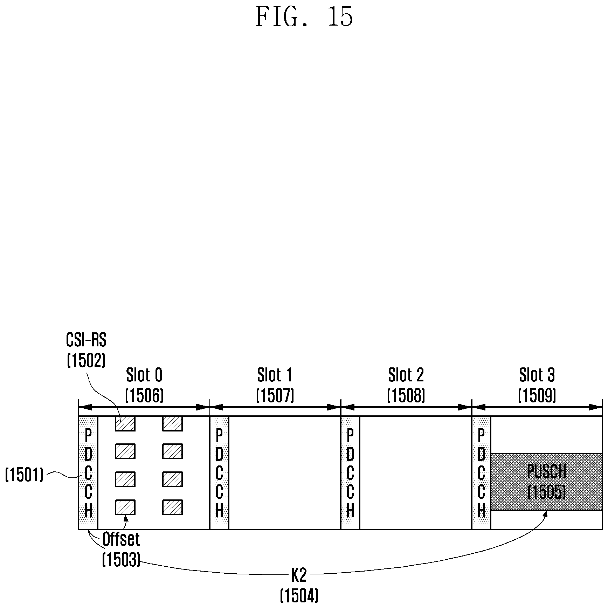

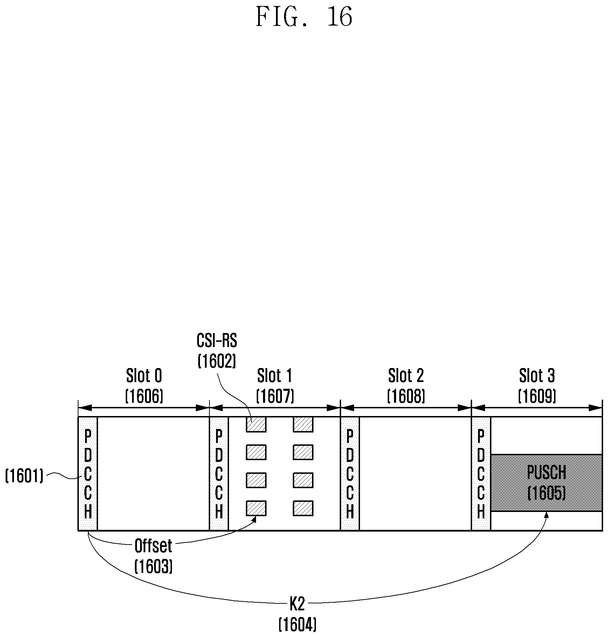

FIGS. 15 and 16 are diagrams illustrating an example of aperiodic channel state reporting according to an embodiment of the present disclosure.

With reference to FIG. 15, the user equipment monitors PDCCH 1500 to obtain DCI format 0_1, and from the DCI format 0_1, the user equipment may obtain scheduling information for PUSCH 1508 and a CSI request field. The CSI request field provides resource information for the CSI-RS 1502 to be measured by the user equipment. The user equipment may identify when to measure for the CSI-RS 1502 resource on the basis of when the DCI format 0_1 is received and the CSI resource set configuration (e.g., aperiodicTriggeringOffset in the *NZP-CSI-RS-ResourceSet).*

More specifically, the user equipment may obtain an offset value X 1504 by the parameter *aperiodicTriggeringOffset* within the set of NZP-CSI-RS resources given by the higher layer signaling from the base station. The offset value X 804 means an offset between the slot at which the DCI triggering the aperiodic CSI reporting is received and the slot at which the CSI-RS resource is transmitted. For example, the value of *aperiodicTriggeringOffset* and the offset value X 1504 may have the mapping relationship described in Table 34 below.

[Table 34]

| aperiodicTriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

FIG. 15 illustrates an example in which the offset value 1504 is set to X=0. In this case, the user equipment may receive CSI-RS 1502 in slot 0 1510 after receiving DCI format 0_1, which triggers an aperiodic CSI reporting.

The user equipment may obtain from DCI format 0_1 the scheduling information for the PUSCH 1508 for CSI reporting (resource allocation fields in DCI format 0_1 described above). As an example, the user equipment may obtain information about the slot to transmit the PUSCH 1508 from the time domain resource allocation fields in DCI format 0_1. In the example of FIG. 15, the value of K2 1506 corresponding to the PDCCH-to-PUSCH slot offset is 3, and accordingly, the PUSCH 1508 including the CSI associated with CSI-RS 1502 may be transmitted in slot 3 1512, which is three slots away from slot 0 1510, at the time the PDCCH 1500 is received.

With reference to FIG. 16, the user equipment monitors PDCCH 1600 to obtain DCI format 0_1, and from the DCI format 0_1, the user equipment may obtain scheduling information for PUSCH 1608 and a CSI request field. The CSI request field provides resource information for the CSI-RS 1602 to be measured by the user equipment. FIG. 16 illustrates an example in which the offset value 1604 for the CSI-RS is set to X=1. In this case, the user equipment may receive the CSI-RS 1602 at slot 1 1612, which is one slot away from slot 0 1610 where it received the DCI format 0_1 triggering the aperiodic CSI reporting. In the example shown, the value of K2 1606, corresponding to the PDCCH-to-PUSCH slot offset, is given to the user equipment as 3, such that a PUSCH 1608 including the CSI associated with CSI-RS 1602 may be transmitted at slot 3 1614, three slots away from slot 0 1610, upon receipt of PDCCH 1600.

[CSI: L1-RSRP reporting related]

The following describes specifically L1-RSRP reporting in 5G systems. The user equipment may configure CSI-RS and SSB for L1-RSRP calculation, and for CSI-RS, a maximum of 16 CSI-RS sets and a maximum of 64 CSI-RSs per set may be configured, with a total of no more than 128 CSI-RSs. If the nrofReportedRS configured by the upper layer is 1, the L1-RSRP is defined as a 7-bit value of [-140,-44] dBM in 1dB interval. If nrofReportedRS is greater than 1, groupBasedBeamReporting is configured to 'enabled', or groupBasedBeamReporting-r17 is configured to 'enabled', the user equipment may report the differential L1-RSRP, which is the difference from the maximum L1-RSRP. The differential L1-RSRP is defined as a 4-bit value with 2 dB intervals. If timeRestrictionForChannelMeasurements is configured to 'notConfigured' in the higher layer, the user equipment may calculate and report the L1-RSRP on the basis of the NZP CSI-RS and SSB before the CSI reference resource, and if it is configured to 'Configured', the user equipment can calculate and report the L1-RSRP of the most recent NZP CSI-RS or SSB before the CSI reference resource.

[CSI: L1-SINR reporting related]

The following describes specifically the reporting of L1-SINR in 5G systems. For L1-SINR calculation, the user equipment may be configured with NZP CSI-RS and SSB for channel measurements and NZP CSI-RS or CSI-IM for interference measurements. For CSI-RS, a maximum of 16 CSI-RS sets and a maximum of 64 CSI-RSs per set may be configured, with a total of no more than 128 CSI-RSs.

If the nrofReportedRS configured by the higher layer is 1, the L1-SINR is defined as a 7-bit value of [--23,40] dBM in 0.5 dB intervals. If nrofReportedRS is greater than 1, or if groupBasedBeamReporting is configured to 'enabled', the user equipment may report the differential L1-SINR, which is the difference from the maximum L1-SINR. The differential L1-RSRP is defined as a 4-bit value with 1 dB intervals.

The user equipment may calculate and report the L1-SINR on the basis of the NZP CSI-RS or SSB before the CSI reference resource if timeRestrictionForChannelMeasurements is configured to 'notConfigured' in the higher layer or calculate and report the L1-SINR of the most recent NZP CSI-RS or SSB before the CSI reference resource if it is configured to 'Configured'.

The user equipment may calculate and report the L1-SINR on the basis of the NZP CSI-RS or CSI-IM before the CSI reference resource if timeRestrictionForInterferenceMeasurements is configured to 'notConfigured' in the higher layer or calculate and report the L1-SINR of the most recent NZP CSI-RS or CSI-IM before the CSI reference resource if it is configured to 'Configured'.

The present disclosure provides a method for receiving CSI-RS from a user equipment and a method for reporting the measured CSI when a base station wants to perform multi-beam operation while reducing the amount of CSI-RS for beam operation. Specifically, in the present invention, a set of beams available to a base station for UE-specific PDSCH transmission are defined as Set A, and a set of beams for beam measurement and reporting used to select the optimal beam of a user equipment are defined as Set B. On the basis of the above definitions, previously, the user equipment selected the optimal beam in the following methods.

- Method 1: Set B is the same as SetA. The beams in Set B are mapped to different SSBs or CSI-RSs. The user equipment may measure all the SSBs or CSI-RSs mapped to the beams in Set B and report the index and L1-RSRP of the SSB or CSI-RS with the largest L1-RSRP. The base station may select a beam from Set A from the user equipment report and use it as the PDSCH transmission beam.
- Method 2: Set B is different from Set A or is a subset of Set A. Set B may be divided into Set B1 and Set B2, where the beams in Set B1 consist of beams with a wide beamwidth, and Set B2 is a subset of Set A and consists of beams with a smaller beamwidth than Set B1. The user equipment may measure all SSBs or CSI-RSs mapped to beams in Set B1 and report the index and L1-RSRP of the SSB or CSI-RS with the largest L1-RSRP. The base station may select beams from Set B1 to form the beams in Set B2 on the basis of user equipment reporting on the basis of Set B1. The user equipment may measure all CSI-RSs mapped to beams in Set B2 and report the index and L1-RSRP of the CSI-RS with the largest L1-RSRP. On the basis of the user equipment reporting on the basis of Set B2, the base station may select a beam from Set A to use as the PDSCH transmission beam.

Both Method 1 and Method 2 above require that there must be at least an optimal beam among the beams in Set B to select a beam in Set A. Therefore, a lot of beam sweeping is required to select an optimal beam within Set B, which has the disadvantage of increasing the overhead of DL-RS and the latency of beam operation.

The base station or user equipment may utilize a high-performance beam estimation algorithm to select or predict optimal beams within Set A that are not included in Set B by utilizing recent measurement data from Set B. This high-performance beam estimation algorithm may be implemented through a variety of beam estimation algorithms, including artificial intelligent (AI)-based channel estimation algorithms, which may provide the following benefits.

- Benefit 1: Because Set B does not need to include the optimal beam in Set A, the overhead of SSB or CSI-RS for measuring the beam in Set B may be reduced. For example, it is possible to map a transmission beam with a smaller beamwidth to CSI-RS in order to use a transmission beam with a smaller beamwidth (and larger beam gain) than the beam mapped to SSB, and as CSI-RS is required to be configured on each user equipment, the amount of CSI-RS overhead may become very large when supporting many user equipments if the beams in Set B are large.
- Benefit 2: Because the base station may report and receive beams estimated by the user equipment or estimate unmeasured and unreported beams within Set B, the base station may predict future beams within Set A to reduce latency for beam operations and maintain consistent beam reception quality. For example, when a beam change is required, latency from beam sweeping and CSI-report may prevent the optimal beam from being received in time, or L1-RSRP may be aging and prevent the optimal beam from being received. With future beam prediction, the base station may predict the optimal beam in advance before a beam change is required, reducing latency and allowing the base station to indicate the user equipment to change beams.

As described above, a base station or user equipment may utilize a high-performance beam estimation algorithm to select or predict the optimal beam within Set A that is not included in Set B by utilizing recent measurement data from Set B. When a user equipment utilizes a high-performance beam estimation algorithm, the power consumption for measuring and reporting CSI on the user equipment may be higher, but the following benefits may be realized over a base station utilizing a high-performance beam estimation algorithm.

- Benefit 1: Because the user equipment uses its own measured CSI, it may use more accurate measurements in the beam estimation algorithm than the CSI reported by the base station. For example, the L1-RSRP value measured by the user equipment is more accurate than the quantized L1-RSRP value with a 1 dB difference that the base station reports. In addition, the user equipment may utilize different CSI measurements to improve the accuracy of optimal beam selection or prediction.
- Benefit 2: When a base station beam manages multiple user equipments, the complexity and computation of the high-performance beam estimation algorithms within the base station may be offloaded to multiple user equipments.

In this disclosure, the number of beams in Set A is assumed to be M and the number of beams in Set B is assumed to be N for illustration purposes, and the beamwidth used for CSI-RS is assumed to be smaller than the beamwidth used for SSB, but this does not limit the scope of the invention.

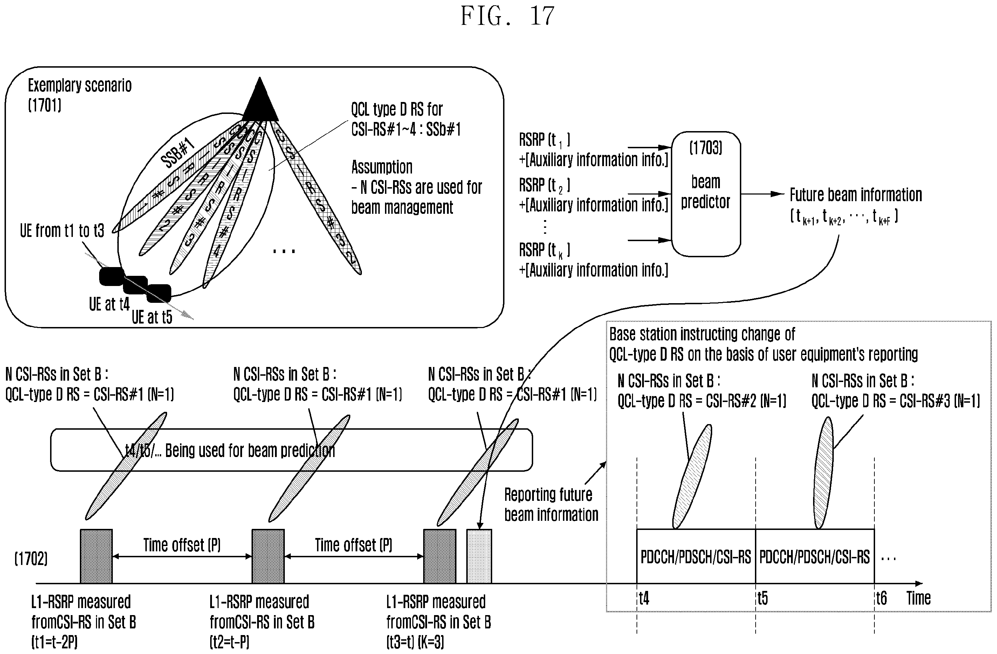

FIG. 17 illustrates an example of a configuration method of a beam set for beam measurement and reporting for beam estimation according to an embodiment of the present disclosure.

With reference to FIG. 17, the user equipment assumes that M CSI-RSs to which a total of M (=32) transmission beams are mapped are configured (1701). The user equipment may measure N (=1) beams at t1, t2, and t3 (1702), predict the CSI corresponding to the optimal beam at t4 or t5, and report it (1703). The base station may instruct for beam operation at t4 or t5 through the reported CSI of the estimated beam at t4 or t5. In this case, the beambook implementation method may be different for each base station, and the beambook implementation of the base station assumed by the high-performance beam estimation algorithm of the user equipment may be different for each user equipment, so it is difficult for the base station to utilize the beam information at t4 or t5 reported by the user equipment. As an example, assuming that there is an AI-based high-performance beam estimation algorithm that can estimate one of the four beams in Set A by estimating one beam in Set B, user equipment 1 may learn the indices 1, 2, 3, and 4 of the predicted beam assuming a transmission beam at -30, 0, +30, and +60 degrees, respectively, and user equipment 2 may learn the indices 1, 2, 3, and 4 of the predicted beam assuming a transmission beam at -45, -15, +15, and +45 degrees, respectively. In this case, when the base station reports index 1 of the predicted beam, the base station does not know which transmission beam it should operate on. In another example, base station 1 may map CSI-RS IDs 1, 2, 3, and 4 to directions of -30, 0, +30, and +60 degrees, respectively, and base station 2 may map CSI-RS IDs 1, 2, 3, and 4 to directions of +30, 0, -30, and -60 degrees, respectively. In this case, when the user equipment's predicted transmission beam direction is -30 degrees, the user equipment does not know which CSI-RS ID it should report. The following embodiments disclose methods for aligning the same assumptions about the base station and the user equipment's transmission beam when the user equipment makes a beam prediction, and methods for reporting the predicted beam.

<First embodiment: Configuration method of auxiliary information of base station transmission beam>

The first embodiment of the present disclosure describes a method in which a user equipment receives auxiliary information to assume that the transmission beam of the base station predicted by the user equipment is the same as the actual transmission beam of the base station. Through the configuration method of auxiliary information of a transmission beam according to an embodiment of the present disclosure, the user equipment may report the CSI of the predicted beam so that the base station may know it. According to an embodiment of the present disclosure, auxiliary information of the base station's transmission beam may be configured to the user equipment through higher layer parameters, and a specific method for this is described below.

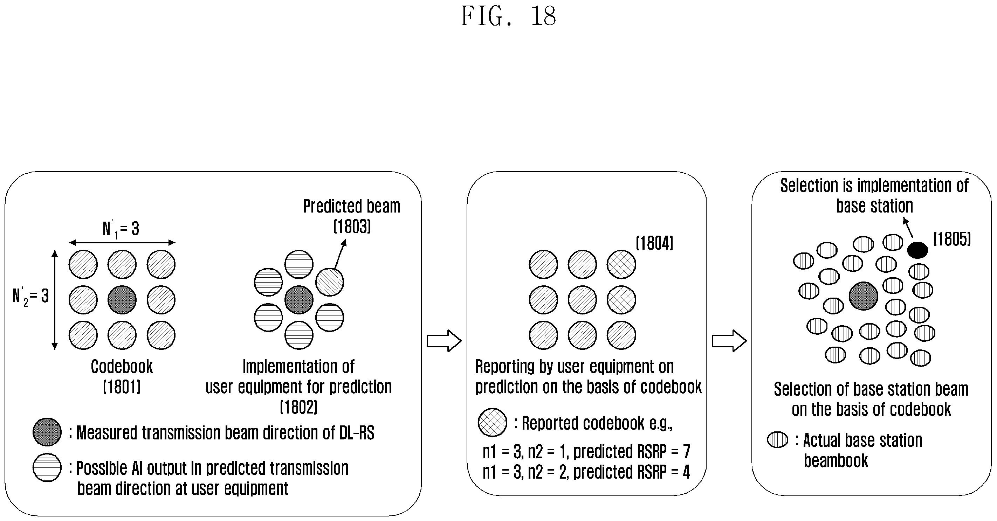

- Method 1: The user equipment may be configured with the transmission beam information of the base station mapped to CSI-RS or SSB through RRC parameters.
- Method 1-1: The user equipment may be configured with the horizontal or vertical direction or the 3 dB beamwidth of the base station's transmission beam for each CSI-RS ID or SSB index for measurement and reporting. As an example, the user equipment may receive the auxiliary information of different transmission beams for each NZP-CSI-RS-ResourceID in the NZP-CSI-RS-Resource configurations. However, this is an example for illustration purposes only and does not limit the scope of the invention. As an example, when the user equipment has learned the predicted beam indices 1, 2, 3, and 4 of the high-performance beam estimation algorithm through AI assuming -45, -15, +15, and +45 degrees, respectively, and the base station is assumed that CSI-RS ID 1, 2, 3, and 4 are mapped to +45, +15, -15, and -45 degrees, respectively, if the index of the beam predicted by the user equipment is 3, the user equipment may report CSI by mapping to CSI-RS ID 2 of the base station on the basis of the NZP-CSI-RS-Resource configuration.
- Method 1-2: The user equipment may receive the difference between the vertical and horizontal directions of the beams in Set A at equal intervals. As an example, the user equipment may receive the same configurations as 0 degree for the vertical difference and -30 degrees for the horizontal difference. However, this is only an example for explanation and does not limit the scope of the present invention. By configuration, when the beam of Set B is configured to one CSI-RS with CSI-ID 1 and the direction of the predicted beam is +30 degrees compared to the measured beam, the user equipment may report CSI-RS ID 0 as the predicted beam.
- Method 2: The user equipment may configure a codebook for a candidate beam in the predicted beam direction compared to the currently measured beam direction. In an embodiment, the user equipment may be configured with $N'_1, N'_2$, and the difference in vertical and horizontal directions between beams may be configured as needed. FIG. 18 is a diagram illustrating an example in which a user equipment receives a codebook for a candidate beam in a predicted beam direction compared to the measured beam direction. In the example of FIG. 18, the user equipment may receive codebook configurations $N'_1 = 3$, $N'_2 = 3$ for explanation purposes, but this does not limit the scope of the present invention. In FIG. 18, the middle • indicates the beam direction of the CSI-RS measured by the user equipment, and ▨ indicates the predicted beam direction to be reported by the user equipment (1801). If the candidate beam (▤) of the beam estimation direction of the user equipment's high-performance beam estimation algorithm and the beam direction of the candidate beam configured in the codebook are different, the user equipment may report CSI using the configured codebook (1802). For example, when the user equipment predicts a beam direction ▧ (1803), the user equipment may report the beam direction estimated by the user equipment as a combination of two ▨ in the configured codebook (1804). The base station may also map to the actual transmission beam direction (•) on the basis of the user equipment's report even if the actual transmission beam design ( ▥ ) and the candidate beam direction in the codebook are different (1805).

The above-mentioned method 1 has the advantage that it is easy to map the direction of the candidate beam of the high-performance beam estimation algorithm of the user equipment and the direction of the actual base station transmission beam by directly configuring the direction of the base station transmission beam to the user equipment. However, informing the user equipment of how to implement the transmission beam at the base station may be limited due to ownership issues. The above-mentioned method 2 has the advantage that there is no restriction due to ownership issues because the user equipment may report the beam direction estimated by the user equipment so that the base station may know it even if the user equipment does not know the transmission beam implementation of the base station. In addition, both Method 1 and Method 2 described above have the advantage of being able to map the direction of the prediction beam reported from the user equipment to the actual transmission beam direction of the base station even if the base station does not know the implementation of the high-performance beam estimation algorithm of the user equipment.

The codebook of Method 2 described above is a codebook for the direction of the analog beam in hybrid beamforming, and the quantity of CSI to be reported may be different from the type I and type II codebooks for measuring and reporting the beam direction of existing digital beamforming. In addition, the direction of the analog beam cannot be measured and reported in hybrid beamforming using CSI measurement and reporting on the basis of the existing type I and type II codebooks. The codebook-based CSI reporting method of Method 2 described above will be described in detail in the third embodiment to be described later.

<Second embodiment: Method for the user equipment to report UE capability for predictable base station transmission beam>

The second embodiment of the present disclosure describes a method of reporting UE capability for a base station transmission beam that the user equipment may predict for the same assumption that the transmission beam of the base station predicted by the user equipment is the same as the actual transmission beam of the base station. Through the UE capability reporting method according to an embodiment of the present disclosure, the user equipment may report the CSI of the beam predicted by the user equipment so that the base station may know it, even if it does not know how to implement the transmission beam of the base station. Specifically, the user equipment may predict the vertical and horizontal directions of the relative base station's transmission beam on the basis of the measured CSI-RS or SSB, and, in this case, which direction can be predicted or how many beams can be predicted may be reported to the base station through UE capability transmission. The user equipment may report the UE capability for a predictable base station transmission beam for various cases to the base station on the basis of one or a combination of two or more of the methods below.

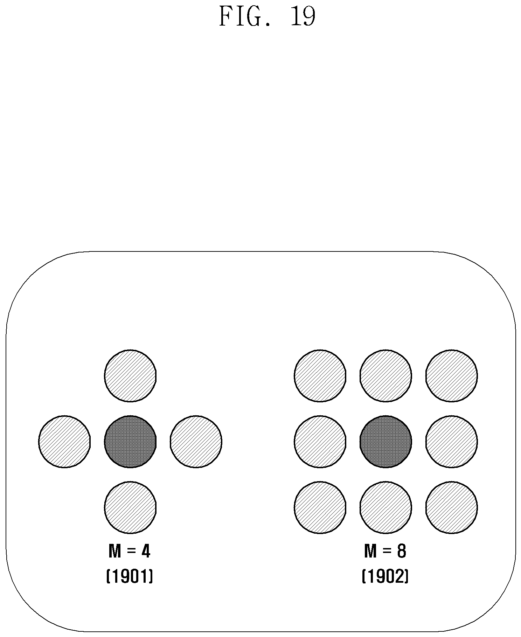

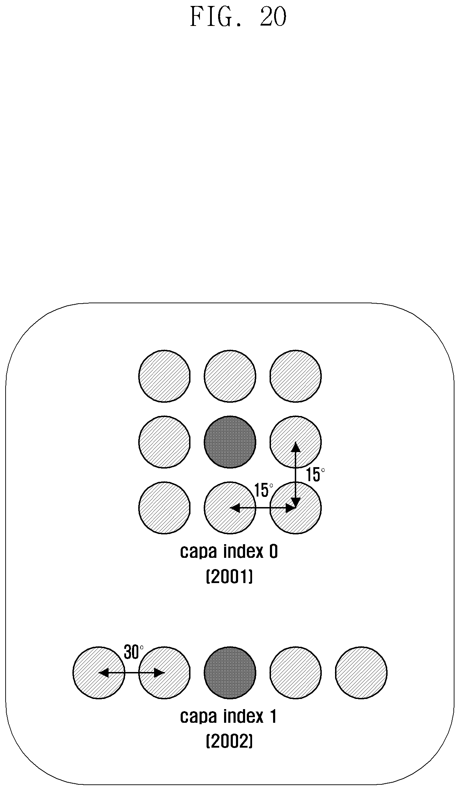

- Method 1: The user equipment may report to the base station the UE capability for the number of predictable transmission beams of the base station compared to the direction of the measured CSI-RS or SSB. FIG. 19 is a diagram illustrating an example of UE capability for a predictable transmission beam of a base station according to an embodiment of the present disclosure. With reference to FIG. 19, the user equipment may report UE capability for the number M of predictable beams around the measured beam. For example, by reporting M = 4, the user equipment may inform the base station that it can predict two left and right beams in the horizontal direction and two left and right beams in the vertical direction on the basis of the direction of the beam measured by the user equipment (1901). As another example, by reporting M = 8, the user equipment may inform the base station that it can predict two left and right beams in the horizontal direction, two left and right beams in the vertical direction, and four beams in the vertical and horizontal diagonal directions on the basis of the direction of the beam measured by the user equipment (1902).
- Method 2: The user equipment may report to the base station the number of transmission beams of the base station that can be predicted relative to the direction of the measured CSI-RS or SSB, and a capability index defined to correspond to the vertical and horizontal beam directions as a UE capability. FIG. 20 is a diagram illustrating another example of UE capability for a predictable transmission beam of a base station according to an embodiment of the present disclosure. With reference to FIG. 20, the user equipment may report to the base station the capability index information defined to indicate the number and direction of predictable beams around the measured beam as a UE capability. For example, by reporting "capa index" = 0, the user equipment may inform the base station that the user equipment can predict eight neighboring beams at 15 degrees in the vertical and horizontal directions (2001). As another example, by reporting "capa index" = 1, the user equipment may inform the base station that the user equipment can predict four neighboring beams at 30 degrees in the horizontal direction (2002).

Method 1 described above has the advantage of simplifying the definition of UE capability reporting by allowing the user equipment to report to the base station the number of predictable base station transmission beams, but may be constrained by the need to standardize the vertical and horizontal orientation of the predictable beams. Method 2 of the second embodiment described above has the advantage of allowing UE capability to be reported in a wider variety of ways compared to method 1 for a user equipment's predictable base station transmission beams, but may complicate the definition of capability reporting. Methods 1 and method 2 of the second embodiment described above, similar to Method 2 of the first embodiment described above, allow the user equipment to report CSI in the direction of the predicted beams defined by its own implementation, even if the user equipment's actual implementation of the number and direction of the predictable base station transmission beams differs from the number and direction of the predictable base station transmission beams defined in the UE capability report. In addition, similar to method 2 of the first embodiment described above, even if the direction of the predicted beam reported by the user equipment is different from the actual beam direction of the base station, the base station may map the direction of the reported beam to the actual transmission beam direction through its own mapping implementation.

<Third embodiment: Predictive beam CSI reporting method>

Through the first or second embodiment described above, the user equipment may receive instructions for the transmission beam of Set B from the base station, select or predict the transmission beam of Set A using a high-performance beam estimation algorithm, and report CSI. Therefore, the base station may effectively indicate the optimal transmission beam to the user equipment by utilizing the reported CSI. The CSI for the optimal beam in the future time may include the predicted beam direction, predicted RSRP, predicted SINR, applicable time of the predicted CSI, etc., depending on how the high-performance beam estimation algorithm is implemented. Therefore, it is necessary to support reporting on various CSI measurements as well as 'L1-RSRP' and 'L1-SINR' reporting for existing beam operation. The method of configuring the report quantity for CSI reporting in various methods is explained in detail in 3-1 embodiment, and the reporting method for reporting predicted CSI according to the configured report quantity is explained in detail in 3-2 embodiment.

<3-1 embodiment: Method of configuring report quantity for predictive beam CSI reporting>

The user equipment may receive configurations from the base station as to which CSI to report in order to map the predicted CSI to the UCI for reporting. Previously, it was possible to report the measured L1-RSRP and L1-SINR with 'cri-RSRP', 'ssb-Index-RSRP', 'cri-SINR', 'ssb-Index-SINR', 'cri-RSRP-CapabilityIndex', 'ssb-Index-RSRP-CapabilityIndex', 'cri-SINR-CapabilityIndex', and 'ssb-Index-SINR-CapabilityIndex' configured for beam management. How to configure the report quantity for different ways to report the predicted CSI, such as the predicted beam direction (the beam that is predicted to have the highest L1-RSRP or L1-SINR in Set A), the predicted L1-RSRP and L1-SINR, and the predicted CSI application time, is described in detail below.

- Method 1: A new report quantity for the predicted beam may be defined and configured. For example, the predicted beam direction may be defined as 'PCRI' or 'PSSB-INDEX', the predicted RSRP may be defined as 'PRSRP', the predicted SINR may be defined as 'PSINR', and the applicable time of predicted CSI may be defined as 'PTIME', and they can be reported with L1-RSRP and L1-SINR. 'PCRI', 'PSSB- INDEX', 'PRSRP', 'PSINR', and 'PTIME' defined above are only examples for explanation and do not limit the scope of the present invention. Specifically, the report quantity may be defined as follows.
- peri or pssb-Index: reporting the predicted beam
- pcri-CapabilityIndex or pssb-Index-CapabilityIndex: reporting the predicted beam and the maximum number of SRS ports that can be supported
- pcri-pTime or pssb-Index-pTime: reporting the predicted beam and the applicable time
- pcri-pTime-CapabilityIndex or pssb-Index-pTime-CapabilityIndex: reporting the predicted beam and the applicable time, and reporting the maximum number of SRS ports that can be supported
- pcri-pRSRP or pssb-Index-pRSRP: reporting the predicted beam and the RSRP prediction value of the predicted beam.
- pcri-pSINR or pssb-Index-pSINR: reporting the predicted beam and SINR prediction value of the predicted beam
- pcri-pRSRP-CapabilityIndex or pssb-Index-pRSRP-CapabilityIndex: reporting the predicted beam, the RSRP prediction value of the predicted beam, and the maximum number of SRS ports that can be supported
- pcri-pSINR-CapabilityIndex or pssb-Index-pSINR-CapabilityIndex: reporting the predicted beam, the SINR prediction value of the predicted beam, and the maximum number of SRS ports that can be supported
- cri-p RSRP or pssb-Index-pRSRP: reporting the measured beam and the RSRP prediction value of the measured beam
- cri-pSINR or pssb-Index-pSINR: reporting the measured beam and the predicted SINR value of the measured beam
- cri-pRSRP-CapabilityIndex or pssb-Index-pRSRP-CapabilityIndex: reporting the measured beam, the RSRP prediction value of the measured beam, and the maximum number of SRS ports that can be supported
- cri-pSINR-CapabilityIndex or pssb-Index-pSINR-CapabilityIndex: reporting the measured beam, the SINR predicted value of measured beam, and the maximum number of SRS ports that can be supported
- pcri-pRSRP-p Time or pssb-Index-pRSRP-pTime: reporting the predicted beam, the RSRP prediction value of predicted beam, and the applicable time
- pcri-pSINR-pTime or pssb-Index-pSINR-pTime: reporting the predicted beam, the predicted SINR value of the predicted beam, and the applicable time
- pcri-pRSRP-pTime-CapabilityIndex or pssb-Index-pRSRP-pTime-CapabilityIndex: reporting the predicted beam, the RSRP prediction value of the predicted beam, the applicable time, and the maximum number of SRS ports that can be supported
- pcri-pSINR-pTim e-CapabilityIndex or pssb-Index-pSINR-pTime- CapabilityIndex: reporting the predicted beam, the SINR prediction value of predicted beam, the applicable time, and the maximum number of SRS ports that can be supported

- cri-pRSRP-pTime or ssb-Index-pRSRP-pTime: reporting the measured beam, the RSRP prediction value of the measured beam, and the applicable time
- cri-pSINR-pTime or ssb-Index-pSINR-pTime: reporting the measured beam, the SINR prediction value of the measured beam, and the applicable time
- cri -pRSRP-pTime-CapabilityIndex or ssb-Index-pRSRP-pTime- CapabilityIndex: reporting the measured beam, the RSRP prediction value of the measured beam, the applicable time, and the maximum number of SRS ports that can be supported.
- cri-pSINR-pTime -CapabilityIndex or ssb-Index-pSINR-pTime-CapabilityIndex: reporting the measured beam, the SINR prediction value of the measured beam, the applicable time, and the maximum number of SRS ports that can be supported
- cri-pcri-pRSRP or ssb-Index-pssb-Index-pRSRP: reporting the measured beam, the predicted beam on the basis of the measured beam, and the RSRP prediction value in the predicted beam direction
- cri-pcri-pSINR or ssb-Index-pssb-Index-pSINR: reporting the measured beam, the predicted beam on the basis of the measured beam, and the SINR prediction value in the predicted beam direction
- cri-pcri-pRSRP-CapabilityIndex or ssb-Index-pssb-Index-pRSRP-CapabilityIndex: reporting the measured beam, the predicted beam on the basis of the measured beam, the RSRP prediction value in the predicted beam direction, and the maximum number of SRS ports that can be supported
- cri-peri-pSINR-CapabilityIndex or ssb-Index-pssb-Index-pSINR-CapabilityIndex: reporting the measured beam, the predicted beam on the basis of the measured beam, the SINR prediction value in the predicted beam direction, and the maximum number of SRS ports that can be supported
- cri-pcri-pRSRP- pTime or ssb-Index-pssb-Index-pRSRP-pTime: the measured beam, the predicted beam on the basis of the measured beam, the RSRP prediction value in the predicted beam direction, and the applicable time
- cri-peri-pSINR-pTime or ssb-Index-pssb-Index-pSINR-pTime: the measured beam, the predicted beam on the basis of the measured beam, the SINR prediction value in the predicted beam direction, and the applicable time
- cri-pcri-pRSRP-pTime-CapabilityIndex or ssb-Index-pssb-Index-pRSRP-pTime-CapabilityIndex: reporting the measured beam, the predicted beam on the basis of the measured beam, the RSRP prediction value of the predicted beam direction, the applicable time, and the maximum number of SRS ports that can be supported
- cri-pcri-pSINR-pTime-CapabilityIndex or ssb-Index-pssb-Index-pSINR-pTime-CapabilityIndex: reporting the measured beam, the predicted beam on the basis of the measured beam, the SINR prediction value of the predicted beam direction, the applicable time, and the maximum number of SRS ports that can be supported

Since the L1-RSRP or L1-SINR of the predicted beam must be the predicted value, the user equipment does not expect 'PCRI' or 'PSSB-INDEX' to be configured as the report quantity along with the existing 'RSRP' and 'SINR'. As an example, the user equipment may not expect the report quantities to be configured such as 'pcri-RSRP', 'pssb-Index-RSRP', 'pcri-SINR', 'pssb-Index-SINR', 'pcri-RSRP-CapabilityIndex', 'pssb-Index-RSRP-CapabilityIndex', 'pcri-SINR-CapabilityIndex', 'pssb-Index-SINR-CapabilityIndex', 'pcri-RSRP-pTime', 'pssb-Index-RSRP-pTime', 'pcri-SINR-pTime', 'pssb-Index-SINR -pTime', 'pcri-RSRP-pTime-CapabilityIndex', 'pssb-Index-RSRP-pTime-CapabilityIndex', 'peri-SINR-pTime-CapabilityIndex', 'pssb-Index-SINR-pTime-CapabilityIndex', 'cri -pcri-RSRP', 'ssb-Index-pssb-Index-RSRP', 'cri-pcri-SINR', 'ssb-Index-pssb-Index-SINR', 'cri-pcri-RSRP-CapabilityIndex', 'ssb -Index-pssb-Index-RSRP-CapabilityIndex', 'cri-pcri-SINR-CapabilityIndex', 'ssb-Index-pssb-Index-SINR-CapabilityIndex', 'cri-pcri-RSRP-pTime', 'ssb-Index -pssb-Index-RSRP-pTime', 'cri-pcri-SINR-pTime', 'ssb-Index-pssb-Index-SINR-pTime', 'cri-pcri-RSRP-pTime-CapabilityIndex', 'ssb-Index-pssb-Index-RSRP-pTime-CapabilityIndex', 'cri-pcri-SINR-pTime- CapabilityIndex', and 'ssb-Index-pssb-Index-SINR-pTime-CapabilityIndex'.

Since the applicable time of the predicted CSI must be reported together with the predicted CSI, the user equipment may not expect 'PTIME' to be configured as the report quantity along with the existing report quantity. As an example, the user equipment may not expect the report quantities configured such as 'cri-RSRP-pTime', 'ssb-Index-RSRP -pTime', 'cri-SINR-pTime', 'ssb-Index-SINR-pTime', 'cri-RSRP-pTime-CapabilityIndex', 'ssb-Index-RSRP-pTime-CapabilityIndex', 'cri-SINR-pTime- CapabilityIndex', and 'ssb-Index-SINR-pTime-CapabilityIndex'.

The difference between reporting the RSRP predicted value or SINR predicted value of the measured beam and reporting the RSRP predicted value or SINR predicted value of the predicted beam is that reporting the RSRP predicted value or SINR predicted value of the measured beam does not predict the beam. In other words, when Set A and Set B are different, the beam of Set A may not be predicted and reported, but the base station may predict the beam of Set A on the basis of the predicted RSRP or SINR of Set B or predict the beam of Set B and instruct the user equipment to use the predicted beam.

- Method 2: The user equipment may report the predicted CSI by reinterpreting the existing report quantity through the higher layer configurations. For example, if 'predictedCSI-r19' is configured to 'enable' in the higher layer configurations, the user equipment may reinterpret the existing report quantity as shown below. For example, if 'predictedCSI-r19' is configured to 'enable', the user equipment may reinterpret the existing cri, ssb-Index, cri-CapabilityIndex, and ssb-Index-CapabilityIndex with new definitions, as shown below. Here, 'predictedCSI-r19' is an exemplary designation for illustrative purposes only and does not limit the scope of the invention.

- cri or ssb-Index: reporting the predicted beam
- cri-CapabilityIndex or ssb-Index-CapabilityIndex: reporting the predicted beam and the maximum number of SRS ports that can be supported
- cri-RSRP or ssb-Index-RSRP: reporting the predicted beam and the RSRP prediction value of the predicted beam
- cri-SINR or ssb-Index-SINR: reporting the predicted beam and the SINR prediction value of the predicted beam
- cri-RSRP-CapabilityIndex or ssb-Index-RSRP-CapabilityIndex: reporting the predicted beam, the RSRP prediction value of the predicted beam, and the maximum number of SRS ports that can be supported
- cri-SINR-CapabilityIndex or ssb-Index-RSRP-CapabilityIndex: reporting the predicted beam, the SINR prediction value of predicted beam, and the maximum number of SRS ports that can be supported

The method 1 described above has the advantage of providing greater flexibility in beam management of the base station by reporting the quantity of predicted CSI in various combinations. The method 2 described above has limitations in the beam management flexibility of the base station by reporting only the predicted RSRP of the predicted beam or the predicted SINR of the predicted beam when 'predictedCSI-r19' is configured to 'enable', but it has the advantage of being simple and being able to recycle the beam management algorithm of the existing base station by recycling the existing report quantity. In Method 1 and Method 2 described above, the user equipment may receive the maximum or minimum applicable time or a specific time of the predicted CSI from the base station in advance or report it through UE capability. In addition, the user equipment may be configured by the base station to predict and report a total of F beams, or may report it using UE capability. As an example, in Method 1 described above, when the user equipment receives a specific applicable time for the predicted CSI in advance or reports it as a UE capability, 'PTIME' may not be defined. As another example, in Method 1 described above, if the user equipment receives the maximum or minimum applicable time of the predicted CSI in advance or reports it as UE capability, the user equipment may calculate and report on the basis of the maximum or minimum time preconfigured or reported as UE capability when reporting 'PTIME'.

< 3-2 embodiment: Report quantity reporting method for predictive beam CSI reporting>

According to the report quantity configuration method of 3-1 embodiment described above, the user equipment may report the CSI of the predicted beam. Various methods of predicting beam CSI reporting are described in detail below.

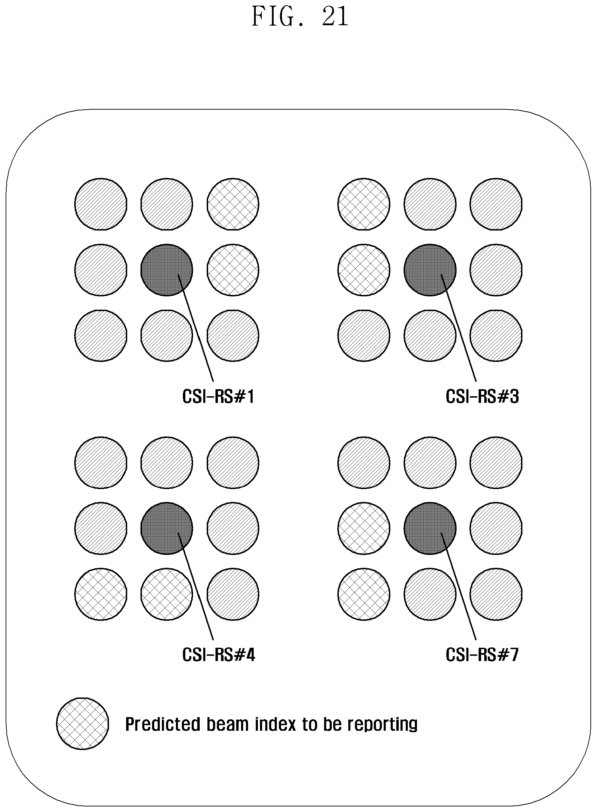

- Method 1: The user equipment may be configured through the higher layer to report the direction of the predicted beam. The CSI reporting method for indicating the predicted beam direction is described in detail below.
- Method 1-1: The user equipment may report the predicted CSI-RS ID or SSB index. Specifically, in Method 1 of the first embodiment, when the user equipment receives the transmission beam information of the base station mapped to the CSI-RS or SSB through the RRC parameter, the user equipment may map the index of the predicted beam to the CSI-RS ID or SSB index and report it.
- Method 1-2: The user equipment may report the index of the codebook according to the codebook configuration for the predictable beam direction configured by the base station. Specifically, in Method 2 of the first embodiment, when the user equipment receives a codebook, the user equipment may map the index of the predicted beam to one or more indexes of the configured codebook and report it.
- Method 1-3: The user equipment may define and report an index for the predictable beam direction defined by UE capability. Specifically, in the second embodiment, when the user equipment reports the UE capability for a predictable base station transmission beam, the user equipment may map the index of the predicted beam to one or more indexes for the direction of each beam defined as UE capability and report it.
- Method 1-4: The direction of the predicted transmission beam may be reported directly. Specifically, the user equipment may quantize and report the direction of the transmission beam, and the quantization level may be predefined or configured through RRC.
- Method 1-5: The user equipment may report by combining the existing CRI or SSB-Index and the index of the predicted beam defined in Method 1-2 or Method 1-3. FIG. 21 is a diagram illustrating an example of a method for reporting the index of a predicted beam on the basis of an existing CRI or SSB-Index according to an embodiment of the present disclosure. As an example, with reference to FIG. 21, when the user equipment attempts to report four CRIs, CSI-RS ID 1, CSI-RS ID 3, CSI-RS ID 4, and CSI-RS ID 7, the predicted beam direction for each CSI-RS may be reported by mapping it to one or more beam indices.
- Method 1-6: The user equipment may report all beams configured in Set B in combination with the index of the predicted beam defined in Method 1-2 or Method 1-3. Specifically, the user equipment may receive the number of indices of the predicted beam direction to be mapped per beam in Set B.

- Method 2: The user equipment may be configured through the higher layer to report the predicted RSRP. The CSI reporting method representing the predicted RSRP is described in detail below.
- Method 2-1: The user equipment may quantize and report only the predicted RSRP.
- Method 2-2: The user equipment may quantize and report both the measured RSRP and the predicted RSRP. In one example, the predicted RSRP may be reported by calculating the difference between the measured RSRP and the predicted RSRP.
- Method 3: The user equipment may be configured through the higher layer to report the predicted SINR. The CSI reporting method representing the predicted SINR is described in detail below.
- Method 3-1: The user equipment may quantize and report only the predicted SINR.
- Method 3-2: The user equipment may quantize and report both the measured SINR and the predicted SINR. In one example, the predicted SINR may be reported by calculating the difference between the measured SINR and the predicted SINR.
- Method 4: The user equipment may be configured through the higher layer to report the applicable time of the predicted CSI. The method of reporting the applicable time of predicted CSI is described in detail below.
- Method 4-1: The user equipment may report X1, X2, ..., XF, assuming the applicable time of the CSI for the predicted F beams is X1, X2, ..., XF slots or symbol times after the most recent CSI-RS or SSB used for CSI measurement.
- Method 4-2: The user equipment may report X1, X2, ..., XF assuming the applicable time of the CSI for the predicted F beams is X1, X2, ..., XF slots or symbol times after the most recent CSI report time used for CSI measurement.
- Method 4-3: The user equipment may report X, or X and F, or X and F and a, or X and a (a<=X), assuming the applicable time of the CSI for the predicted F beams is X-a, 2*X-a, ..., F*X-a slots or symbol times after the most recent CSI-RS or SSB used for CSI measurement. Here, F or a may be configured by the base station or reported by the user equipment as UE capability, and in this case, F or a may not be reported when reporting CSI.
- Method 4-4: The user equipment may report X, or X and F, or X and F and a, or X and a, assuming the applicable time of the CSI for the predicted F beams is X-a, 2*X-a, ..., F*X-a slots or symbol times after the most recent CSI report time used for CSI measurement. Here, F or a may be configured by the base station or reported by the user equipment as UE capability, and in this case, F or a may not be reported when reporting CSI.

The methods 1 to 4 described above may be reported in various combinations depending on the configurations of the 3-1 embodiment. The method 1-1 described above has the limitation that the user equipment must receive the beam implementation information of the base station, but the methods 1-2 to 1-6 described above may report the CSI of the predicted transmission beam even if the user equipment does not know the beam implementation information of the base station. The methods 2-2 and 3-2 described above may operate a beam by combining operation on the basis of RSRP or SINR predicted by base station implementation and channel conditions and operation on the basis of measured RSRP or SINR. The methods 4-1 and 4-2 described above have the advantage of being able to flexibly report the applicable time of the predicted F CSIs, but the methods 4-3 and 4-4 described above have the constraint that all predicted F CSIs must have the same applicable time.

The above-described first to third embodiments of the present disclosure may be implemented in combination with each other. In addition, the above-described first to third embodiments of the present disclosure have been described assuming the beam operation for explanation purposes, but are not limited to the fact that all embodiments and detailed methods of the present invention may be used only for beam operation. For example, when the user equipment attempts to report predicted PMI, i1, or CQI, the third embodiment and its detailed methods described above may be used.

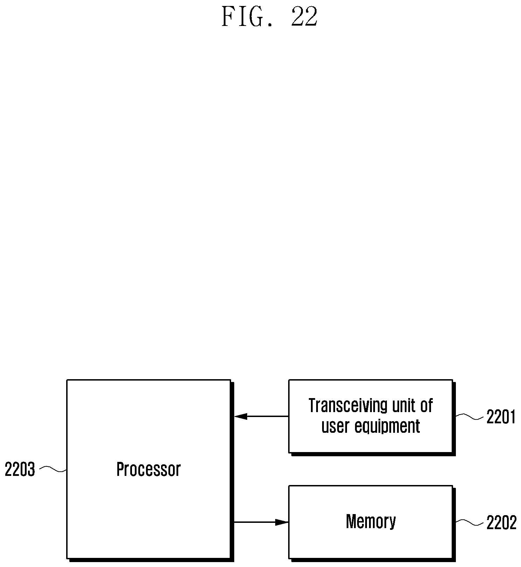

FIG. 22 is a block diagram illustrating the structure of a user equipment according to an embodiment of the present disclosure.

With reference to FIG. 22, the user equipment may include a transceiving unit 2201, a memory 2202, and a processor 2203. However, the components of the user equipment are not limited to the examples described above. For example, the user equipment may include more or fewer components than the aforementioned components. In addition, at least a portion or all of the transceiving unit 2201, memory 2202, and processor 2203 may be implemented in the form of a single chip.

In an embodiment, the transceiving unit 2201 may transmit and receive signals to and from a base station. The above-described signals may include control information and data. To this end, the transceiving unit 2201 may consist of an RF transmitter that upconverts and amplifies the frequency of the transmitted signal, and an RF receiver that amplifies the received signal with low noise and downconverts the frequency. Additionally, the transceiving unit 2201 may receive a signal through a wireless channel and output it to the processor 2203 and transmit the signal output from the processor 2203 through a wireless channel.

In an embodiment, the memory 2202 may store programs and data necessary for operation of the user equipment. Additionally, the memory 2202 may store control information or data included in signals transmitted and received by the user equipment. The memory 2202 may consist of a storage medium such as ROM, RAM, hard disk, CD-ROM, and DVD, or a combination of storage media. Additionally, the memory 2202 may consist of a plurality of memories. According to an embodiment, the memory 2202 may store a program for executing an operation to save power of the user equipment.

In an embodiment, the processor 2203 may control a series of processes in which the user equipment can operate according to the above-described embodiments of the present disclosure. In an embodiment, the processor 2203 may receive information such as configurations for CA, bandwidth part configurations, SRS configurations, and PDCCH configurations from the base station by executing a program stored in the memory 2202, and control the sleep mode cell operation on the basis of the configuration information.

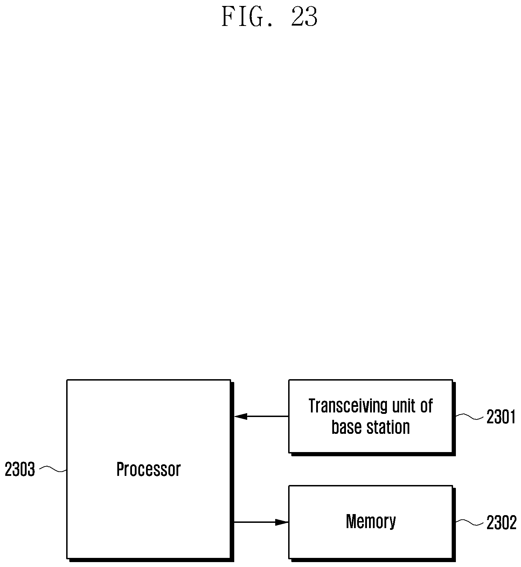

FIG. 23 is a block diagram illustrating the structure of a base station according to an embodiment of the present disclosure.

With reference to FIG. 23, the base station may include a transceiving unit 2301, a memory 2302, and a processor 2303. However, the components of the base station are not limited to the above examples. For example, the user equipment may include more or fewer components than the aforementioned components. In addition, the transceiving unit 2301, memory 2302, and processor 2303 may be implemented in the form of a single chip.

In an embodiment, the transceiving unit 2301 may transmit and receive signals to and from a user equipment. The above-described signals may include control information and data. To this end, the transceiving unit 2301 may consist of an RF transmitter that upconverts and amplifies the frequency of the transmitted signal, and an RF receiver that amplifies the received signal with low noise and downconverts the frequency. Additionally, the transceiving unit 2301 may receive a signal through a wireless channel and output it to the processor 2303, and transmit the signal output from the processor 2303 through a wireless channel.

In an embodiment, the memory 2302 may store programs and data necessary for operation of the user equipment. Additionally, the memory 2302 may store control information or data included in signals transmitted and received by the user equipment. The memory 2302 may consist of a storage medium such as ROM, RAM, hard disk, CD-ROM, and DVD, or a combination of storage media. Additionally, the memory 2302 may consist of a plurality of memories. According to an embodiment, the memory 2302 may store a program for executing an operation to save power of the user equipment.

In an embodiment, the processor 2303 may control a series of processes so that the base station can operate according to the above-described embodiment of the present disclosure. In an embodiment, the processor 2303 may transmit information such as configurations for CA, bandwidth part configurations, SRS configurations, and PDCCH configurations to the user equipment by executing a program stored in the memory 2302, and control the sleep mode cell operation on the basis of the configuration information.

The methods according to embodiments described in the claims or specification of the present disclosure may be implemented in the form of hardware, software, or a combination of hardware and software.

When implemented as software, a computer-readable storage medium or computer program product that stores one or more programs (software modules) may be provided. One or more programs stored in a computer-readable storage medium or computer program product are configured for execution by one or more processors in an electronic device. One or more programs include instructions that cause the electronic device to execute methods according to embodiments described in the claims or specification of the present disclosure.

These programs (software modules, software) may be stored in random access memory (RAM), non-volatile memory including flash memory, read-only memory (ROM), electrically erasable programmable read-only memory (EEPROM), magnetic disc storage devices, compact disc-ROM (CD-ROM), digital versatile discs (DVDs) or other forms of optical storage devices, magnetic cassettes. Alternatively, they may be stored in memory constituted of some or all of these. In addition, each of the constituent memories may include multiple copies.

In addition, the program may be stored on an attachable storage device that is accessible through such a communication network as an Internet, an intranet, a local area network (LAN), a wide area network (WAN), or a storage area network (SAN), or any combination thereof. Such a storage device may be accessible to a device performing embodiments of the present disclosure through an external port. In addition, a separate storage device on a communication network may be accessible to the device performing the embodiments of the present disclosure.

In the specific embodiments of the present disclosure described above, the components included in the present disclosure are expressed in the singular or plural, depending on the specific embodiment presented. However, the singular or plural expression is selected to suit the presented situation for convenience of explanation, and the present disclosure is not limited to singular or plural components, and even components expressed in plural may consist of singular elements or even components expressed in singular may consist of plural elements.

Meanwhile, the embodiments of the present disclosure disclosed in the specification and drawings are merely provided as specific examples to easily explain the technical content of the present disclosure and aid understanding of the present disclosure, and are not intended to limit the scope of the present disclosure. In other words, it is obvious to those skilled in the art that other modifications on the basis of the technical idea of the present disclosure may be implemented. Additionally, each of the above embodiments may be operated in combination with each other as needed. For example, a base station and a user equipment may be operated by combining an embodiment of the present disclosure with parts of another embodiment. Additionally, the embodiments of the present disclosure may be applied to other communication systems, and other modifications on the basis of the technical idea of the embodiments may also be implemented. For example, embodiments may also be applied to LTE systems, 5G or NR systems, etc.

**Claims**

1.  A user equipment in a wireless communication system comprising:

    a transceiving unit; and a control unit configured to:
    transmit, to a base station, UE capability information regarding a predictable beam of the user equipment;
    receive channel state information (CSI) configuration information from the base station;
    receive, from the base station, a reference signal transmitted on the basis of a first transmission beam;
    acquire CSI related to a second transmission beam predicted on the basis of measurements of the reference signal; and
    transmit, to the base station, the CSI related to the second transmission beam.

2.  The user equipment of claim 1, wherein

    the CSI configuration information comprises a codebook configuration indicating a candidate beam in the predicted beam direction compared to the beam measured by the user equipment; and
    the CSI related to the second transmission beam is transmitted on the basis of the codebook configuration.

3.  The user equipment of claim 1, wherein
    the UE capability information comprises information indicating the number of predictable beams of the user equipment, or information indicating an index defined to correspond to one or more predictable beams.

4.  The user equipment of claim 1, wherein

    the CSI configuration information comprises a report quantity defined in relation to the prediction beam; and
    the CSI related to the second transmission beam comprises a report quantity defined in relation to the prediction beam for the second transmission beam.

5.  The user equipment of claim 1, wherein

    the CSI configuration information comprises information instructing to reinterpret the configured report quantity as a report quantity for the prediction beam; and
    when information instructing to reinterpret as the report quantity for the prediction beam is activated, the CSI related to the second transmission beam comprises the configured report quantity for the second transmission beam.

6.  The user equipment of claim 1, wherein
    the CSI related to the second beam comprises at least one of the direction of the second beam, the reference signal received power (RSRP) related to the second beam, the signal-to-noise and interference ratio (SINR) related to the second beam, and the applicable time of CSI related to the second beam.

7.  A base station in a wireless communication system comprising:
    a transceiving unit; and a control unit configured to:

    receive, from the user equipment, UE capability information regarding a predictable beam of the user equipment;
    transmit channel state information (CSI) configuration information to the user equipment;
    transmit, to the user equipment, a reference signal on the basis of the first transmission beam; and
    receive, from the user equipment, the CSI related to a second transmission beam predicted on the basis of measurement of the reference signal.

8.  The base station of claim 7, wherein

the CSI configuration information comprises a codebook configuration indicating a candidate beam in the predicted beam direction compared to the beam measured by the user equipment; and
the CSI related to the second transmission beam is received on the basis of the codebook configuration.

9. The base station of claim 7, wherein
the UE capability information comprises information indicating the number of predictable beams of the user equipment, or information indicating an index defined to correspond to one or more predictable beams.

10. The base station of claim 7, wherein

the CSI configuration information comprises a report quantity defined in relation to the prediction beam; and
the CSI related to the second transmission beam comprises a report quantity defined in relation to the prediction beam for the second transmission beam.

11. The base station of claim 7, wherein

the CSI configuration information comprises information instructing to reinterpret the configured report quantity as a report quantity for the prediction beam; and
when the configured report quantity as the report quantity for the prediction beam is activated, the CSI related to the second transmission beam comprises the configured report quantity for the second transmission beam.

12. The base station of claim 7, wherein
the CSI related to the second beam comprises at least one of the direction of the second beam, the reference signal received power (RSRP) related to the second beam, the signal-to- noise and interference ratio (SINR) related to the second beam, and the applicable time of CSI related to the second beam.

13. A method performed by a user equipment in a wireless communication system, the method comprising:

transmitting, to a base station, UE capability information regarding a predictable beam of the user equipment;
receiving channel state information (CSI) configuration information from the base station;
receiving, from the base station, a reference signal transmitted on the basis of a first transmission beam;
acquiring CSI related to a second transmission beam predicted on the basis of measurement of the reference signal; and
transmitting, to the base station, the CSI related to the second transmission beam.

14. A method performed by a base station in a wireless communication system, the method comprising:

receiving, from the user equipment, UE capability information regarding a predictable beam of the user equipment;
transmitting channel state information (CSI) configuration information to the user equipment;
transmitting, to the user equipment, a reference signal on the basis of a first transmission beam; and
receiving, from the user equipment, the CSI related to a second transmission beam predicted on the basis of measurement of the reference signal.

# FIG. 1

One subframe (110)

$N_{symb}^{subframe,\mu}$ OFDM symbol

1 OFDM symbols (102)

1 Subcarrier (103)

$k = N_{RB,x}^{max,\mu} N_{sc}^{RB} - 1$

$N_{RB}^{\mu} N_{sc}^{RB}$ Subcarrier

Resource block $N_{sc}^{RB}$ Subcarrier (104)

Resource element (k,l) (101)

Frequency

Time

$\bar{l}=0$

$\bar{l}=14 \cdot 2^{\mu} - 1$

$k = 0$

# FIG. 2

EP 4 535 683 A1

# FIG. 3

BWP#1
(301)

BWP#2
(302)

User equipment bandwidth
(300)

Frequency

# FIG. 4

Length (404)

Frequency resource (403)

User equipment bandwidth part (410)

slot (420)

Frequency

Time

⬚ Control resource set #1 (401)

⬚ Control resource set #2 (402)

FIG. 5

# FIG. 6

Slot (601)
Symbol (602)

Periodicity (603)

1. Cell-specific semi-static UL/DL configuration (SIB) (610)

2. UE-specific semi-static UL/DL configuration (dedicated RRC) (620)

# Consecutive downlink slot number (611)

# Consecutive downlink symbol number (612)

# Consecutive uplink slot number (614)

# Consecutive uplink slot number (613)

Slot (621)
Slot (622)

3. UE-group static UL/DL configuration (DCI format 2_0) (630)

# Consecutive downlink symbol number (623)

# Consecutive uplink symbol number (624)

# Consecutive downlink symbol number (625)

# Consecutive uplink symbol number (626)

Slot format indicator (631)

Slot format indicator (632)

: Downlink resource (604)

: Flexible resource (605)

: Uplink resource (606)

EP 4 535 683 A1

FIG. 7

TCI state #0
(700)

TCI state #1
(705)

TCI state #2
(710)

# FIG. 8

RRC configured TCI states (800)

| TCI #0 (805) | TCI #1 (810) | TCI #2 (815) | . . . | TCI #N (820) |

A list of TCI states for a CORESET (825)

| TCI #a (830) | TCI #b (835) | . . . | TCI #n (840) |

TCI indication via MAC CE
(845)

FIG. 9

| Serving Cell ID (915) | CORESET ID (920) | Oct 1 (900) |
|---|---|---|
| CORESET ID | TCI state ID (925) | Oct 2 (905) |

FIG. 10

Search space #1
(1010)

Search space #2
(1015)

Search space #3
(1020)

CORESET #1
(1000)

TCI state #1
(beam #1) (1005)

Time

FIG. 11

1100
BWP#1
(Active)
on Cell#1

CSS#1

CSS#2

USS#1

CORESET#1
(Ref: CSI-RS#1/Cell#1/BWP#1
with QCL-TypeD)  1115

1105
BWP#1
(Active)
on Cell#2

CSS#1

USS#2

USS#2

CORESET#1
(Ref: CSI-RS#1/Cell#1/BWP#1
with QCL-TypeD)  1120

CORESET#2
(Ref: CSI-RS#1/Cell#2/BWP#1
with QCL-TypeD)  1125

PDCCH monitoring interval  1110

1130
Active
BWP on
Cell#1

USS#1

USS#2

USS#3

CORESET#1
(Ref: CSI-RS#1/Cell#1/BWP#1
with QCL-TypeD)  1145

CORESET#2
(Ref: CSI-RS#1/Cell#1/BWP#1
with QCL-TypeD)  1150

1135
Active
BWP on
Cell#2

USS#1

USS#2

USS#3

CORESET#1
(Ref: CSI-RS#1/Cell#2/BWP#1
with QCL-TypeD)  1155

CORESET#2
(Ref: CSI-RS#2/Cell#2/BWP#1
with QCL-TypeD)  1160

PDCCH monitoring interval  1140

EP 4 535 683 A1

# FIG. 12

12-15

| RA type 0 [12-00] | Bitmap |
|---|---|

| RA type 1 [12-05] | Starting VRB | Length |
|---|---|---|

12-20         12-25

| Both RA type 0 & 1 [12-10] | 1 bit for RA type indication | Max{payload for RA type 0, payload for RA type 1} |
|---|---|---|

12-30         12-35

# FIG. 13

RRC configured TCI states

13-00

| TCI #0 | TCI #1 | TCI #2 | TCI #3 | ⋯ | TCI #M-1 |

MAC-CE activated TCI states for PDSCH

13-20

| TCI #0' | TCI #1' | TCI #2' | ⋯ | TCI #K-1 |

MAC CE based beam indication

TCI state for PDSCH

13-40

| TCI #I |

DCI based beam selection

MAC-CE structure

| CORESET Pool ID | Serving Cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{13}$ | $T_{14}$ | $T_{13}$ | $T_{12}$ | $T_{11}$ | $T_{10}$ | $T_9$ | $T_8$ | Oct 3 |

13-55

13-50

...

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ | Oct N |

# FIG. 14

EP 4 535 683 A1

# FIG. 15

FIG. 16

# FIG. 17

**Exemplary scenario (1701)**

QCL type D RS for
CSI-RS#1~4 : SSb#1

Assumption
- N CSI-RSs are used for
beam management

UE from t1 to t3

UE at t4

UE at t5

SSB#1

RSRP $(t_1)$
+[Auxiliary information info.]

RSRP $(t_2)$
+[Auxiliary information info.]

RSRP $(t_K)$
+[Auxiliary information info.]

(1703)
beam predictor

Future beam information
$[t_{k+1}, t_{k+2}, \cdots, t_{k+F}]$

N CSI-RSs in Set B :
QCL-type D RS = CSI-RS#1 (N=1)

N CSI-RSs in Set B :
QCL-type D RS = CSI-RS#1 (N=1)

N CSI-RSs in Set B :
QCL-type D RS = CSI-RS#1 (N=1)

t4/t5/... Being used for beam prediction

**Base station instructing change of
QCL-type D RS on the basis of user equipment's reporting**

N CSI-RSs in Set B :
QCL-type D RS = CSI-RS#2 (N=1)

N CSI-RSs in Set B :
QCL-type D RS = CSI-RS#3 (N=1)

Reporting future
beam information

(1702)

Time offset (P)

Time offset (P)

L1-RSRP measured
fromCSI-RS in Set B
(t1=t-2P)

L1-RSRP measured
fromCSI-RS in Set B
(t2=t-P)

L1-RSRP measured
fromCSI-RS in Set B
(t3=t) (K=3)

PDCCH/PDSCH/CSI-RS

PDCCH/PDSCH/CSI-RS

...

t4

t5

t6    Time

EP 4 535 683 A1

FIG. 18

Codebook
(1801)

$N'_1 = 3$

$N'_2 = 3$

Predicted beam
(1803)

Implementation of
user equipment for prediction
(1802)

⬤ : Measured transmission beam direction of DL-RS

⊖ : Possible AI output in predicted transmission
    beam direction at user equipment

(1804)

Reporting by user equipment on
prediction on the basis of codebook

⊗ : Reported codebook e.g.,

n1 = 3, n2 = 1, predicted RSRP = 7
n1 = 3, n2 = 2, predicted RSRP = 4

Selection is implementation of
base station

(1805)

Selection of base station beam
on the basis of codebook

⬗ : Actual base station
    beambook

EP 4 535 683 A1

FIG. 19

M = 4
[1901]

M = 8
[1902]

FIG. 20

capa index 0
(2001)

capa index 1
(2002)

# FIG. 21

CSI-RS#1

CSI-RS#3

CSI-RS#4

CSI-RS#7

Predicted beam index to be reporting

FIG. 22

2203 ~ Processor

Transceiving unit of
user equipment ~ 2201

Memory ~ 2202

# FIG. 23

| | |
|---|---|
| 2303 — Processor | Transceiving unit of base station — 2301 |
| | Memory — 2302 |

## INTERNATIONAL SEARCH REPORT

| International application No. |
|---|
| **PCT/KR2023/009191** |

### A. CLASSIFICATION OF SUBJECT MATTER

**H04B 7/06**(2006.01)i; **H04B 7/0408**(2017.01)i; **H04B 17/373**(2015.01)i; **H04W 8/24**(2009.01)i; **H04W 72/23**(2023.01)i; **H04L 5/00**(2006.01)i

According to International Patent Classification (IPC) or to both national classification and IPC

### B. FIELDS SEARCHED

Minimum documentation searched (classification system followed by classification symbols)

H04B 7/06(2006.01); G06N 20/00(2019.01); H04W 24/10(2009.01); H04W 36/32(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 예측(prediction), 송신 빔(transmission beam), 능력 정보(capability information), CSI 설정 정보(channel state information configuration information)

### C. DOCUMENTS CONSIDERED TO BE RELEVANT

| Category* | Citation of document, with indication, where appropriate, of the relevant passages | Relevant to claim No. |
|---|---|---|
| Y | CMCC. Discussion on other aspects on AIML for beam management. R1-2204298, 3GPP TSG RAN WG1 #109-e, e-Meeting. 29 April 2022.<br>See section 2.2.2. | 1-14 |
| Y | WO 2021-118418 A1 (TELEFONAKTIEBOLAGET LM ERICSSON (PUBL) et al.) 17 June 2021 (2021-06-17)<br>See page 23, lines 7-17; page 27, lines 1-14 and page 29, lines 17-20. | 1-14 |
| Y | QUALCOMM INCORPORATED. Evaluation on AI/ML for beam management. R1-2205026, 3GPP TSG RAN WG1 #109-e, e-Meeting. 29 April 2022.<br>See section 3. | 2,8 |
| A | SAMSUNG. Evaluation on AI/ML for beam management. R1-2203899, 3GPP TSG RAN WG1 #109-e, e-Meeting. 29 April 2022.<br>See sections 1.1-3.1. | 1-14 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 September 2023** | **26 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/009191**

**C.    DOCUMENTS CONSIDERED TO BE RELEVANT**

| Category* | Citation of document, with indication, where appropriate, of the relevant passages | Relevant to claim No. |
|---|---|---|
| A | US 2020-0186227 A1 (TELEFONAKTIEBOLAGET LM ERICSSON (PUBL)) 11 June 2020 (2020-06-11)<br>See paragraphs [0048]-[0118]; and figures 1-10. | 1-14 |

Form PCT/ISA/210 (second sheet) (July 2022)

**INTERNATIONAL SEARCH REPORT**
Information on patent family members

International application No.

**PCT/KR2023/009191**

| Patent document cited in search report | | | Publication date (day/month/year) | Patent family member(s) | | | Publication date (day/month/year) |
|---|---|---|---|---|---|---|---|
| WO | 2021-118418 | A1 | 17 June 2021 | AR | 120702 | A1 | 09 March 2022 |
| | | | | BR | 112021000527 | A2 | 21 June 2022 |
| | | | | EP | 4074097 | A1 | 19 October 2022 |
| | | | | EP | 4074097 | A4 | 28 December 2022 |
| | | | | US | 2023-0025432 | A1 | 26 January 2023 |
| US | 2020-0186227 | A1 | 11 June 2020 | EP | 3665787 | A1 | 17 June 2020 |
| | | | | EP | 3665787 | B1 | 20 October 2021 |
| | | | | US | 10944465 | B2 | 09 March 2021 |
| | | | | WO | 2019-029802 | A1 | 14 February 2019 |

Form PCT/ISA/210 (patent family annex) (July 2022)